# EUROPEAN PATENT APPLICATION

(11) **EP 1 593 432 A2**
(43) Date of publication of application: **09.11.2005**
(21) Application number: 05075869.7
(22) Date of filing: 13.10.1999
(51) Int. Cl.: B01J 31/24, B01J 31/16

(54) **Polymer-supported phosphorus ligands for catalysis**

(30) Priority: 13.10.1998 US 103946 P
(62) Divisional of application: 99954804.3
(71) Applicant: E.I. DU PONT DE NEMOURS AND COMPANY, Wilmington, DE 19898 (US)
(72) Inventor: Fagan, Paul, Wilmington, DE 19803 (US); Li, George, Wilmington, DE 19809 (US)
(74) Representative: Cockerton, Bruce Roger

(57) **Abstract**

Processes for the production of phosphine compounds are provided.

## Description

### FIELD OF INVENTION

This invention relates to the preparation of novel polymer-supported phosphine and phosphine oxide compounds and the corresponding free compounds after cleavage from support. These compounds are useful as ligands in the preparation of metal-containing catalysts.

### BACKGROUND

As is generally known in prior art, chelating phosphine compounds when bound to metal atoms are useful as catalysts. To facilitate separation of the catalysts from a chemical process, phosphorus ligands have been attached to solid supports such as polymers ("Supported Metal Complexes", D. Reidel Publishing, 1985; Acta. Polymer. 1996, 47, 1; *"Chem. Met.-Carbon Bond",* Hartley, F. R (Ed), 1987, vol. 4, pp. 1163-1225; Neckers, *J. Macromol. Sci., Chem.* 1987, *A24,* 431-48). Interest in using the combinatorial "split and mix synthesis" approach to generate polymer-bound ligands which could be tested as catalysts has brought to fore the importance of new chemistry with which to attach phosphine ligands to polymer supports (Balkenhohl et al., *Angew. Chem., Int. Ed. Engl.* 1996*, 35,* 2288-2337; Gilbertson et al., *J Organometallics* 1996, 15, 4678-4680; Gilbertson et al., *J. Am. Chem. Soc.* 1994,*116*, 4481-4482).

Novel processes have been discovered to prepare new compositions of matter that contain chelating phosphine compounds, including compounds of asymmetric diphosphines. Phosphine compounds have been shown to be useful when combined with transition metals as catalysts for chemical processes. The processes can also be utilized in a combinatorial scheme to produce libraries of phosphine compounds.

Addition of aldehyde in salicylaldehydes to acetylenes is known, but is unknown for addition to alkenes. (Kokai Tokkyo Koho JP 7853632; JP 76128205 Kokubo et al., *J. Org. Chem.* 1997, *62*, 4564-4565.) The new phosphorus compounds have been shown to be useful as ligands in catalysts for the decarbonylation of the salicylaldehyde and insertion of the alkene, followed by ring closure forming a coumarin.

### SUMMARY OF THE INVENTION

This invention is directed to compositions and processes to prepare polymer supported phosphine and phosphine oxide compounds and the corresponding free compounds after their cleavage from the polymer support.

More specifically, the invention is directed to a process to prepare a supported phosphine compound selected from the group consisting of Formulae 1, 2, 3, 4, 5, 6, and 7 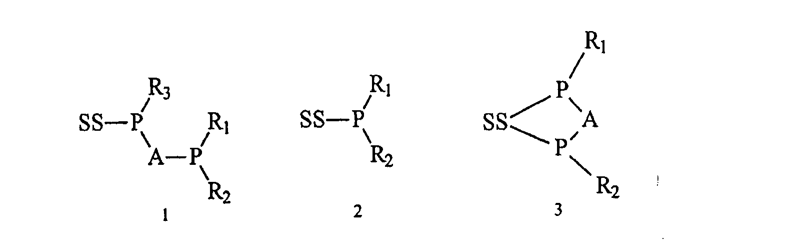 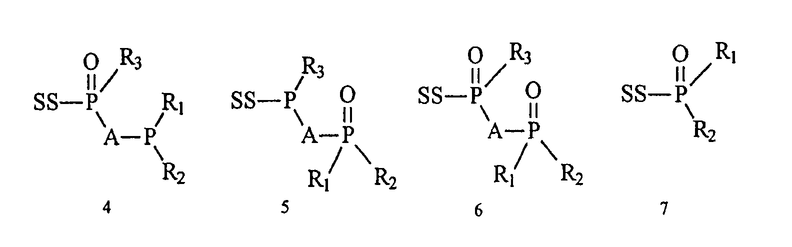 wherein:
SS is a solid support; A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring, the process comprising the steps of:
   a) contacting (i) a phosphine selected from the group consisting of XPR₁R₂, XR₃P-A-PR₁R₂, HP(=O)R₁R₂, HP(=O) R₃-A-PR₁R₂, and HP(=O)R₃-A-P(=O)R₁R₂ wherein X is a halogen, with (ii) the solid support, resulting in at least one P in the phosphine attached indirectly or directly to the solid support via one or more covalent bonds, and
   b) optionally replacing one or more substituent of the group R₁, R₂, or R₃ with any other substituent of the group R₁, R₂, or R₃.

In all process and compositions embodiments of the invention, the preferred SS is selected from the group consisting of polyolefins, polyacrylates, polymethacrylates, and copolymers thereof.

The process is useful in producing the preferred supported phosphine compounds selected from the group consisting of Formulae 1A, 2A, 3A, 4A, 5A, 6A, and 7A. 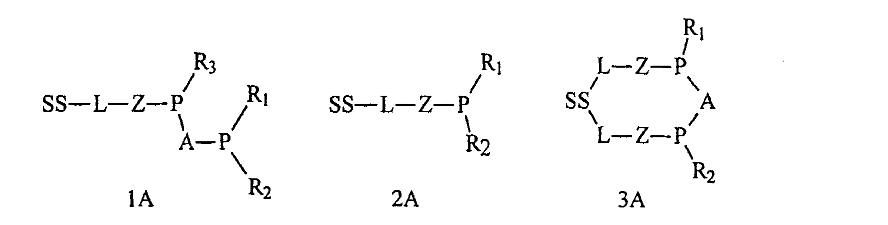 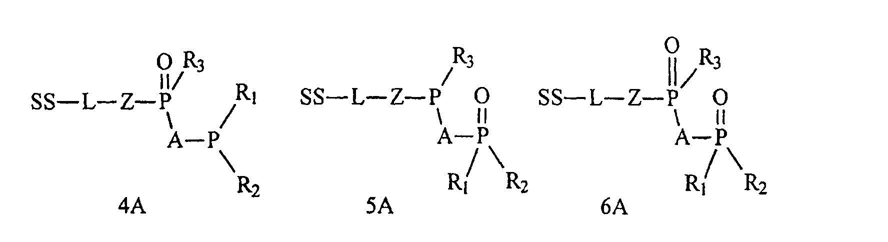 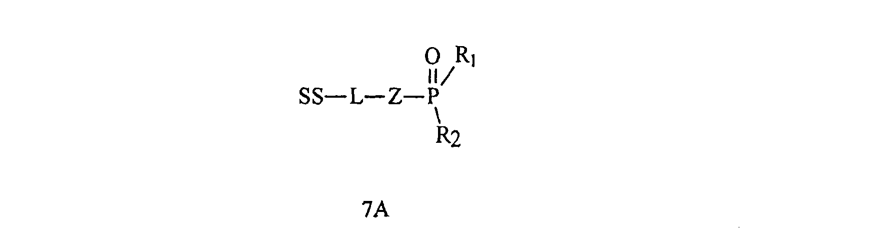 wherein:
Z is a divalent attaching group covalently attached to at least one P in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and
L is a divalent linking group covalently attached to Z and to SS, selected from the group consisting of optionally-substituted chains of from 1 to 12 linear, branched, and cyclic carbon atoms.

More particularly, this process to prepare supported phosphine compounds uses the supported phosphine compound of Formula 1A, where the process comprises the steps of:
a) contacting (i) at least 2 molar equivalents of a phosphine of the Formula XR₃P-A-PR₁R₂ wherein X is a halogen, with (ii) no more than one molar equivalent of Z, resulting in one P in the phosphine being covalently bonded to the Z, and
b) optionally replacing one or more substitutent of the group R₁, R₂, and R₃ with any one or more of R₁, R₂, and R₃. In this process the SS is more preferably polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the process may use a supported phosphine compound of Formula 2A, with the process comprising the steps of:
a) contacting (i) a phosphine of the Formula PR₁R₂X wherein X is a halogen, with (ii) the solid support, resulting in one P in the phosphine being covalently bonded to Z, and
b) optionally replacing one or both of R₁ and R₂ with any other R₁ or R₂. In this process the SS is more preferably polystyrene; is -CH₂-; Z is selected from the group consisting of optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; and R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic or alkyl ring.

Alternatively, this process may use the supported phosphine compound of Formula 3A, with the process comprising the steps of:
a) contacting (i) no more than one molar equivalent of a phosphine of the Formula XR₃P-A-PR₁R₂ wherein X is a halogen, with (ii) at least two molar equivalents of Z, resulting in both of the P in the phosphine being covalently bonded to the Z; and
b) optionally replacing one or more of R₁ and R₂ with any one or more of R₁ and R₂. In this process the SS is more preferably polystyrene; L is - CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, this process may use the supported phosphine compound of Formula 4A, with the process comprising the steps of:
a) contacting (i) a phosphine of the Formula HP(=O) R₃-A-PR₁R₂ with (ii) the solid support, resulting in one P in the phosphine being covalently bonded to Z; and
b) optionally replacing one or more of R₁, R₂, and R₃ with any one or more of R₁, R₂, and R₃. In this process the SS is more preferably polystyrene; L is -CH₂-; Z is selected from the group consisting of optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, this process may use the supported phosphine compound of Formula 5A with the process comprising the steps of:
a) contacting (i) a phosphine of the Formula HP(=O)R₁R₂ with (ii) a solid support of the formula 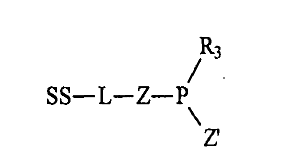 wherein the P in the solid support is covalently bonded to Z and Z' is selected from the group consisting of alkenyls, resulting in the P in the phosphine being covalently bonded to the P in the solid support via Z'; and
b) optionally replacing one or more of R₁, R₂, and R₃ with any one or more of R₁, R₂, and R₃. In this process the SS more preferably is polystyrene; L is -CH₂-; Z is selected from the group consisting of optionally-substituted carbon chain of 1-10 carbon atoms, -(NR₄)-, and -O-; A is selected from the group consisting of an optionally-substituted carbon chain of 1-3 carbon atoms and an optionally-substituted carbon ring of 6-12 carbon atoms; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.

This invention is also directed to a process to prepare a combinatorial library of supported phosphine compounds selected from the group consisting of Formulae 1, 2, 3, 4, 5, 6, and 7 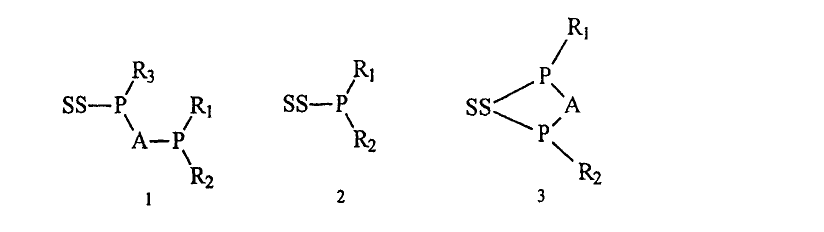 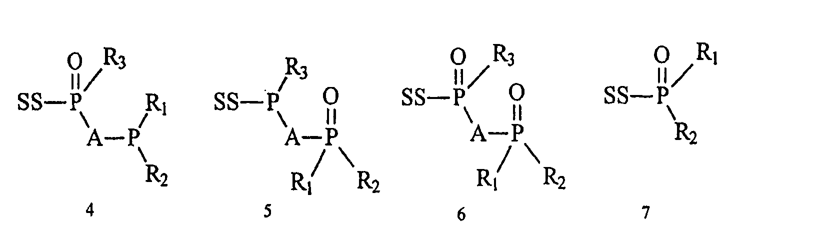 wherein:
SS is a solid support;
A is a divalent group of 1-12 aliphatic or aromatic carbon atoms, linear or branched, optionally containing one or more heteroatoms or organometallic groups;
R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
R₂ and R₃ together, R₁ and R₃ together, or R₁ and R₂ together can optionally form a ring, the process comprising the steps of:
   a) contacting (i) one or more phosphines selected from the group consisting of XPR₁R₂, XR₃P-A-PR₁R₂, HP(=O)R₁R₂, HP(=O) R₃-A-PR₁R₂, and HP(=O)R₃-A-P(=O)R₁R₂ wherein X is a halogen, with (ii) one or more solid supports, resulting in at least one P in each phosphine attached indirectly or directly to the solid support via one or more covalent bonds, and
   b) optionally replacing one or more R₁, R₂, or R₃ with any other R₁, R₂, or R₃.

The process is useful in producing a combinatorial library in which the preferred supported phosphine compounds are selected from the group consisting of Formulae 1A, 2A, 3A, 4A, 5A, 6A, and 7A 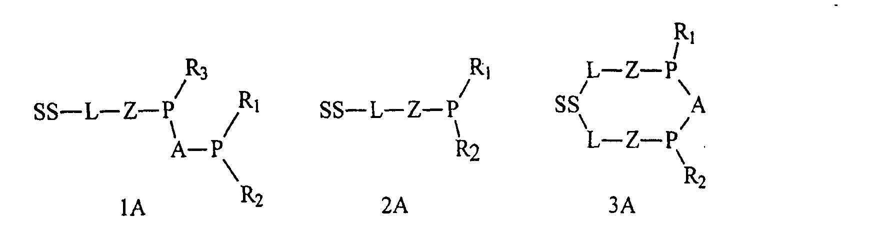 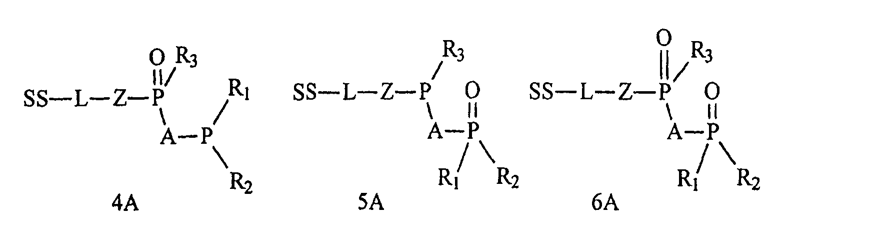 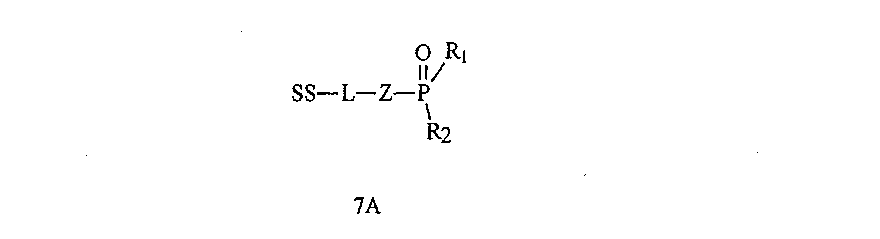 wherein:
Z is a divalent attaching group covalently attached to at least one P in the phosphine, selected from the group consisting of hydrocarbylene, substituted hydrocarbylene, -O-, -S-, and NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.

More preferably, this process to prepare a combinatorial library of supported phosphine compounds uses Formula 1A with the process comprising the steps of:
a) contacting at least 2 molar equivalents of one or more phosphines of the Formula XR₃P-A-PR₁R₂ wherein X is a halogen, with no more than one molar equivalent of one or more of Z, resulting in one P in each phosphine being covalently bonded to the Z; and
b) optionally replacing one or more of R₁, R₂, and R₃ with any one or more of R₁, R₂, and R₃. In this process the SS more preferably is polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the process may use the supported phosphine compounds of Formula 2A with the process comprising the steps of:
a) contacting one or more phosphines of the Formula PR₁R₂X
   wherein X is a halogen, with one or more solid supports, resulting in one P in each phosphine being covalently bonded to Z; and
b) optionally replacing one or both of R₁ and R₂ with any other R₁ or R₂. In this process the SS more preferably is polystyrene; L is -CH₂-; Z is selected from the group consisting of optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; and R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic, or alkyl ring.

Alternatively, the process may use the supported phosphine compounds of Formula 3A with the process comprising the steps of:
a) contacting no more than one molar equivalent of one or more phosphines of the Formula XR₃P-A-PR₁R₂ wherein X is a halogen, with at least two molar equivalents of one or more of Z, resulting in both of the P in each phosphine being covalently bonded to the Z; and
b) optionally replacing one or more of R₁ and R₂ with any one or more of R₁ and R₂. In this process SS is more preferably polystyrene; L is - CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl or alkyl ring.

Alternatively, the process may use the supported phosphine compounds of Formula 4A with the process comprising the steps of:
a) contacting one or more phosphines of the Formula HP(=O) R₃-A-PR₁R₂ with one or more solid supports, resulting in one P in each phosphine being covalently bonded to Z; and
b) optionally replacing one or more of R₁, R₂, and R₃ with any one or more of R₁, R₂, and R₃. In this process the SS is more preferably polystyrene; L is -CH₂-; Z is selected from the group consisting of optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the process may use the supported phosphine compounds of Formula 5A with the process comprising the steps of:
a) contacting one or more phosphines of the Formula HP(=O)R₁R₂ with one or more solid supports of the formula 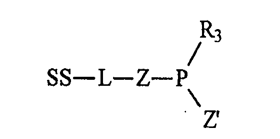 wherein the P in the solid support is covalently bonded to Z and Z' is selected from the group consisting of alkenyls, resulting in the phosphorus in each phosphine being covalently bonded to the phosphorus in the solid support via Z', and
b) optionally replacing one or more of R₁, R₂, and R₃ with any one or more of R₁, R₂, and R₃. In this process the SS is more preferably polystyrene; L is -CH₂-; Z is selected from the group consisting of optionally-substituted carbon chain of 1-10 carbon atoms, -(NR₄)-, and -0-; A is selected from the group consisting of an optionally-substituted carbon chain of 1-3 carbon atoms and an optionally-substituted carbon ring of 6-12 carbon atoms; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.

Additionally, the invention is directed at a process to prepare a phosphine compounds of Formulae 8, 9, 10, 11, and 12 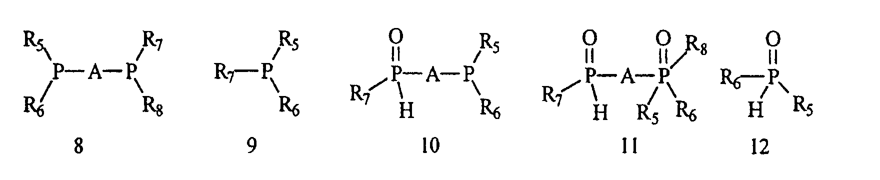 wherein:
A is a divalent group of 1-12 aliphatic or aromatic carbon atoms, linear or branched, optionally containing one or more heteroatoms or organometallic groups;
R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle;
any of R₅, R₆, R₇, and R₈ can optionally together with any other of R₅, R₆, R₇, and R₈ form a ring;
the process comprising the steps of:
   a) contacting (i) a supported phosphine selected from the group consisting of Formulae 1,2,3,4, 5,6, and 7 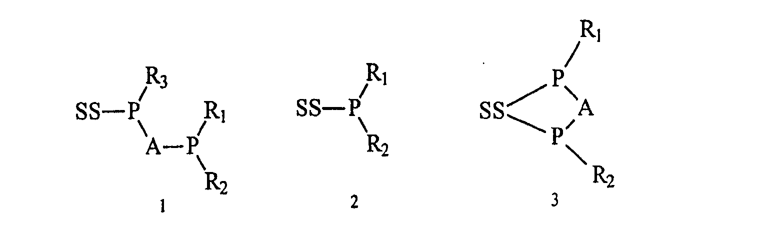 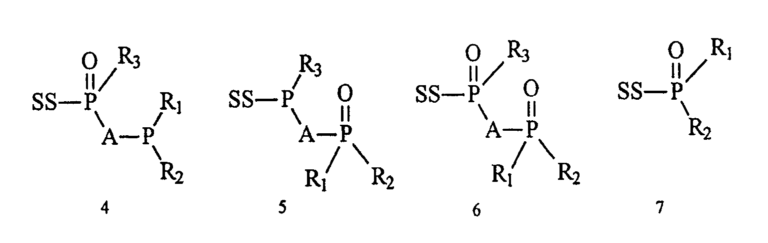 wherein:
      SS is a solid support wherein at least one P in the phosphine is attached indirectly or directly to the solid support via one or more covalent bonds; A is a divalent group of 1-12 aliphatic or aromatic carbon atoms, linear or branched, optionally containing one or more heteroatoms or organometal groups; R₁, R₂ and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring with
         (ii) a compound of the Formula ER₉, wherein E is an electrophilic group and R₉ is selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; thereby forming the corresponding compound of Formulae 1,2,3,4, 5,6, and 7; and
   b) optionally replacing one or more substituent of the group R₅, R₆, R₇, and R₈ with any other substituent of the group R₅, R₆, R₇, and R₈.

More preferably, the process for preparing a phosphine compound uses a supported phosphine selected from the group consisting of Formulae 1A, 2A, 3A, 4A, 5A, 6A, and 7A 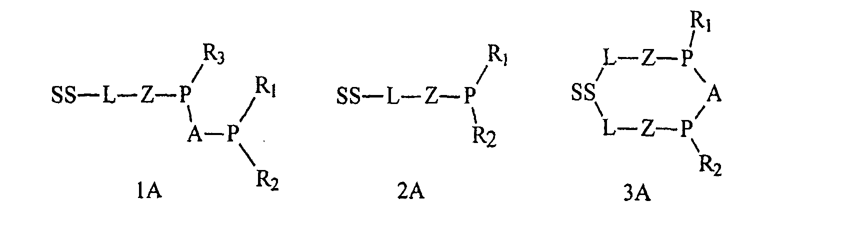 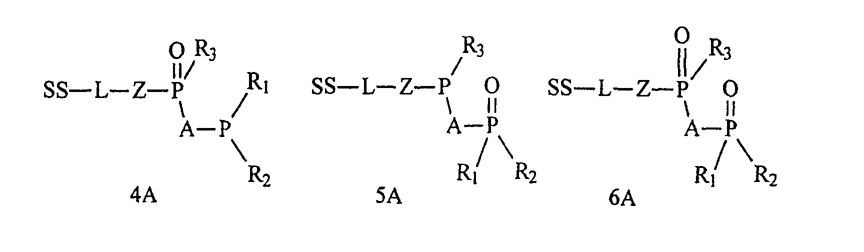 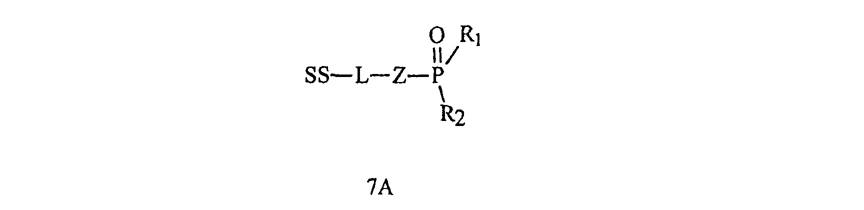 wherein:
Z is a divalent attaching group covalently attached to at least one P in the phosphine, selected from the group consisting of hydrocarbylene, substituted hydrocarbylene, -O-, -S-, and -NR₄-, where R₄ is selected from the group consisting of an optionally-substituted hydrocarbyl and halogen; L is a divalent linking group covalently attached to Z and to SS, selected from the group consisting of optionally-substituted chains of from 1 to 12 linear, branched, and cyclic carbon atoms; A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy; and any of R₅, R₆, R₇, and R₈ can optionally together with any other of R₅, R₆, R₇, and R₈ form a ring. Still more preferably in this process E is selected from the group consisting of hydrogen, PCl₂, and SiMe₃, and R₅ is a halogen.

Also in this process, the supported phosphine compound is selected from the group consisting of Formulae 1 and 3, and the phosphine compound is of Formula 8. Also in this process at least one substitutent of the group R₅, R₆, R₇, and R₈ differs from the other substitutent of the group R₅, R₆, R₇, and R₈.

Also in this process, Z is preferably selected from the group consisting of optionally-substituted carbon chain of 1-10 carbon atoms, -(NR₄)-, and -O-; A is preferably selected from the group consisting of an optionally-substituted carbon chain of 1-3 carbon atoms and an optionally-substituted carbon ring of 6-12 carbon atoms; R₅, R₆, R₇, and R₈ are preferably independently selected from the group consisting of hydrogen, Cl, alkyl, alkenyl, aryl, heterocycle, SQ₁, OQ₂, and PQ₃Q₄, where Q₁, Q₂, Q₃, and Q₄ are preferably independently selected from the group consisting of hydrogen, hydrocarbyl, substituted hydrocarbyl, hydrocarbylamino, alkoxy, aryloxy, and heterocycle; and any substituent of the group R₅, R₆, R₇, and R₈ can optionally together with any other substituent of the group R₅, R₆, R₇, and R₈ form a ring.

Alternatively, the process may use the supported phosphine compound of Formula 2 and the phosphine compound of Formula 9. In this process more preferably Z is selected from the group consisting of optionally-substituted carbon chain of 1-10 carbon atoms, -(NR₄)-, and -O-; A is selected from the group consisting of an optionally-substituted carbon chain of 1-3 carbon atoms and an optionally-substituted carbon ring of 6-12 carbon atoms; R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆, and R₇ form a ring.

Alternatively, the process may use the supported phosphine compound of Formula 4 and the phosphine compound of Formula 10. In this process more preferably Z is selected from the group consisting of optionally-substituted carbon chain of 1-10 carbon atoms, -(NR₄)-, and -0-; A is selected from the group consisting of an optionally-substituted carbon chain of 1-3 carbon atoms and an optionally-substituted carbon ring of 6-12 carbon atoms; R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆, and R₇ form a ring.

Alternatively, the process may use the supported phosphine compound selected from the group consisting of Formulae 3 and 5, and the phosphine compound of Formula 11. In this process more preferably Z is selected from the group consisting of optionally-substituted carbon chain of 1-10 carbon atoms, -(NR₄)-, and -0-; A is selected from the group consisting of an optionally-substituted carbon chain of 1-3 carbon atoms and an optionally-substituted carbon ring of 6-12 carbon atoms; R₆, R₇, and R₈ are independently selected from the group consisting of Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₆, R₇, and R₈ can optionally together with any other substituent of the group R₆, R₇, and R₈ form a ring.

Alternatively, the process may use the supported phosphine compound of Formula 2 and the phosphine compound of Formula 12. I this process more preferably Z is selected from the group consisting of optionally-substituted carbon chain of 1-10 carbon atoms, -(NR₄)-, and -0-; A is selected from the group consisting of an optionally-substituted carbon chain of 1-3 carbon atoms and an optionally-substituted carbon ring of 6-12 carbon atoms; R₅ and R₆ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅ and R₆ can optionally together with any other substituent of the group R₅ and R₆ form a ring.

This invention is still further directed to a process to prepare a combinatorial library of phosphine compounds selected from the group consisting of Formulae 8, 9, 10, 11, and 12 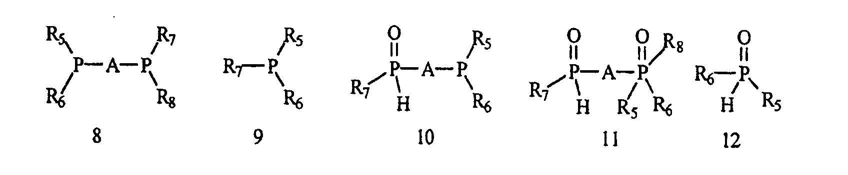 wherein:
A is a divalent group of 1-12 aliphatic or aromatic carbon atoms, linear or branched, optionally containing one or more heteroatoms or organometallic groups; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy; and any of R₅, R₆, R₇, and R₈ can optionally together with any other of R₅, R₆, R₇, and R₈ form a ring;
the process comprising the steps of:
   a) contacting (i) one or more supported phosphines selected from the group consisting of Formulae 1, 2, 3, 4, 5, 6, and 7 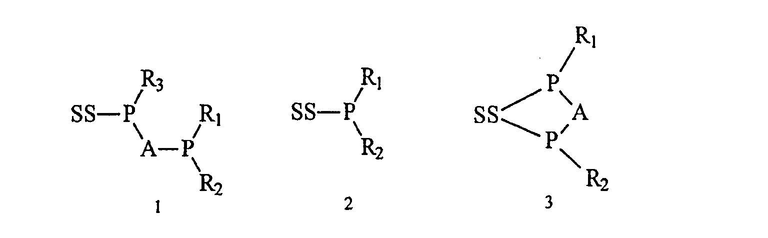 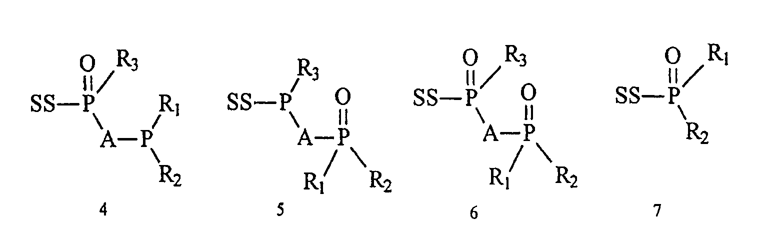 wherein:
      SS is a solid support wherein at least one P in each phosphine is attached indirectly or directly to the solid support via one or more covalent bonds; A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring with
         (ii) one or more compounds of the Formula ER₉, wherein E is an electrophilic group and R₉ is selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; thereby forming the corresponding compounds of Formulae 1,2,3,4,5,6, and 7; and
   b) optionally replacing one or more substitutents of the group R₅, R₆, R₇, and R₈ with any other substitutent of the group R₅, R₆, R₇, and R₈.

More particularly the process may use the supported phosphine compounds of the group consisting of Formulae 1A, 2A, 3A, 4A, 5A, 6A, and 7A 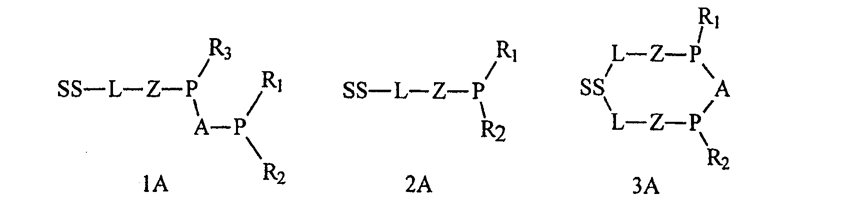 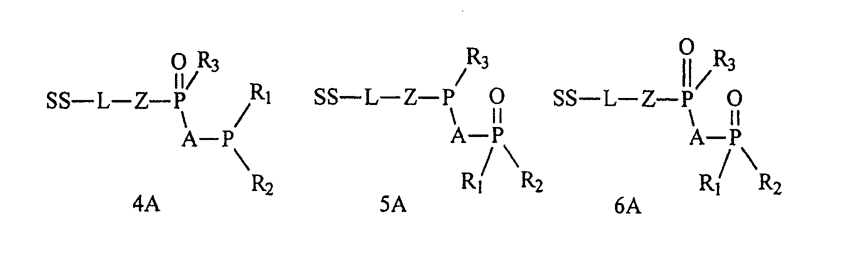 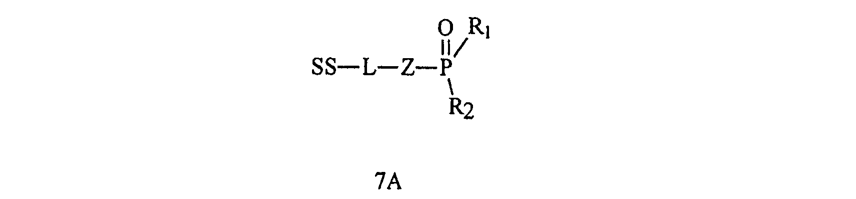 wherein:
Z is a divalent attaching group covalently attached to at least one phosphorus in the phosphine, selected from the group consisting of hydrocarbylene, substituted hydrocarbylene, -O-, -S-, and NR₄-, where R₄ is selected from the group consisting of an optionally-substituted hydrocarbyl and halogen; L is a divalent linking group covalently attached to Z and to SS, selected from the group consisting of optionally-substituted chains of from 1 to 12 linear, branched, and cyclic carbon atoms; A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy; and any of R₅, R₆, R₇, and R₈ can optionally together with any other of R₅, R₆, R₇, and R₈ form a ring.

In this process preferably E is selected from the group consisting of hydrogen, PCl₂, and SiMe₃, and R₅ is a halogen. Additionally in this process preferably the supported phosphine compounds are selected from the group consisting of Formulae 1 and 3, and the phosphine compound is Formula 8. More preferaably in this process Z is selected from the group consisting of optionally-substituted carbon chain of 1-10 carbon atoms, -(NR₄)-, and -0-; A is selected from the group consisting of an optionally-substituted carbon chain of 1-3 carbon atoms and an optionally-substituted carbon ring of 6-12 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other of R₅, R₆, R₇, and R₈ form a ring.

Alternatively in this process the preferred supported phosphine compounds are of Formula 2, and the phosphine compounds are of Formula 9. More preferably in this process Z is selected from the group consisting of optionally-substituted carbon chain of 1-10 carbon atoms, -(NR₄)-, and -O-; A is selected from the group consisting of an optionally-substituted carbon chain of 1-3 carbon atoms and an optionally-substituted carbon ring of 6-12 carbon atoms; R₅, R₆, and R₇, are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, and R₇ can optionally together with any other of R₅, R₆, and R₇ form a ring.

Alternatively in this process the preferred supported phosphine compounds are of Formula 4 and the phosphine compounds are of Formula 10. More preferably in this process Z is selected from the group consisting of optionally-substituted carbon chain of 1-10 carbon atoms, -(NR₄)-, and -O-; A is selected from the group consisting of an optionally-substituted carbon chain of 1-3 carbon atoms and an optionally-substituted carbon ring of 6-12 carbon atoms; R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, and R₇ can optionally together with any other of R₅, R₆, and R₇ form a ring.

Alternatively in this process the preferred supported phosphine compounds are selected from the group consisting of Formulae 3 and 5, and the phosphine compounds are of Formula 11. More preferably in this process Z is selected from the group consisting of optionally-substituted carbon chain of 1-10 carbon atoms, -(NR₄)-, and -O-; A is selected from the group consisting of an optionally-substituted carbon chain of 1-3 carbon atoms and an optionally-substituted carbon ring of 6-12 carbon atoms; R₆, R₇, and R₈ are independently selected from the group consisting of Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₆, R₇, and R₈ can optionally together with any other of R₆, R₇, and R₈ form a ring.

Alternatively in this process the preferred supported phosphine compounds are of Formula 2, and the phosphine compounds are of Formula 12. More preferably in this process Z is selected from the group consisting of optionally-substituted carbon chain of 1-10 carbon atoms, -(NR₄)-, and -0-; A is selected from the group consisting of an optionally-substituted carbon chain of 1-3 carbon atoms and an optionally-substituted carbon ring of 6-12 carbon atoms; R₅ and R₆ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅ and R₆ can optionally together with any other of R₅ and R₆ form a ring.

This invention is still further directed to a supported phosphine compound selected from the group consisting of Formulae 1, 2, 3, 4, 5, 6, and 7 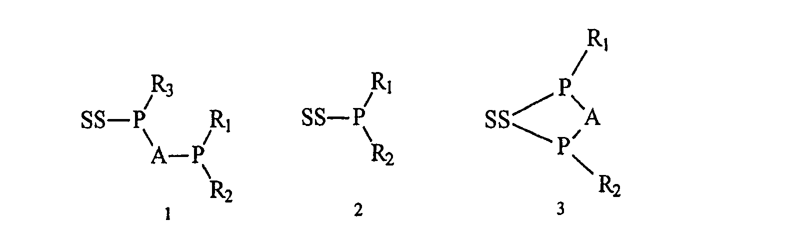 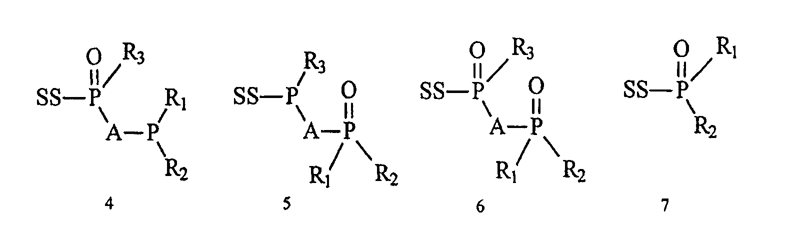 wherein:
SS is a solid support wherein at least one P in each phosphine is attached indirectly or directly to the solid support via one or more covalent bonds; A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring.

More preferably the supported phosphine compound is selected from the group consisting of Formulae 1A, 2A, 3A, 4A, 5A, 6A, and 7A 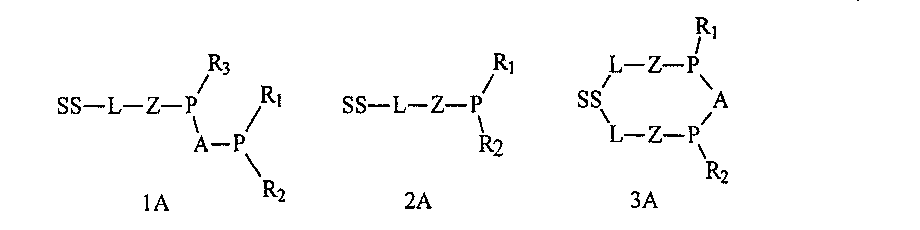 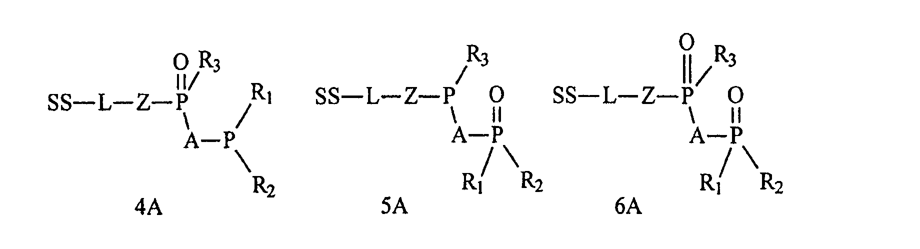 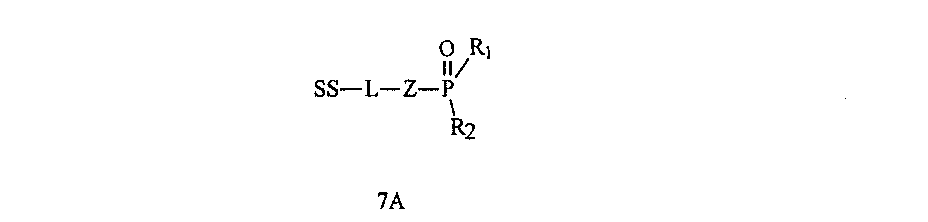 wherein:
Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.

Alternatively, the preferred supported phosphine compound is Formula 1A. More preferably in this supported phosphine compound the SS is polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the preferred supported phosphine compound is Formula 2A. More preferably in this supported phosphine compound the SS is polystyrene; L is -CH₂-; Z is selected from the group consisting of optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; and R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic, or alkyl ring.

Alternatively, the preferred supported phosphine compound is Formula 3A. More preferably in this supported phosphine compound the SS is polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the preferred supported phosphine compound is Formula 4A. More preferably in the supported phosphine compound of Claim 63 the SS is polystyrene; L is -CH₂-; Z is selected from the group consisting of optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the preferred supported phosphine compound is Formula 5A. More preferably in this supported phosphine compound the SS is polystyrene; L is -CH₂-; Z is selected from the group consisting of optionally-substituted carbon chain of 1-10 carbon atoms, -(NR₄)-, and -O-; A is selected from the group consisting of an optionally-substituted carbon chain of 1-3 carbon atoms and an optionally-substituted carbon ring of 6-12 carbon atoms; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.

This invention is still further directed to a combinatorial library of supported phosphine compounds selected from the group consisting of Formulae 1, 2, 3, 4, 5, 6, and 7 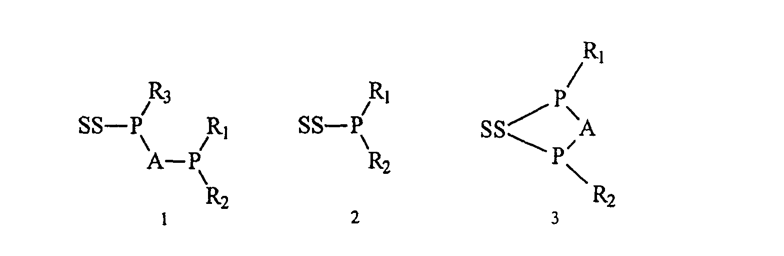 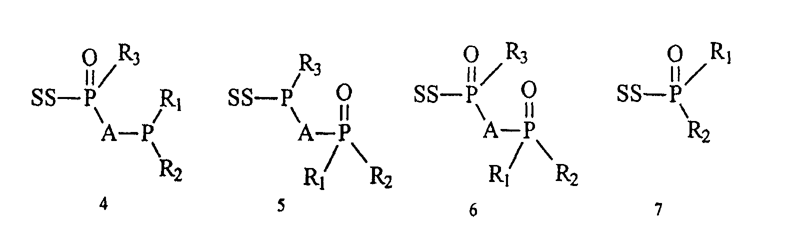 wherein:
SS is a solid support wherein at least one P in each phosphine is attached indirectly or directly to the solid support via one or more covalent bonds; A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring.

Preferably the combinatorial library of this invention uses the supported phosphine compounds selected from the group consisting of Formulae 1A, 2A, 3A, 4A, 5A, 6A, and 7A 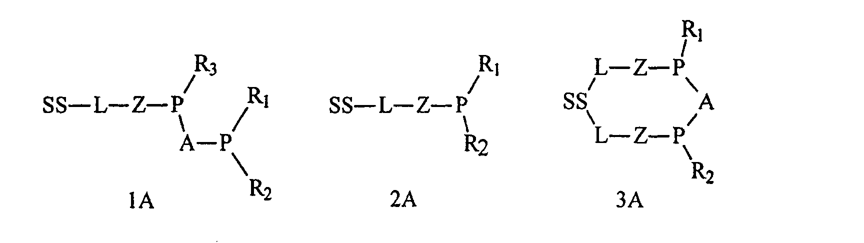 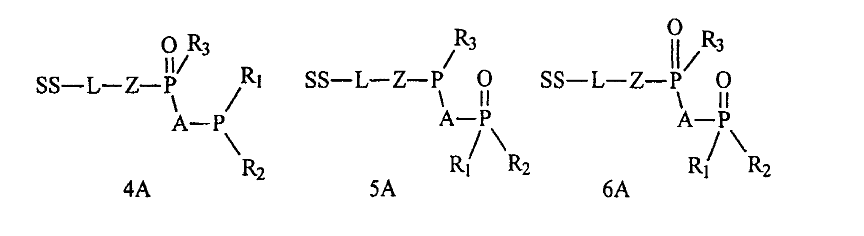 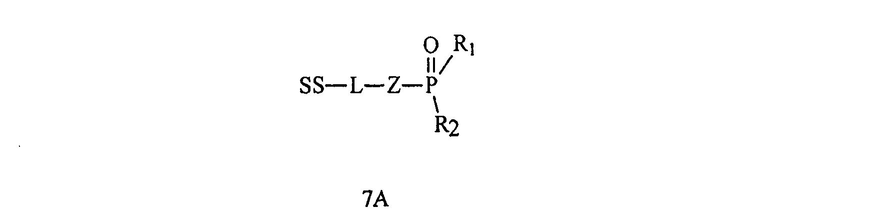 wherein:
Z is a divalent attaching group covalently attached to at least one phosphorus in each phosphine, selected from the group consisting of hydrocarbylene, substituted hydrocarbylene, -O-, -S-, and NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.

Preferably, the combinatorial library uses the supported phosphine compounds of Formula 1A. More preferably in this combinatorial the SS is polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the combinatorial library uses the supported phosphine compounds of Formula 2A. More preferably in this combinatorial the SS is polystyrene; L is -CH₂-; Z is selected from the group consisting of optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; and R₁ and R₂ are independently selected from the group consisting ofhydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic, or alkyl ring.

Alternatively, the combinatorial library uses the supported phosphine compounds of Formula 3A. More preferably in this combinatorial library the SS is polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; R₁ and R₂ are independently selected from the group consisting of hydrogen, Cl, alkyl, alkenyl, aryl, SQ₁, OQ₂, and PQ₃Q₄, where Q₁, Q₂, Q₃₀, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the combinatorial library uses the supported phosphine compounds of Formula 4A. More preferably in this combinatorial library the SS is polystyrene; L is -CH₂-; Z is selected from the group consisting of optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Alternatively, the combinatorial library uses the supported phosphine compounds of Formula 5A. more preferably in this combinatorial library the SS is polystyrene; L is -CH₂-; Z is selected from the group consisting of optionally-substituted carbon chain of 1-10 carbon atoms, -(NR₄)-, and -O-; A is selected from the group consisting of an optionally-substituted carbon chain of 1-3 carbon atoms and an optionally-substituted carbon ring of 6-12 carbon atoms; R₄ is selected from the group consisting of chloro, cyclohexyl, n-propyl, i-propyl, n-butyl, phenyl, and t-butyl; and R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.

The invention is still further directed to a combinatorial library of phosphine compounds selected from the group consisting of Formulae 8, 9, 10, 11, and 12 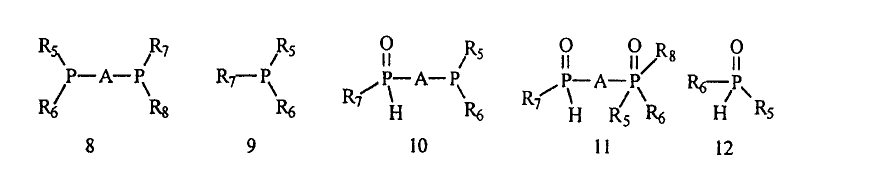 wherein:
A is a divalent group of 1-12 aliphatic or aromatic carbon atoms, linear or branched, optionally containing one or more heteroatoms or organometallic groups; R₅, R₆, R₇, and R₈ are independently selected from the group consisting of hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; R₅, R₆, R₇, and R₈ are independently selected from the group consisting of hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and any substituent of the group R₅, R₆, R₇, and R₈ can optionally together with any other substituent of the group R₅, R₆, R₇, and R₈ form a ring.

Preferably in this combinatorial library of phosphine compounds A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other of R₅, R₆, R₇, and R₈ form a ring.

Preferably in this combinatorial library the phosphine compounds are of Formula 8. More preferably in this combinatorial library at least one of the substitutents of the group R₅, R₆, R₇, and R₈ differs from the other substituents of the group R₅, R₆, R₇, and R₈.

Alternatively in this combinatorial library of phosphine compounds A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, R₇, and R₈ can optionally together with any other substituent of the group R₅, R₆, R₇, and R₈ form a ring.

Preferably in this combinatorial library the phosphine compounds are of Formula 9. More preferably in this combinatorial library A is an optionally-substituted carbon chain of 1-3 carbon atoms; R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆, and R₇ form a ring.

Preferably in this combinatorial library the phosphine compounds are of Formula 10. More preferably in this combinatorial library A is an optionally-substituted carbon chain of 1-3 carbon atoms; R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆, and R₇ form a ring.

Preferably in this combinatorial library the phosphine compounds are of Formula 11. More preferably in this combinatorial library A is an optionally-substituted carbon chain of 1-3 carbon atoms; R₆, R₇, and R₈ are independently selected from the group consisting of Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₆, R₇, and R₈ can optionally together with any other substituent of the group R₆, R₇, and R₈ form a ring.

Preferably in this combinatorial library the phosphine compounds are of Formula 12. More preferably in this combinatorial library A is an optionally-substituted carbon chain of 1-3 carbon atoms; R₅ and R₆ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅ and R₆ can optionally together with any other of R₅ and R₆ form a ring.

This invention is still further directed to a coordination compound comprising one or more transition metals complexed to a ligand selected from the group consisting of Formulae 1, 2, 3, 4, 5, 6, and 7 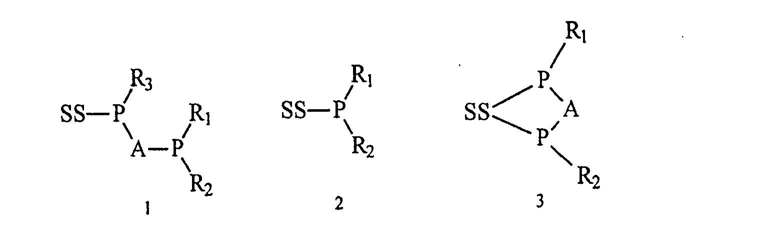 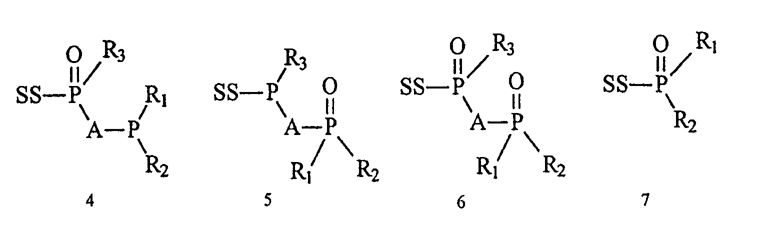 wherein:
SS is a solid support wherein at least one P in each phosphine is attached indirectly or directly to the solid support via one or more covalent bonds; A is a divalent group of 1-12 aliphatic or aromatic carbon atoms, linear or branched, optionally containing one or more heteroatoms or organometal groups; R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring.

Preferably the transition metal is selected from Periodic Group VIII.

Preferably the coordination compound is selected from the group consisting of Formulae 1A, 2A, 3A, 4A, 5A, 6A, and 7A 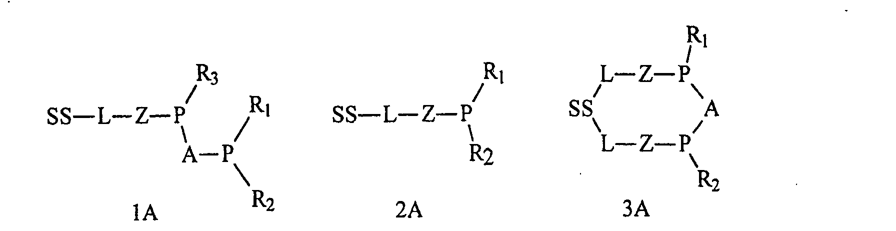 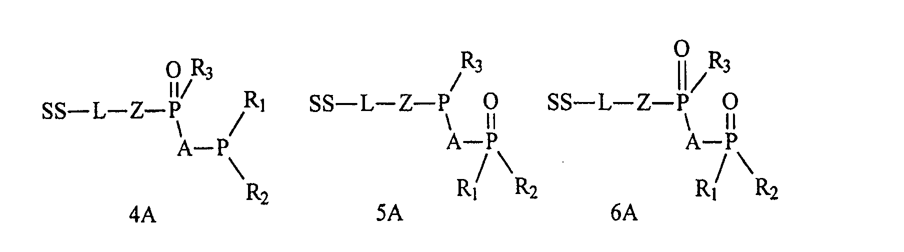 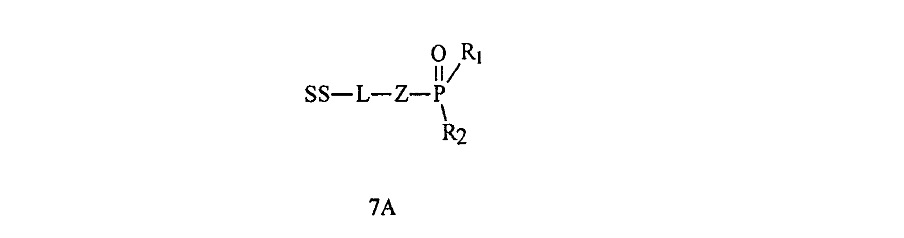 wherein:
Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.

More preferably the coordination compound is Formula 1A. In this coordination compound still more preferably the SS is polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and-O-; R₄ is selected from the group consisting of chloro, cyclohexyl, n-propyl, i-propyl, n-butyl, phenyl, and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl or alkyl ring; and the transition metal is Rh.

Most preferably the coordination compound is polymer-bound 1-(1,1-di-n-propylphosphino)-2-n-propylphosphinoethane and (1,5-cyclooctadiene)-rhodium (I) chloride dimer.

This invention is still further directed to a combinatorial library of coordination compounds comprising one or more transition metals complexed to one or more ligands selected from the group consisting of Formulae 1, 2, 3, 4, 5, 6, and 7 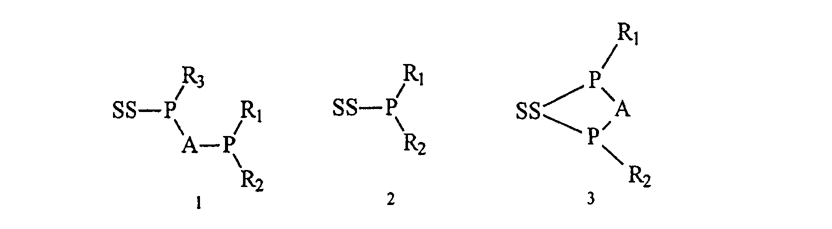 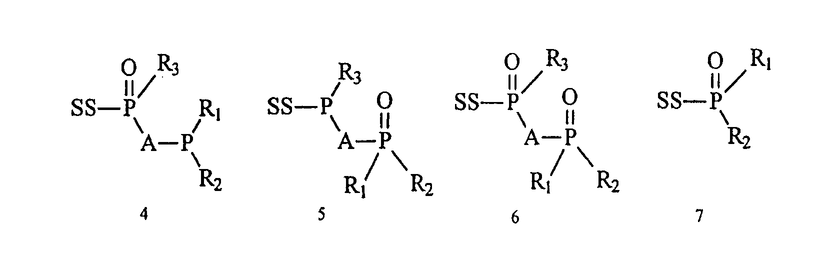 wherein:
SS is a solid support wherein at least one P in each phosphine is attached indirectly or directly to the solid support via one or more covalent bonds; A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring.

Preferably the transition metal is selected from Periodic Group VIII.

More preferably the combinatorial library is selected from the group consisting of Formulae 1A, 2A, 3A, 4A, 5A, 6A, and 7A 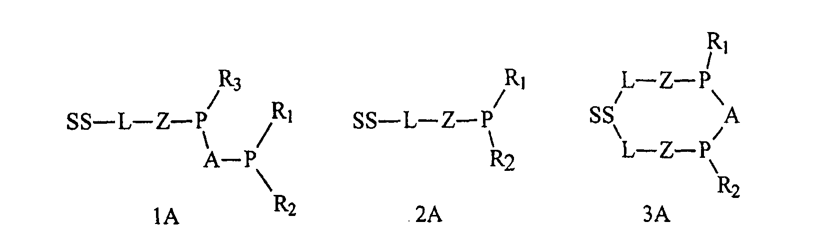 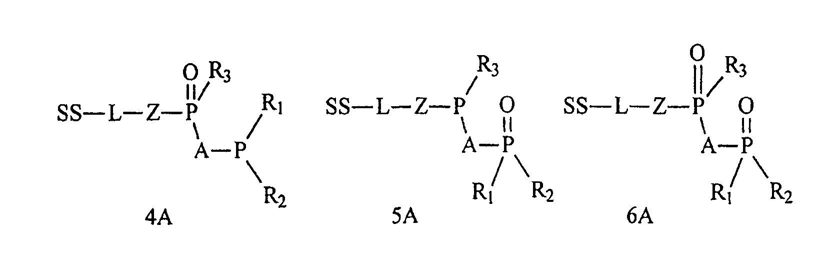 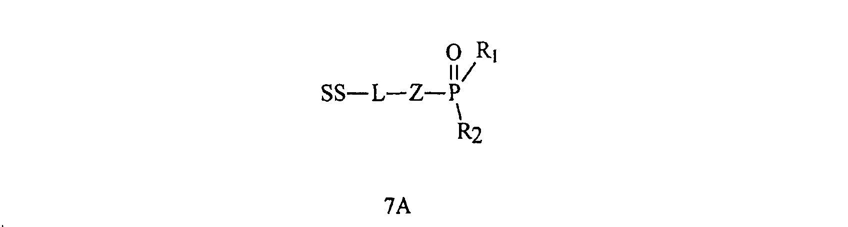 wherein:
Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.

More preferably the combinatorial library of coordination compounds is Formula 1A. In this combinatorial library of coordination compounds the SS is polystyrene; L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -0-; R₄ is selected from the group consisting of chloro, cyclohexyl, n-propyl, i-propyl, n-butyl, phenyl, and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring; and the transition metal is Rh.

This invention is still further directed to a combinatorial library of coordination compounds comprising one or more transition metals complexed to one or more ligands selected from the group consisting of Formulae 8, 9, 10, 11, and 12 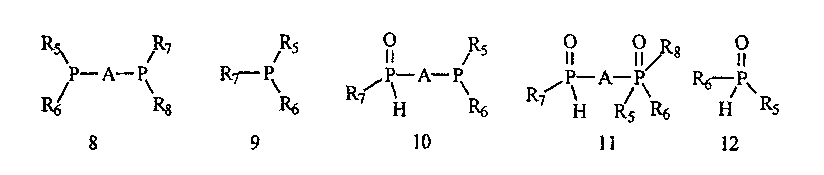 wherein:
A is a divalent group of 1-12 aliphatic or aromatic carbon atoms, linear or branched, optionally containing one or more heteroatoms or organometallic groups; R₅, R₆, R₇, and R₈ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and any of the substituents of the group R₅, R₆, R₇, and R₈ can optionally together with any other of the subsitutents of the group R₅, R₆, R₇, and R₈ form a ring.

More preferably in the combinatorial library A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other of R₅, R₆, R₇, and R₈ form a ring; and the transition metals are selected from Periodic Group VIII.

Still more preferably in the combinatorial library the ligands are of Formula 8. Still more preferably in the combinatorial library at least one substituent of the group R₅, R₆, R₇, and R₈ differs from the other substituents of the group R₅, R₆, R₇, and R₈.

Alternatively, in this combinatorial library of coordination compounds A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R,₆, R₇, and R₈ can optionally together with any other substituent of the group R₅, R₆, R₇, and R₈ form a ring; and the transition metal is Pd.

This invention is still further directed to a process to prepare coumarin comprising contacting salicylaldehyde with an acrylate of the formula 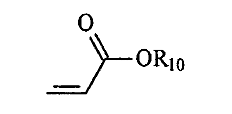 wherein R₁₀ is an alkyl group of 1-6 carbons. Preferably, the process to prepare coumarin is performed in the presence of a catalytic amount of a coordination compound comprising one or more transition metals complexed to a ligand selected from the group consisting of Formulae 1, 2, 3, 4, 5, 6, and 7 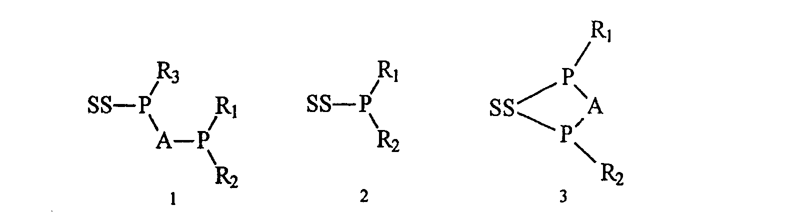 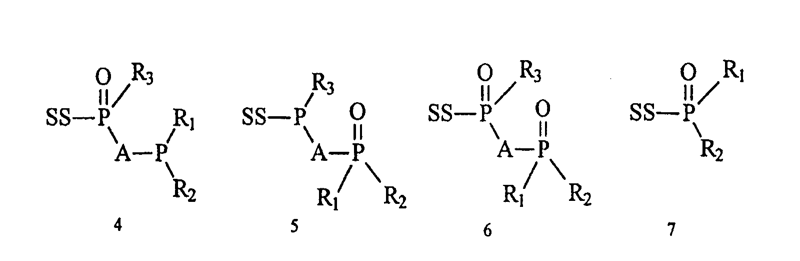 wherein:
SS is a solid support wherein at least one P in each phosphine is attached indirectly or directly to the solid support via one or more covalent bonds; A is a divalent group of 1-12 aliphatic or aromatic carbon atoms, linear or branched, optionally containing one or more heteroatoms or organometallic groups; R₁, R₂ and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring.

Preferably, the process for pareparing coumarin uses a transition metal selected from Periodic Group VIII.

Preferably in the process to prepare coumarin, the ligand is Formula 1A: 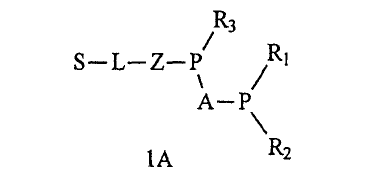 wherein:
Z is a divalent attaching group covalently attached to at least one phosphorus in the phosphine, selected from the group consisting of hydrocarbylene, substituted hydrocarbylene, -O-, -S-, and NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.
More preferably in the process to prepare coumarin, L is -CH₂-; A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -O-; R₄ is selected from the group consisting of chloro, cyclohexyl, n-propyl, i-propyl, n-butyl, phenyl, and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring; and the transition metal is Rh.

### DETAILED DESCRIPTION OF THE INVENTION

The present invention provides for a process to prepare novel, covalently attached phosphine ligands on polymer supports. These phosphine ligands are useful as catalysts when combined with a transition metal precursor. The present invention also allows synthesis of new free phosphine ligands by chemical cleavage from the solid support.

The invention provides for novel supported phosphine compositions of Formulae 1-7: 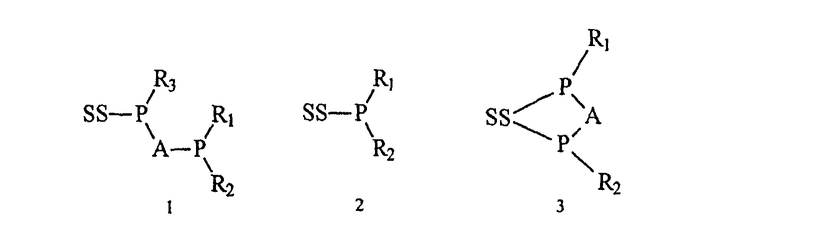 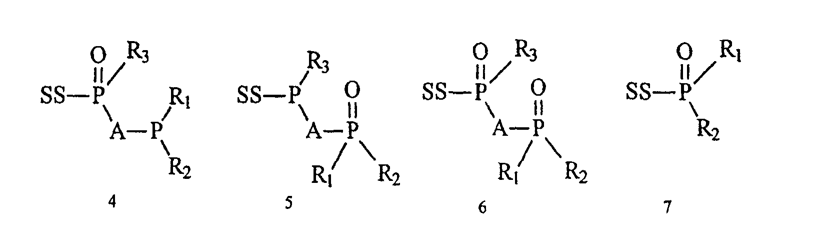 wherein SS is a solid support wherein at least one P in each phosphine is attached indirectly or directly to the solid support via one or more covalent bonds;
A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
R₂ and R₃ together, R₁ and R₃ together, or R₁ and R₂ together can optionally form a ring.

By hydrocarbyl is meant a straight chain, branched or cyclic arrangement of carbon atoms connected by single, double, or triple carbon to carbon bonds and/or by ether linkages, and substituted accordingly with hydrogen atoms. Such hydrocarbyl groups may be aliphatic and/or aromatic. Examples of hydrocarbyl groups include methyl, ethyl, propyl, isopropyl, butyl, isobutyl, t-butyl, cyclopropyl, cyclobutyl, cyclopentyl, methylcyclopentyl, cyclohexyl, methylcyclohexyl, benzyl, phenyl, o-tolyl, m-tolyl, p-tolyl, xylyl, vinyl, allyl, butenyl, cyclohexenyl, cyclooctenyl, cyclooctadienyl, and butynyl. Examples of substituted hydrocarbyl groups include methoxy, phenoxy, toluyl, chlorobenzyl, fluoroethyl, p-CH₃-S-C₆H₅, 2-methoxy-propyl, and (CH₃)₃SiCH₂.

Virtually any solid material may be used as a support in the context of this invention as long as it meets the following criteria:
- The material is insoluble in organic, aqueous, or inorganic solvents. Organic polymer supports are acceptable in this regard but they generally need to be crosslinked. Inorganic support, such as metal oxides (SiO₂, Al₂O₃, TiO₂, ZrO₂, etc.), clays, and zeolites, and modified carbons are generally insoluble in these solvents and also may be used as supports.
- The support contains reactive sites, which can be used for the covalent attachment of the phosphorus.
- The reactive sites are isolated to prevent additional crosslinking during further chemical transformations.
- The reactive sites are exposed to the reaction medium. With a polymer resin support this is achieved through the use of a resin which swells in a reaction solvent or is sufficiently porous to allow transport of the reaction medium through the polymer matrix.

The term "solid support" refers to a material having a rigid or semi-rigid surface that contains or can be derivatized to contain functionality, which covalently links a compound to the surface thereof. Other modifications may be made in order to achieve desired physical properties. Such materials are well known in the art and include, by way of example, polystyrene supports, polyacrylamide supports, polyethyleneglycol supports, metal oxides such as silica, and the like. Such supports will preferably take the form of small beads, pellets, disks, films, or other conventional forms, although other forms may be used.

A preferred solid support is an organic or inorganic polymer, to which the phosphorus can be covalently attached through a side chain or pendant group of the polymeric backbone. The polymer may be crosslinked or modified. Suitable preferred polymers useful in the preparation of a supported phosphine compound or a combinatorial library of supported phosphine compounds include polyolefins, polyacrylates, polymethacrylates, and copolymers thereof that meet the general criteria described above. A more preferred polymeric support is polystyrene wherein the phosphorus is attached to a pendant phenyl group on the polystyrene backbone. Most preferred is polystyrene, crosslinked with divinylbenzene. Specifically, polystyrenes commonly used for solid phase synthesis have been used. These particular resins are crosslinked with from 1 to 10 wt % divinylbenzene. The styrene moieties are substituted in the para or meta positions. Only a portion of the styrene moieties are substituted, typically resulting in functional group loadings of approximately 0.2 to 2.0 mmole per gram of resin, although this value may be higher or lower.

Preferred embodiments for the novel supported phosphine compositions and for combinatorial libraries of supported phosphine compounds are selected from the group of Formulae 1A-7A: 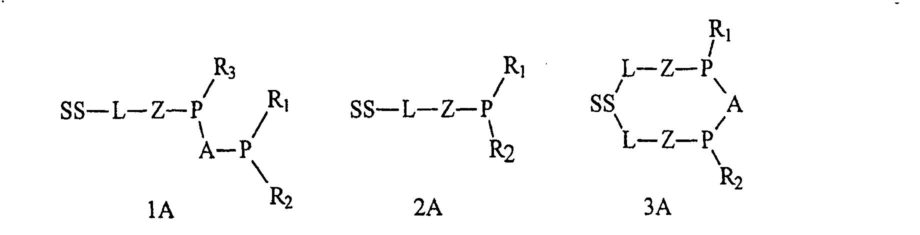 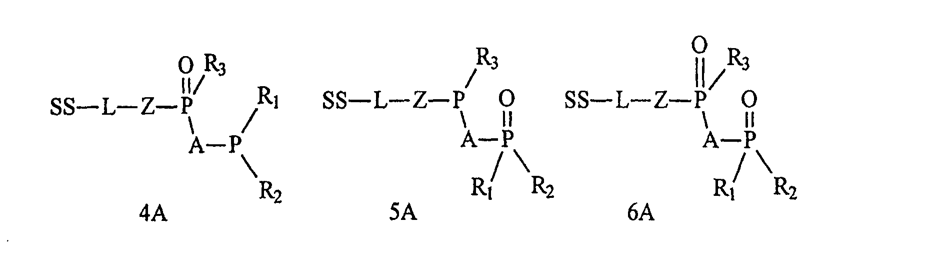 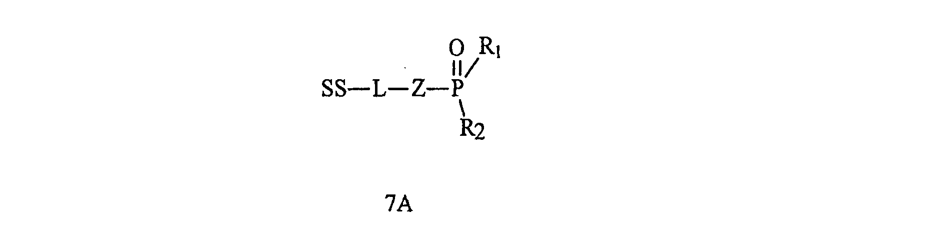 where Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.

Preferred compounds include those where L is -CH₂-. Also preferred are those where A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -O-; R₄ is selected from the group consisting of chloro, cyclohexyl, n-propyl, i-propyl, n-butyl, phenyl and t-butyl; R₁, R₂, and R₃ are independently selected from the group consisting of hydrogen, Cl, alkyl, alkenyl, aryl, SQ₁, OQ₂, and PQ₃Q₄, where Q₁, Q₂, Q₃ and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Most preferred compounds are those where the solid support is polystyrene (crosslinked with divinylbenzene) and where L= CH₂ and Z, A, R₁, R₂, and R₃ are as shown in Tables 1-5 below.

**TABLE I**

| Formula 1A | | | | |
|---|---|---|---|---|
| **Z** | **A** | **R**_{**1**} | **R**_{**2**} | **R**_{**3**} |
| N(t-butyl) | (CH₂)₂ | chloro | chloro | chloro |
| (CH₂)₂ | O | chloro | chloro | chloro |
| (CH₂)₅ | (CH₂)₂ | chloro | chloro | chloro |
| N(t-butyl) | (CH₂)₂ | 4-methylphenyl | 4-methylphenyl | 4-methylphenyl |
| N(t-butyl) | (CH₂)₂ | 4-chlorophenyl | 4-chlorophenyl | 4-chlorophenyl |
| N(t-butyl) | (CH₂)₂ | 4-butylphenyl | 4-butylphenyl | 4-butylphenyl |
| N(t-butyl) | (CH₂)₂ | ethynyl | ethynyl | ethynyl |
| N(t-butyl) | (CH₂)₂ | propynyl | propynyl | propynyl |
| N(t-butyl) | (CH₂)₂ | 4-fluorophenyl | 4-fluorophenyl | 4-fluorophenyl |
| N(t-butyl) | (CH₂)₂ | vinyl | vinyl | vinyl |
| N(t-butyl) | (CH₂)₂ | cyclopentyl | cyclopentyl | cyclopentyl |
| N(t-butyl) | (CH₂)₂ | decyl | decyl | decyl |
| N(t-butyl) | (CH₂)₂ | 3,4-difluorophenyl | 3,4-difluorophenyl | 3,4-difluorophenyl |
| N(t-butyl) | (CH₂)₂ | 4-butylphenyl | 4-butylphenyl | 4-butylphenyl |
| N(t-butyl) | (CH₂)₂ | 3-fluoromethylphenyl | 3-fluoromethylphenyl | 3-fluoromethylphenyl |
| N(t-butyl) | (CH₂)₂ | 4-methylthiophenyl | 4-methylthiophenyl | 4-methylthiophenyl |
| N(t-butyl) | (CH₂)₂ | 3-methoxyphenyl | 3-methoxyphenyl | 3-methoxyphenyl |
| N(t-butyl) | (CH₂)2 | 3-fluoromethylphenyl | 3-fluoromethylphenyl | 3-fluoromethylphenyl |
| N(t-butyl) | (CH₂)₂ | 4-methoxyphenyl | 4-methoxyphenyl | 4-methoxyphenyl |
| N(t-butyl) | (CH₂)₂ | mesityl | mesityl | mesityl |
| N(t-butyl) | (CH₂)₂ | 2-phenylethyl | 2-phenylethyl | 2-phenylethyl |
| N(t-butyl) | (CH₂)₂ | 3,4,5-trifluorophenyl | 3,4,5-trifluorophenyl | 3,4,5-trifluorophenyl |
| N(t-butyl) | (CH₂)₂ | phenethyl | phenethyl | phenethyl |
| N(t-butyl) | (CH₂)₂ | o-tolyl | o-tolyl | o-tolyl |
| N(t-butyl) | (CH₂)₂ | 3,5-difluorophenyl | 3,5-difluorophenyl | 3,5-difluorophenyl |
| N(t-butyl) | (CH₂)₂ | 2-thienyl | 2-thienyl | 2-thienyl |
| N(t-butyl) | (CH₂)₂ | 2,3,4,5-tetramethylphospholyl | chloro | |
| N(t-butyl) | (CH₂)₂ | methyl | methyl | chloro |
| N(t-butyl) | (CH₂)₂ | 2,3,4,5-tetrainethylphospholyl | 2,4,6-trimethylphenyl | |
| N(t-butyl) | (CH₂)₂ | phenoxy | phenoxy | phenoxy |
| (CH₂)₅ | (CH₂)2 | methyl | methyl | methyl |
| (CH₂)₅ | (CH₂)₂ | ethyl | ethyl | ethyl |
| (CH₂)₅ | (CH₂)₂ | n-propyl | n-propyl | n-propyl |
| (CH₂)₅ | (CH₂)₂ | isopropyl | isopropyl | isopropyl |
| (CH₂)₅ | (CH₂)₂ | butyl | butyl | butyl |
| (CH₂)₅ | (CH₂)₂ | iso-butyl | iso-butyl | iso-butyl |
| (CH₂)₅ | (CH₂)₂ | 2-butyl | 2-butyl | 2-butyl |
| (CH₂)₅ | (CH₂)₂ | cyclopentyl | cyclopentyl | cyclopentyl |
| (CH₂)₅ | (CH₂)₂ | cyclohexyl | cyclohexyl | cyclohexyl |
| (CH₂)₅ | (CH₂)₂ | dodecyl | dodecyl | dodecyl |
| (CH₂)₅ | (CH₂)₂ | pentadecyl | pentadecyl | pentadecyl |
| (CH₂)₅ | (CH₂)₂ | phenyl | phenyl | phenyl |
| (CH₂)₅ | (CH₂)₂ | 2-methyl-2-phenylpropyl | 2-methyl-2-phenylpropyl | 2-methyl-2-phenylpropyl |
| (CH₂)₅ | (CH₂)₂ | o-tolyl | o-tolyl | o-tolyl |
| (CH₂)₅ | (CH₂)₂ | m-tolyl | m-tolyl | m-tolyl |
| (CH₂)₅ | (CH₂)₂ | p-tolyl | p-tolyl | p-tolyl |
| (CH₂)₅ | (CH₂)₂ | 4-butylphenyl | 4-butylphenyl | 4-butylphenyl |
| (CH₂)₅ | (CH₂)₂ | 4-fluorophenyl | 4-fluorophenyl | 4-fluorophenyl |
| (CH₂)₅ | (CH₂)₂ | 3-bis(trimethylsilyl)aminophenyl | 3-bis(trimethylsilyl)aminophenyl | 3-bis(trimethylsilyl)aminophenyl |
| (CH₂)₅ | (CH₂)₂ | 2,6-dimethylphenyl | 2,6-dimethylphenyl | 2,6-dimethylphenyl |
| (CH₂)₅ | (CH₂)₂ | 3,4-difluorophenyl | 3,4-difluorophenyl | 3,4-difluorophenyl |
| (CH₂)₅ | (CH₂)₂ | 3-fluoro-methylphenyl | 3-fluoro-methylphenyl | 3-fluoro-methylphenyl |
| (CH₂)₅ | (CH₂)₂ | 4-methylthiophenyl | 4-methylthiophenyl | 4-methylthiophenyl |
| (CH₂)₅ | (CH₂)₂ | 3-methoxyphenyl | 3-methoxyphenyl | 3-methoxyphenyl |
| (CH₂)₅ | (CH₂)₂ | 3-fluoromethylphenyl | 3-fluoromethylphenyl | 3-fluoro-methylphenyl |
| (CH₂)₅ | (CH₂)₂ | 2-methoxyphenyl | 2-methoxyphenyl | 2-methoxyphenyl |
| (CH₂)₅ | (CH₂)₂ | 4-methoxyphenyl | 4-methoxyphenyl | 4-methoxyphenyl |
| (CH₂)₅ | (CH₂)₂ | 4-phenoxyphenyl | 4-phenoxyphenyl | 4-phenoxyphenyl |
| (CH₂)₅ | (CH₂)₂ | 2,4-difluorophenyl | 2,4-difluorophenyl | 2,4-difluorophenyl |
| (CH₂)₅ | (CH₂)₂ | 2-naphthyl | 2-naphthyl | 2-naphthyl |
| (CH₂)₅ | (CH₂)₂ | 2-thiophenyl | 2-thiophenyl | 2-thiophenyl |
| (CH₂)₅ | (CH₂)₂ | 4-dimethylaminophenyl | 4-dimethylaminophenyl | 4-dimethylaminophenyl |
| N(t-butyl) | C₆H₄ | chloro | chloro | chloro |
| N(t-butyl) | C₆H₄ | methylphenyl | 4-methylphenyl | 4-methylphenyl |
| N(t-butyl) | C₆H₄ | chloro | 3,5-difluorophenyl | 3,5-difluorophenyl |
| (CH₂)₅ | (CH₂)₂ | chloro | chloro | cyclohexyl |
| N(t-butyl) | (CH₂)₂ | phenoxy | phenoxy | cyclohexyl |
| N(t-butyl) | (CH₂)₂ | n-propyl | n-propyl | n-propyl |
| O | (CH₂)₂ | chloro | chloro | chloro |
| O | (CH₂)₂ | i-propyl | i-propyl | i-propyl |
| N(n-propyl) | (CH₂)₂ | phenyl | phenyl | phenyl |
| N(t-butyt) | (CH₂)₂ | methyl | phenyl | phenyl |
| N(n-propyl) | (CH₂)₂ | 2-(diphenylphosphinyl)ethyl | phenyl | phenyl |
| N(n-propyl) | (CH₂)₂ | 2-(methylphenylphosphinyl)ethyl | phenyl | methyl |
| N(t-butyl) | (CH₂)₂ | methyl | methyl | 3,5-difluorophenyl |
| N(t-butyl) | (CH₂)₂ | 3,5-difluorophenyl | 3,5-difluorophenyl | chloro |

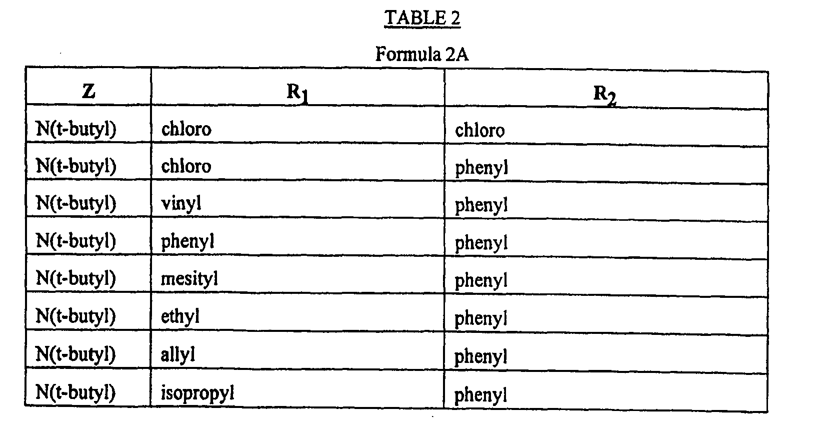

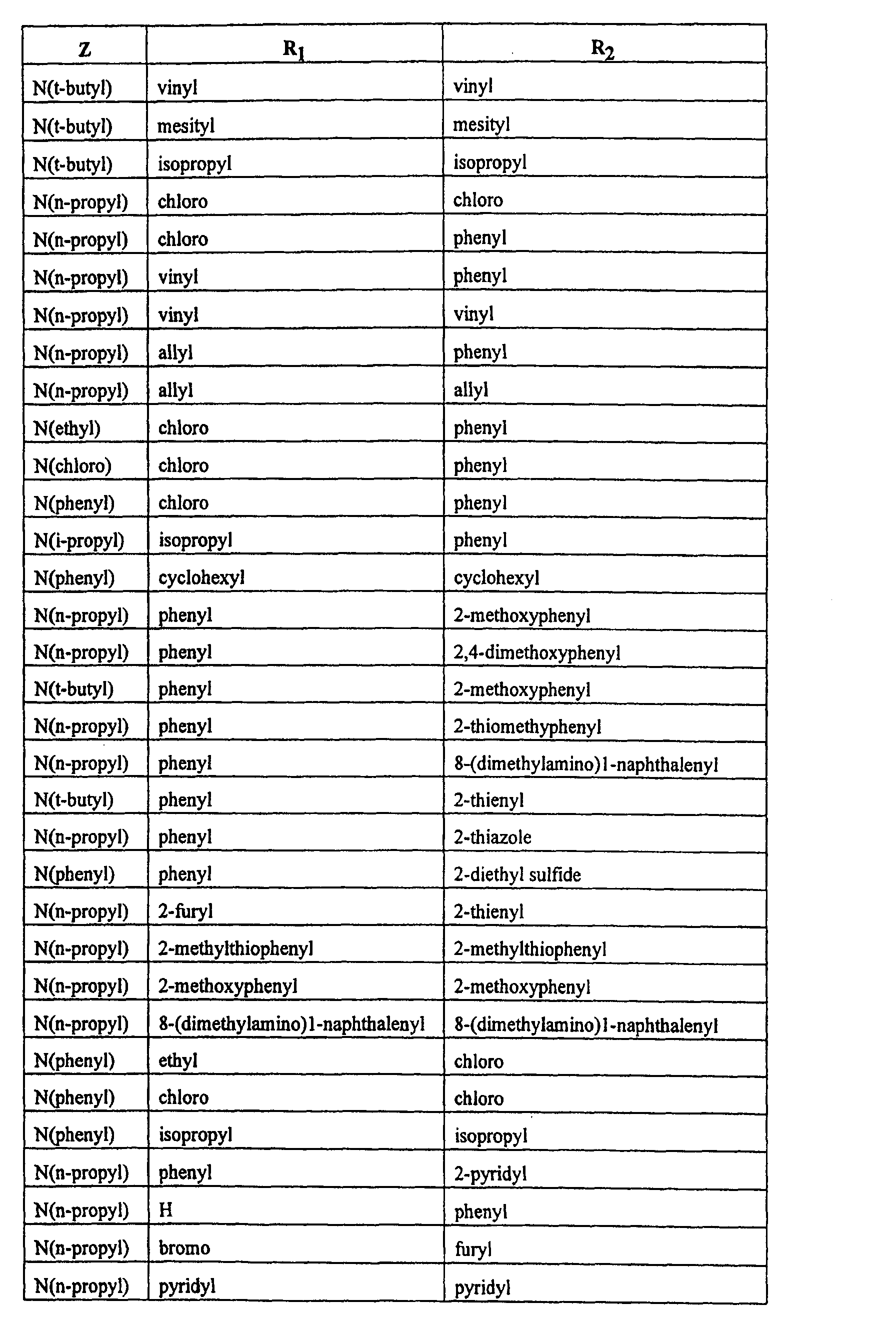

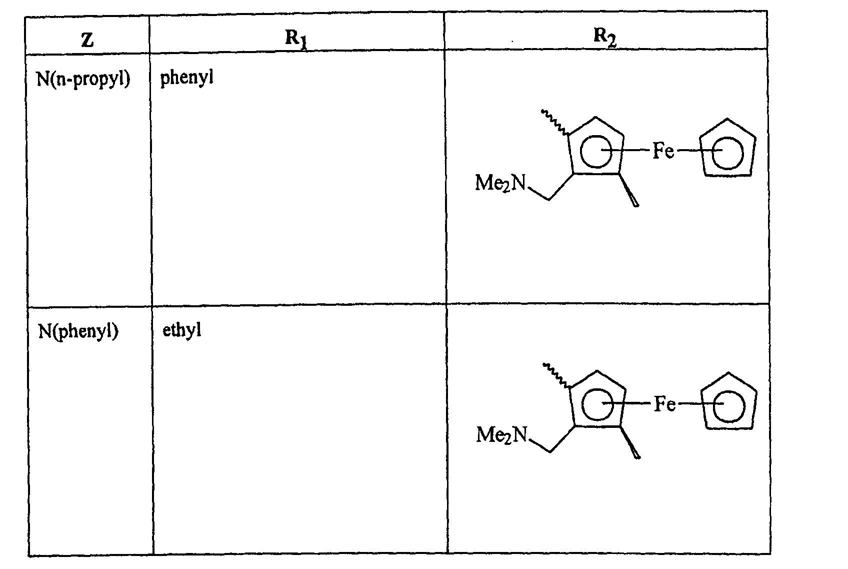

**TABLE 3**

| Formula 3A | | | |
|---|---|---|---|
| **Z** | **A** | **R**_{**1**} | **R**_{**2**} |
| N(n-propyl) | (CH₂)₂ | chloro | chloro |
| N(n-propyl) | (CH₂)₂ | n-butyl | n-butyl |
| N(n-propyl) | (CH₂)₂ | t-butyl | t-butyl |
| N(n-propyl) | (CH₂)₂ | n-heptyl | |
| N(n-propyl) | (CH₂)₂ | 2-methyl-2-phenylpropyl | 2-methyl-2-phenylpropyl |
| N(n-propyl) | (CH₂)₂ | phenyl | phenyl |
| N(n-propyl) | (CH₂)₂ | 4-t-butylphenyl | 4-t-butylphenyl |
| N(n-propyl) | (CH₂)₂ | mesityl | mesityl |
| N(n-propyl) | (CH₂)₂ | 1S, 2S-trans-1,2-cyclohexanediol | |
| N(t-butyl) | (CH₂)₂ | chloro | chloro |
| N(t-butyl) | (CH₂)₂ | 4-chlorophenyl | 4-chlorophenyl |
| N(t-butyl) | (CH₂)₂ | phenethyl | phenethyl |
| N(t-butyl) | (CH₂)₂ | i-propyl | i-propyl |
| N(t-butyl) | (CH₂)₂ | phenoxy | phenoxy |
| N(cyclohexyl) | (CH₂)₂ | chloro | chloro |
| N(cyclohexyl) | (CH₂)₂ | n-heptyl | |
| N(n-propyl) | (CH₂)₂ | n-heptyl | n-heptyl |

**TABLE 4**

| Formula 4A | | | | |
|---|---|---|---|---|
| **Z** | **A** | **R**_{**1**} | **R**_{**2**} | **R**_{**3**} |
| CH(OH) | (CH₂)₂ | i-propyl | i-propyl | i-propyl |

**TABLE 5**

| Formula 5A | | | | |
|---|---|---|---|---|
| **Z** | **A** | **R**_{**1**} | **R**_{**2**} | **R**_{**3**} |
| N(t-butyl) | (CH₂)₂ | phenyl | mesityl | phenyl |

Another aspect of this invention is a combinatorial library of supported phosphine compounds selected from the group consisting of Formulae 1, 2, 3, 4, 5, 6, and 7 wherein SS is a solid support wherein at least one P in each phosphine is attached indirectly or directly to the solid support via one or more covalent bonds;
A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
R₂ and R₃ together, R₁ and R₃ together, or R₁ and R₂ together can optionally form a ring.

As used herein, a combinatorial library is an intentionally created collection of a plurality of differing molecules which can be prepared by selected synthetic means and screened for a desired activity or characteristic in a variety of formats (e.g., libraries of soluble molecules, libraries of compounds attached to resin beads, silica chips, or other solid supports). The libraries are generally prepared such that the compounds are in approximately equimolar quantities, and are prepared by combinatorial synthesis. Combinatorial synthesis refers to the parallel synthesis of diverse compounds by sequential additions of multiple choices of reagents which leads to the generation of large chemical libraries containing related molecules having molecular diversity. Screening methods for libraries vary greatly and are dependent upon a desired activity, the size of library, and the class of compounds in the library.

The libraries of the instant invention can be of any type. These types include but are not limited to arrays and mixtures. Arrays are libraries in which the individual compounds are simultaneously synthesized in spatially segregated locations, typically identified by their location on a grid. Mixture libraries contain a mixture of compounds that are simultaneously synthesized and assayed. Identification of the most active compound is then performed by any of several techniques well known in the combinatorial art, such as deconvolution.

A preferred solid support for the combinatorial libraries of the instant invention is an organic or inorganic polymer as described above, to which the phosphorus can be covalently attached through a side chain or pendant group of the polymeric backbone.

Preferred embodiments for the novel combinatorial libraries of phosphine compositions are shown in Formulae 1A-7A where Z is a divalent attaching group covalently attached to at least one phosphorus in each phosphine, selected from the group consisting of hydrocarbylene, substituted hydrocarbylene, -O-, -S-, and NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms.

Preferred compounds include those where L is -CH₂-. Also preferred are those where A is selected from the group consisting of an optionally-substituted carbon chain of 1-3 carbon atoms and an optionally-substituted carbon ring of 6-12 carbon atoms; Z is selected from the group consisting of an optionally-substituted carbon chain of 1-10 carbon atoms, -(NR₄)-, and -0-; R₄ is selected from the group consisting of chloro, cyclohexyl, n-propyl, i-propyl, n-butyl, phenyl and t-butyl; R₁, R₂, and R₃ are independently selected from the group consisting of hydrogen, Cl, alkyl, alkenyl, aryl,SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.

Most preferred libraries are those where the solid support is polystyrene (crosslinked with divinylbenzene) and where L, Z, A, R₁, R₂, and R₃ are as shown in Tables 6-7 below.

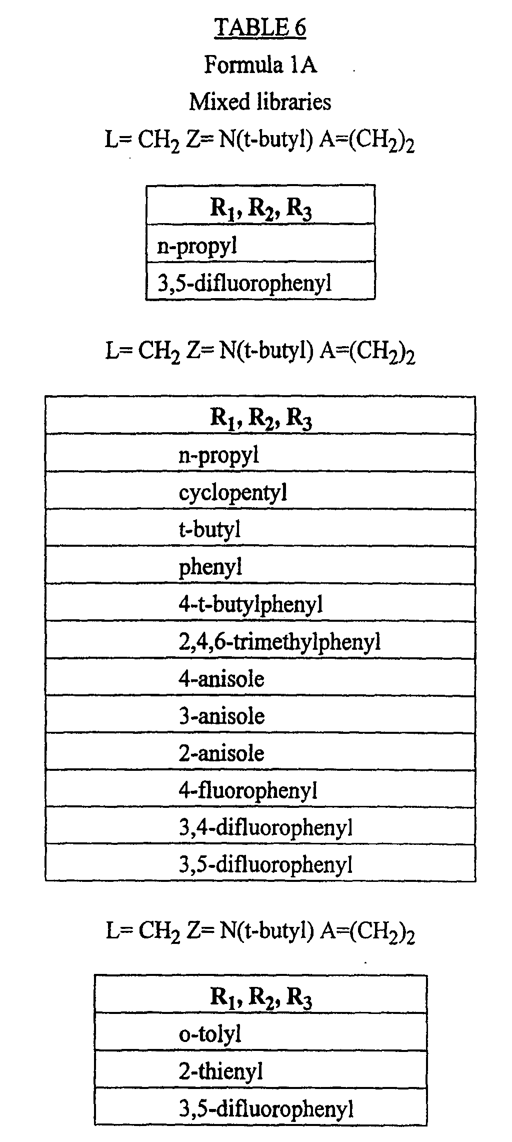

**TABLE 7**

| Formula 1A Array library L=CH₂, Z=(CH₂)₅, A-(CH₂)₂ | | |
|---|---|---|
| **R**_{**1**} | **R**_{**2**} | **R**_{**3**} |
| phenyl | phenyl | phenyl |
| isopropyl | isopropyl | isopropyl |
| butyl | butyl | butyl |
| isobutyl | isobutyl | isobutyl |
| 2-butyl | 2-butyl | 2-butyl |
| cyclopentyl | cyclopentyl | cyclopentyl |
| cyclohexyl | cyclohexyl | cyclohexyl |
| dodecyl | dodecyl | dodecyl |
| pentadecyl | pentadecyl | pentadecyl |
| phenyl | phenyl | phenyl |
| 2-methylphenylpropyl | 2-methylphenylpropyl | 2-methylphenylpropyl |
| o-tolyl | o-tolyl | o-tolyl |
| m-tolyl | m-tolyl | m-tolyl |
| p-tolyl | p-tolyl | p-tolyl |
| 4-butylphenyl | 4-butylphenyl | 4-butylphenyl |
| 4-fluorophenyl | 4-fluorophenyl | 4-fluorophenyl |
| 3-bis(trimethylsilyl)aminophenyl | 3-bis(trimethylsilyl)aminophenyl | 3-bis(trimethylsilyl)aminophenyl |
| 2,6-dimethylphenyl | 2,6-dimethylphenyl | 2,6-dimethylphenyl |
| 3,4-difluorophenyl | 3,4-difluorophenyl | 3,4-difluorophenyl |
| 3-fluoro-methylphenyl | 3-fluoro-methylphenyl | 3-fluoro-methylphenyl |
| 4-methylthiophenyl | 4-methylthiophenyl | 4-methylthiophenyl |
| 3-methoxyphenyl | 3-methoxyphenyt | 3-methoxyphenyl |
| 3-fluoro-methylphenyl | 3-fluoro-methylphenyl | 3-fluoro-methylphenyl |
| 2-methoxyphenyl | 2-methoxyphenyl | 2-methoxyphenyl |
| 4-methoxyphenyl | 4-methoxyphenyt | 4-methoxyphenyl |
| 4-phenoxyphenyl | 4-phenoxyphenyl | 4-phenoxyphenyl |
| 2,4-difluorophenyl | 2,4-difluorophenyl | 2,4-difluorophenyl |
| 2-naphthyl | 2-naphthyl | 2-naphthyl |
| 2-thiophenyl | 2-thiophenyl | 2-thiophenyl |
| 4-dimethylaminophenyl | 4-dimethylaminophenyl | 4-dimethylaminophenyl |

Any reaction in which the phosphorus is covalently attached to the solid support may be used to prepare the compounds and libraries represented by Formula 1-7, such as those described in *Encyclopedia of Inorganic Chemistry,* John Wiley & Sons, Vol. 6, pg. 3149-3213, herein incorporated by reference.

One such scheme, another aspect of this invention, comprises the steps of contacting (i) a phosphine selected from the group consisting of XPR₁R₂, XR₃P-A-PR₁R₂, HP(=O)R₁R₂, HP(=O) R₃-A-PR₁R₂, and HP(=O)R₃-A-P(=O)R₁R₂ wherein X is a halogen, with (ii) a solid support, resulting in at least one P in the phosphine attached indirectly or directly to the solid support via one or more covalent bonds, and optionally replacing one or more of R₁, R₂ or R₃ with any other R₁, R₂ or R₃ defined above. To create a library, one or more phosphines are reacted with one or more solid supports, generating a plurality of supported phosphine compounds.

One embodiment of attaching the P to the solid support is via the reaction of the halogen or hydrogen bonded to the phosphorus in the phosphine with a nucleophilic group that is covalently attached to a solid support. The term nucleophilic group is a term well recognized in the art and refers to chemical moieties having a reactive pair of electrons. This scheme can easily be adapted for combinatorial synthesis.

When using diphosphines to prepare the compounds of the instant invention, the ratio of the reagents determines whether the product has one P in each phosphine or both P in each phosphine attached covalently to the solid support. When at least 2 molar equivalents of a phosphine of the Formula XR₃P-A-PR₁R₂ is contacted with no more than one molar equivalent of the nucleophilic group attached to the solid support, the resulting product will have one P in the phosphine covalently bonded to the solid support. When no more than one molar equivalent of a phosphine of the Formula XR₃P-A-PR₁R₂ is contacted with at least 2 molar equivalents of the nucleophilic group attached to the solid support, the resulting product will have both P in the phosphine covalently bonded to the solid support.

Other preferred processes of the instant invention to prepare a supported phosphine compound or a library of supported phosphine compounds include where: (1) the supported phosphine compound is of Formula 1A and the process comprises the steps of contacting at least 2 molar equivalents of a phosphine of the Formula XR₃P-A-PR₁R₂ with no more than one molar equivalent of Z, resulting in one P in the phosphine being covalently bonded to the Z; (2) the supported phosphine compound is of Formula 2A and the process comprises the steps of contacting a phosphine of the Formula PR₁R₂X with the solid support, resulting in one P in the phosphine being covalently bonded to Z; (3) the supported phosphine compound is of Formula 3A and the process comprises the steps of contacting no more than one molar equivalent of a phosphine of the Formula XR₃P-A-PR₁R₂ with at least two molar equivalents of Z, resulting in both of the P in the phosphine being covalently bonded to the Z; (4) the supported phosphine compound is of Formula 4A and the process comprises the steps of contacting a phosphine of the Formula HP(=O) R₃-A-PR₁R₂ with the solid support, resulting in one P in the phosphine being covalently bonded to Z, and (5) where the supported phosphine compound is of Formula 5A and the process comprises the steps of contacting a phosphine of the Formula HP(=O)R₁R₂ with a solid support of the formula 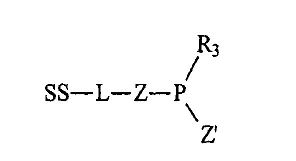 wherein the P in the solid support is covalently bonded to Z and Z' is selected from the group consisting of alkenyls, resulting in the P in the phosphine being covalently bonded to the P in the solid support via Z'.

More preferred is where SS is polystyrene, L is -CH₂-, Z is selected from the group consisting of optionally-substituted carbon chain of 1-10 carbon atoms, -(NR₄)- and -0-, A is selected from the group consisting of an optionally-substituted carbon chain of 1-3 carbon atoms and an optionally-substituted carbon ring of 6-12 carbon atoms, R₄ is selected from the group consisting of chloro, cyclohexyl, n-propyl, i-propyl, n-butyl, phenyl, and t-butyl, and R₁, R₂, and R₃ are independently selected from the group consisting of hydrogen, Cl, alkyl, alkenyl, aryl, SQ₁, OQ₂, and PQ₃Q₄, where Q₁ Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.

Examples of reactions to prepare the compounds are shown but not limited to those in Scheme 1 below, where X is a halogen, M is any metal, R can be one or more of R₁, R₂, or R₃, and R₁, R₂, R₃, R₄, Z, and A are as defined above. The Z, O, S, and N substituents are covalently attached to the solid support.

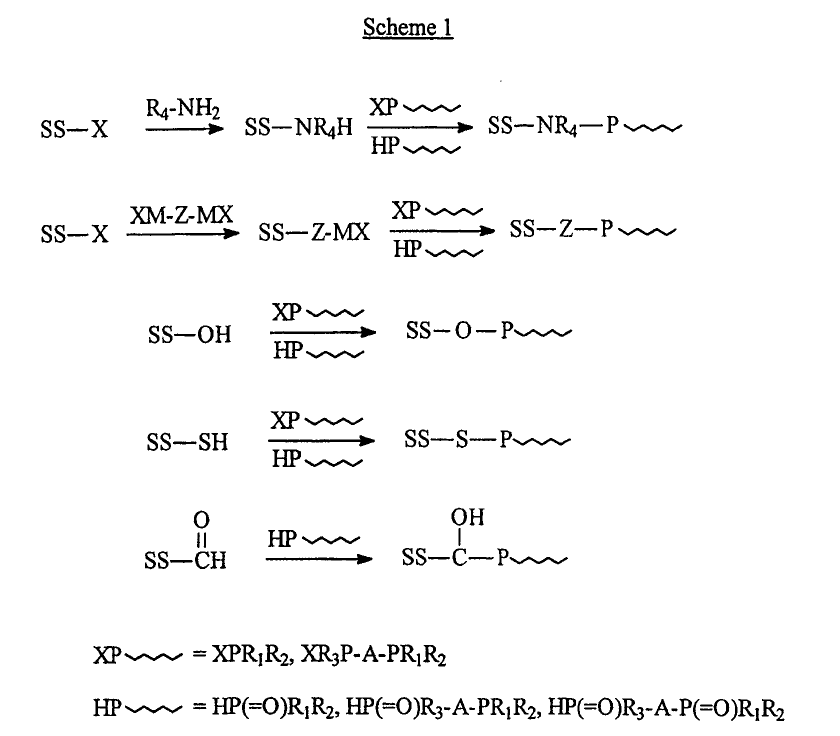

Any of the substituents in the above compounds may be replaced by other functional groups using any procedure known in the art. One or all of the substituents can be reacted in a single reaction, depending on the choice of reactants and reaction conditions. These reactions can easily be adapted for combinatorial processes. Examples of suitable procedures are shown by but not limited to those depicted in Scheme 2 below, where X, M, and A are as defined above, and R indicates any of R₁, R₂, or R₃, as defined above. Examples of suitable definitions for M include Mg, Li, and Zn. Y is any linking group with the proper orientation or with enough flexibility to allow the reaction to proceed. The choice of Y will determine whether the ring is formed between two phosphorus atoms or on one phosphorus atom. Examples of suitable linking groups include hydrocarbylene, substituted hydrocarbylene, and organometallic compounds.

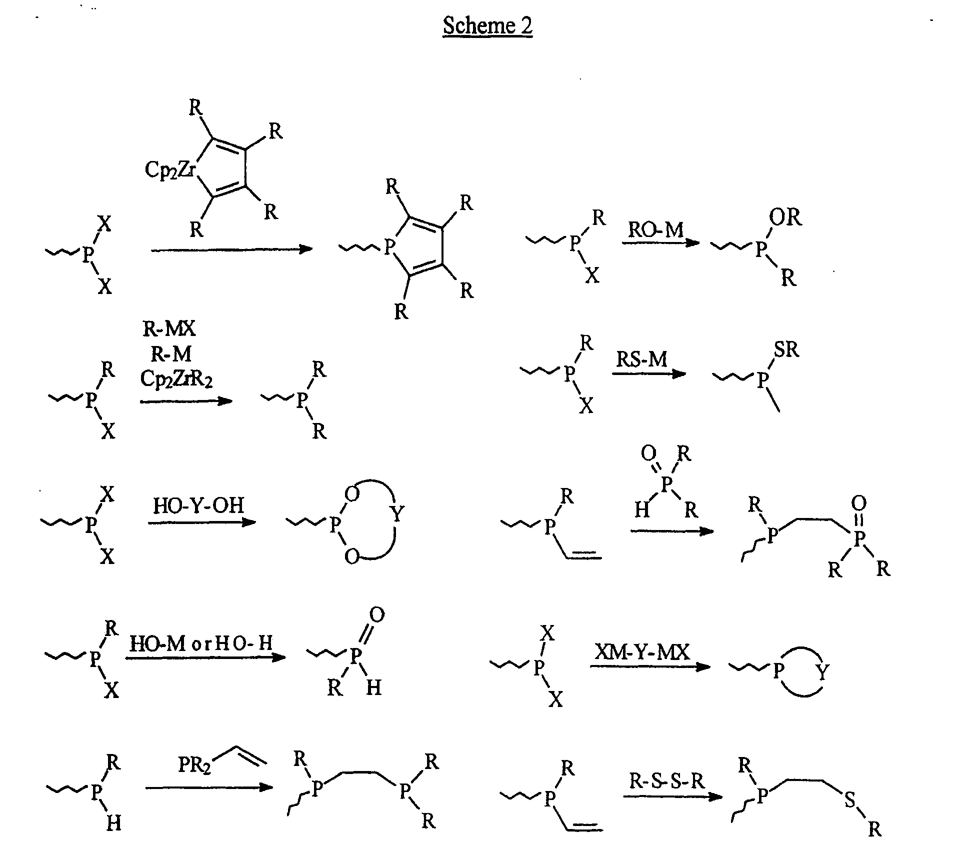

The processes of the instant invention and of Schemes 1-2 are preferably performed under dry, inert atmosphere with dry, deoxygenated solvents. Any solvent is suitable provided that it is inert to all reagents and products. Optimum temperatures are about -80 to about 200 °C, preferably about -80 to about 150 °C.

The invention provides for novel phosphine compositions of Formulae 8-12: 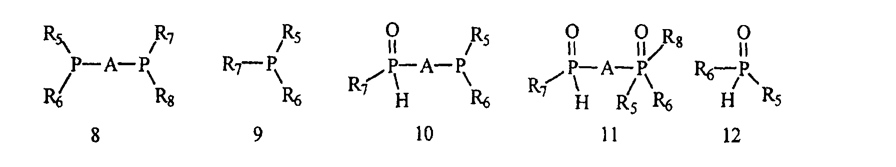 where A is a divalent group of 1-12 aliphatic or aromatic carbon atoms, linear or branched, optionally containing one or more heteroatoms or organometallic groups; R₅, R₆, R₇, and R₈ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and any ₒf R₅, R₆, R₇, and R₈ can optionally together with any other of R₅, R₆, R₇, and R₈ form a ring.

Preferred embodiments for these phosphine compositions are where A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other R₅, R₆, R₇, and R₈ form a ring. More preferred embodiments for Formula 8 are where at least one of R₅, R₆, R₇, and R₈ are different from the rest. Most preferred embodiments are shown in Tables 8-12 below.

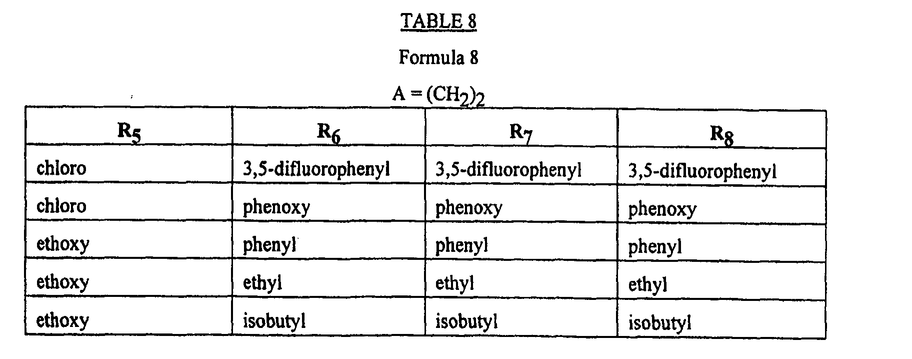

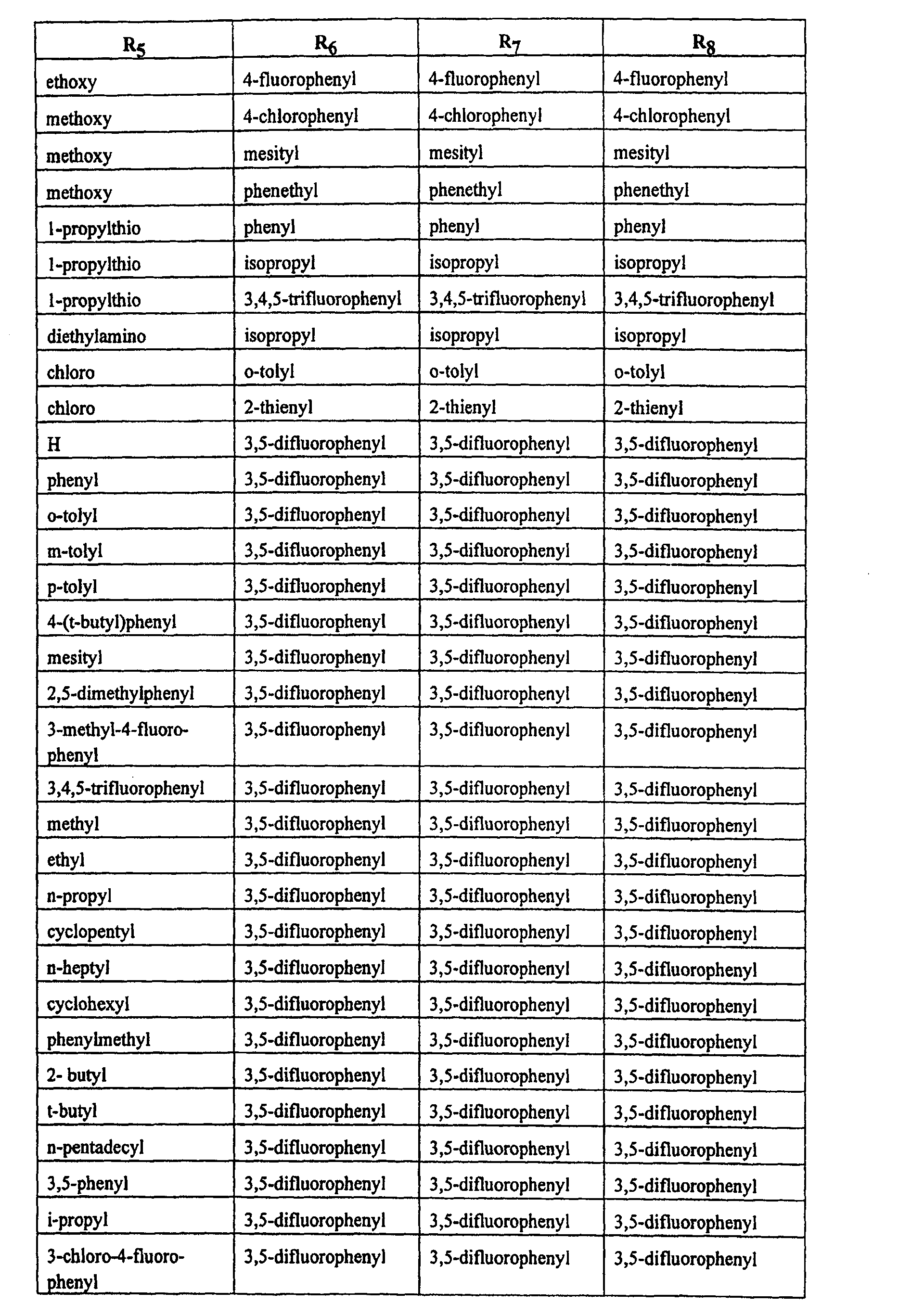

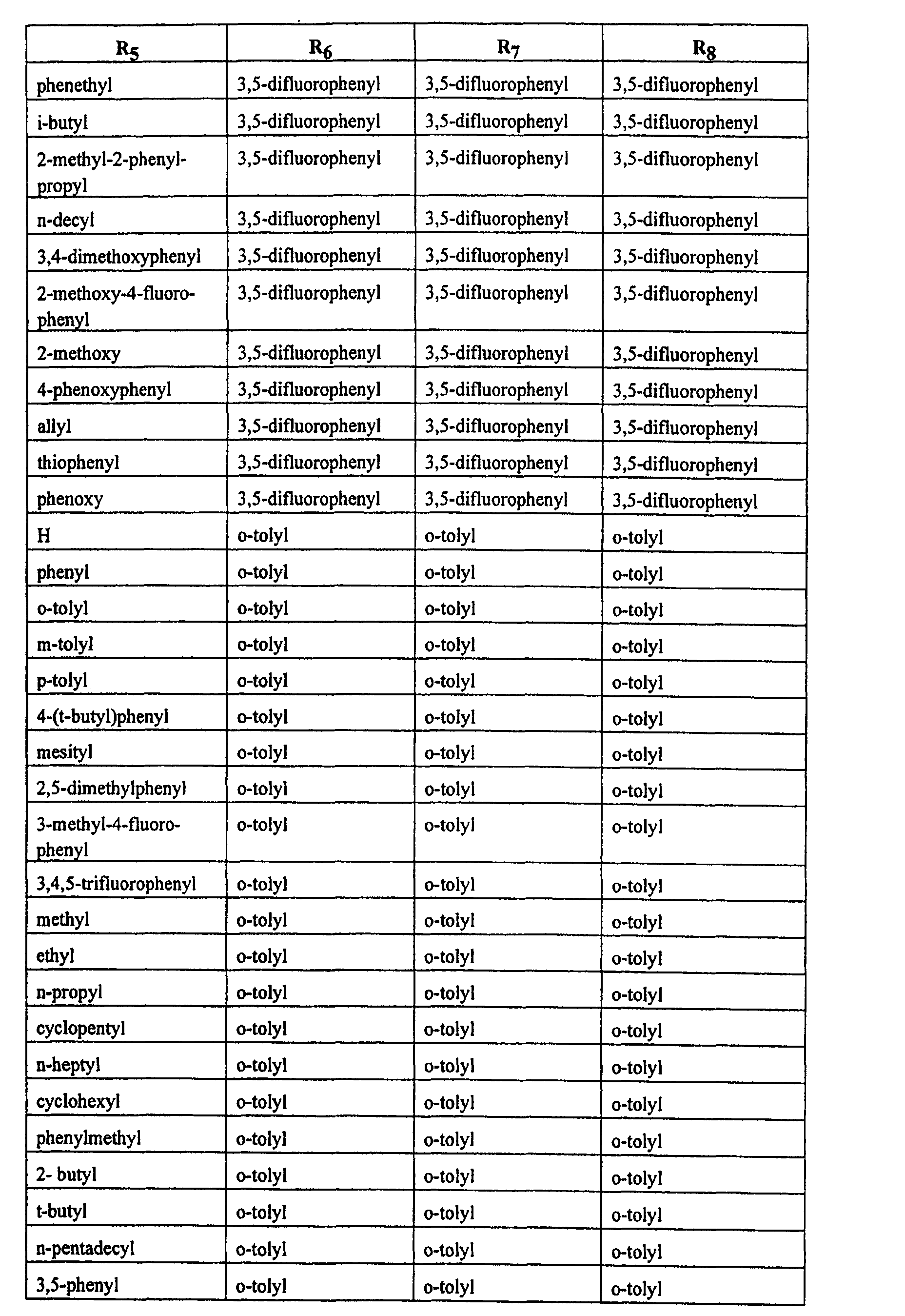

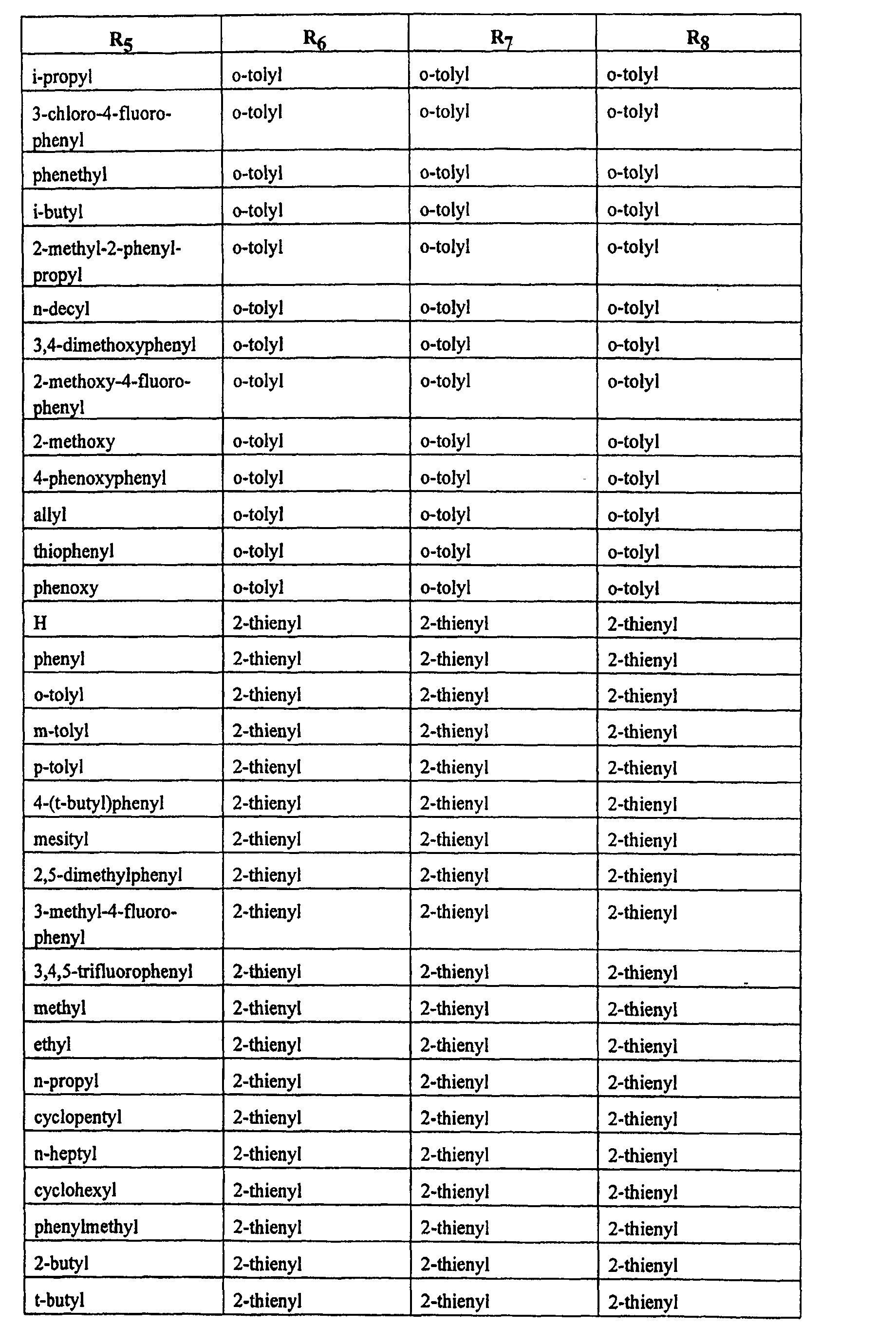

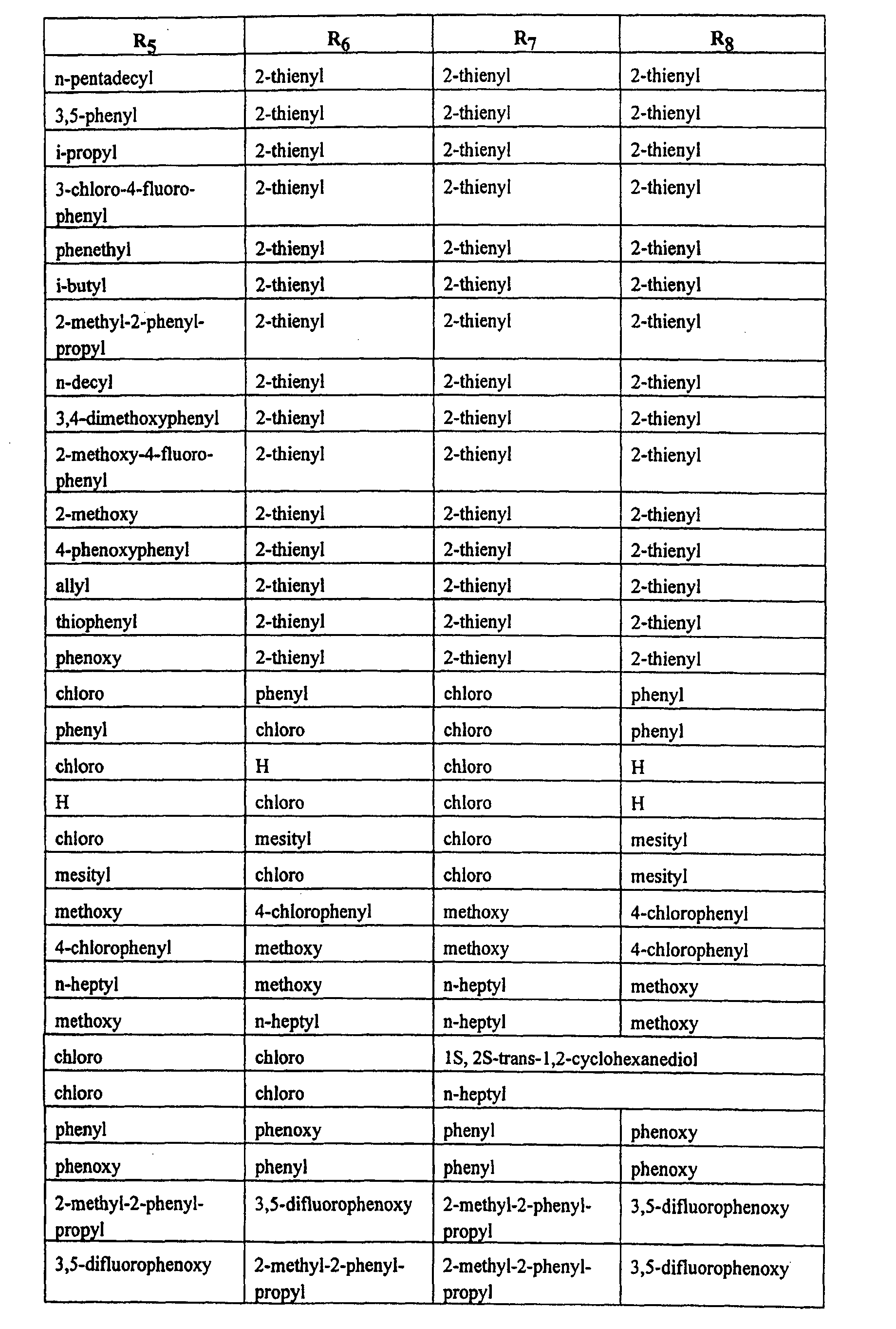

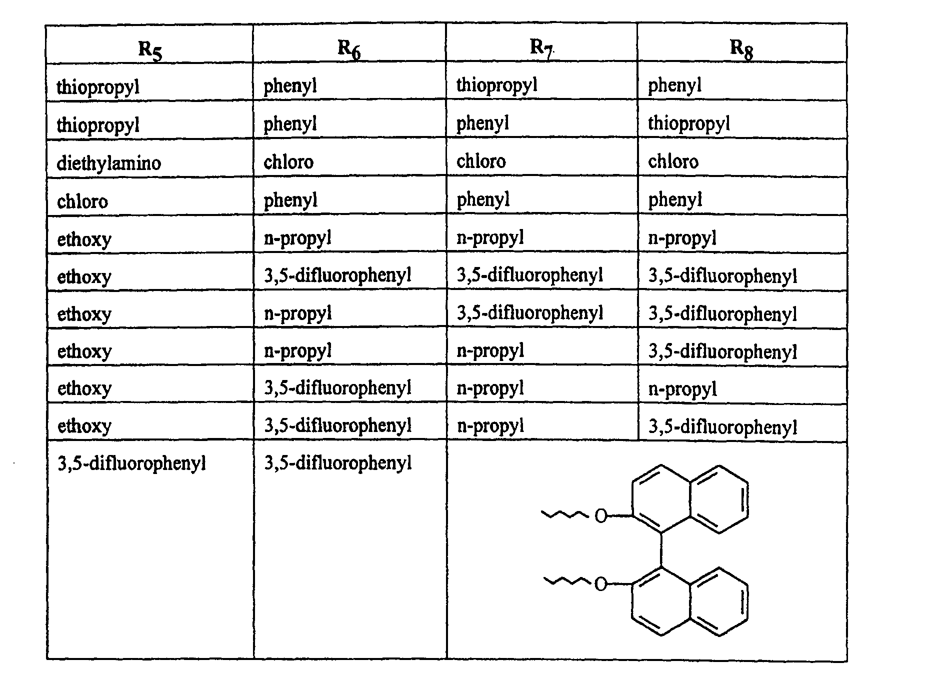

**TABLE 9**

| Formula 9 | | |
|---|---|---|
| **R**_{**7**} | **R**_{**5**} | **R**_{**6**} |
| chloro | phenyl | phenyl |
| thiopropyl | phenyl | phenyl |
| ethoxy | i-propyl | i-propyl |
| i-propyl | i-propyl | i-propy, |
| thiopropyl | mesityl | mesityl |
| thiopropyl | phenyl | i-propyl |
| chloro | cyclohexyl | cyclohexyl |
| chloro | vinyl | phenyl |
| chloro | phenyl | 2-methoxyphenyl |
| chloro | phenyl | 2,4-dimethoxyphenyl |
| chloro | phenyl | 2-methoxyphenyl |
| chloro | phenyl | 2-thiomethyphenyl |
| chloro | phenyl | 2-thienyl |
| chloro | phenyl | 2-thiazole |
| chloro | phenyl | 2-diethyl sulfide |
| chloro | 2-methylthiophenyl | 2-methylthiophenyl |
| chloro | 2-methoxyphenyl | 2-methoxyphenyl |

**TABLE 10**

| Formula 10 A = (CH₂)₂ | | |
|---|---|---|
| **R**_{**7**} | **R**_{**5**} | **R**_{**6**} |
| methyl | methyl | methyl |
| ethyl | ethyl | ethyl |
| n-propyl | n-propyl | n-propyl |
| i-propyl | i-propyl | i-propyl |
| phenyl | phenyl | phenyl |
| 3,5-difluorophenyl | 3,5-difluorophenyl | 3,5-difluorophenyl |
| mesityl | mesityl | mesityl |
| phenyl | phenyl | methyl |
| 2-(diphenylphosphinyl)ethyl | phenyl | phenyl |
| 2-(methylphenylphosphinyl)ethyl | phenyl | methyl |

**TABLE 11**

| Formula 11 A = (CH₂)₂ | | |
|---|---|---|
| **R**_{**6**} | **R**_{**7**} | **R**_{**8**} |
| phenyl | phenyl | H |
| heptyl | | H |
| phenyl | phenyl | mesityl |
| phenethyl | phenethyl | H |

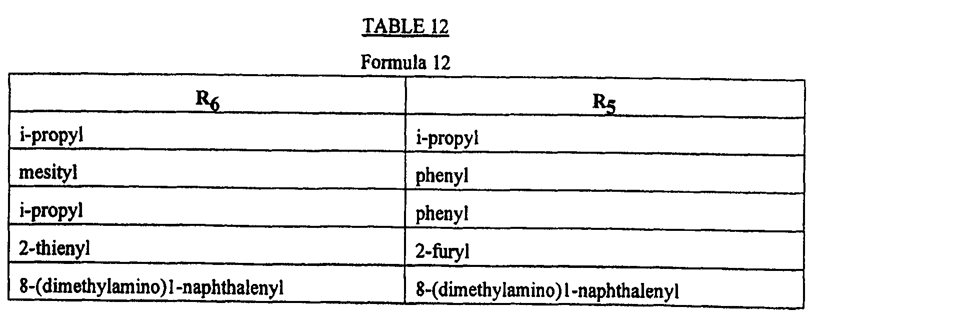

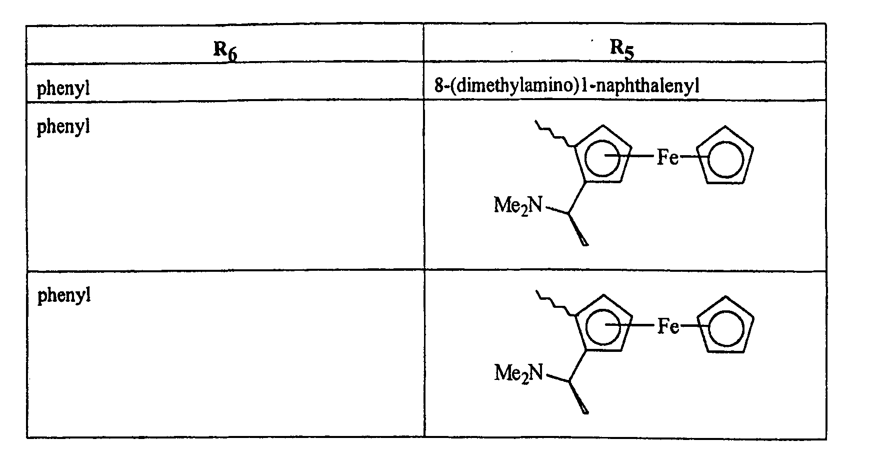

The invention also provides for combinatorial libraries of the phosphine compositions of Formulae 8-12 where A is a divalent group of 1-12 aliphatic or aromatic carbon atoms, linear or branched, optionally containing one or more heteroatoms or organometallic groups; R₅, R₆, R₇, and R₈ are independently selected from the group consisting of hydrogen, hydrocarbyl, substituted hydrocarbyl, heterocycle, organometal, Cl, Br, I, SQ₁, OQ₂, PQ₃Q₄ and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other of R₅, R₆, R₇, and R₈ form a ring. The libraries can be including arrays and any type of mixtures.

Preferred embodiments for these libraries are where A is an optionally-substituted carbon chain of 1-3 carbon atoms; R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other of R₅, R₆, R₇, and R₈ form a ring. More preferred embodiments for Formula 8 are where at least one of R₅, R₆, R₇, and R₈ are different from the rest. Most preferred embodiments are shown in Tables 13-14 below.

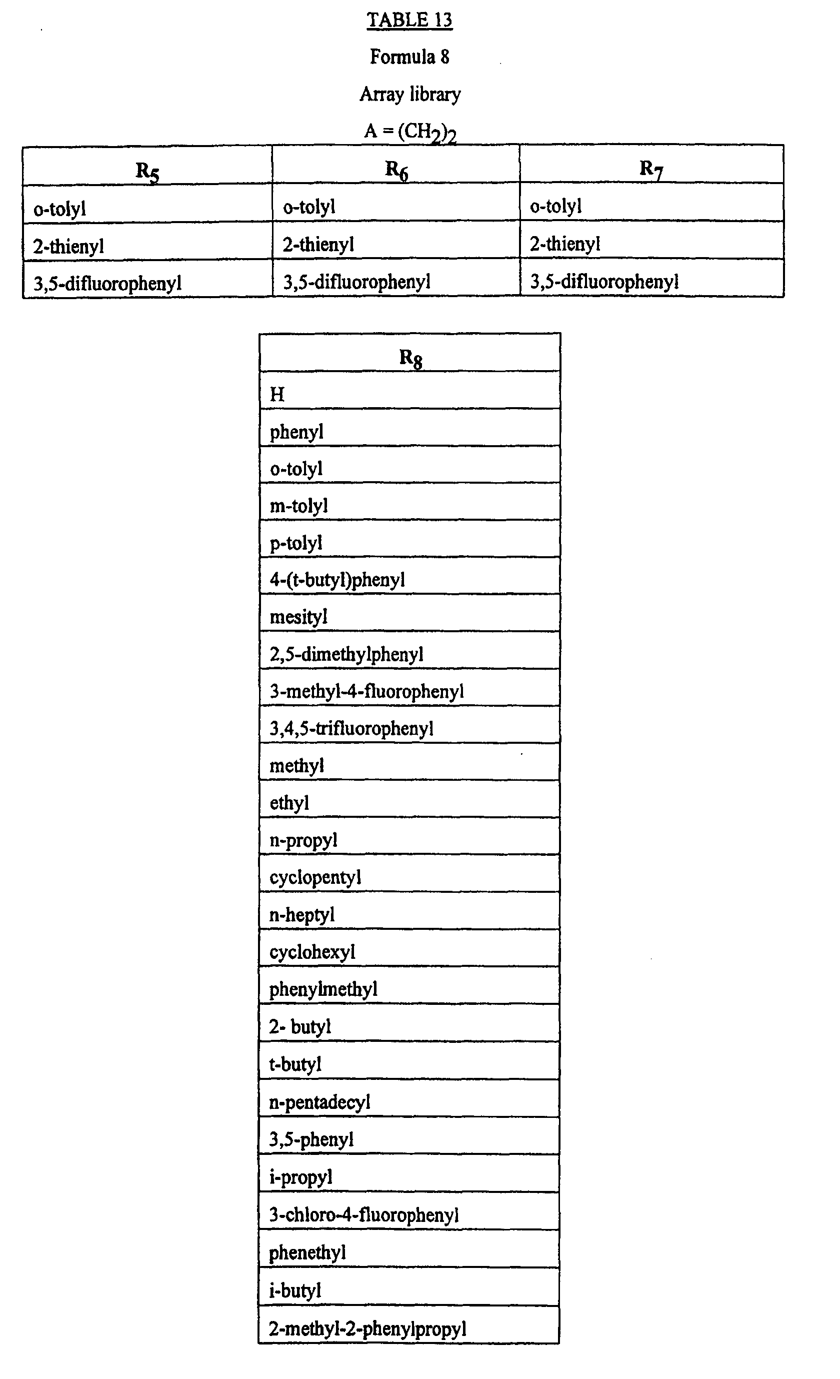

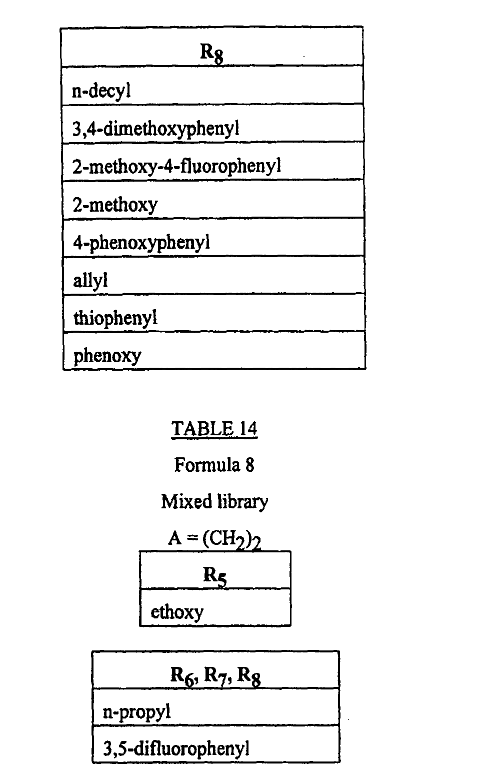

Another aspect of this invention is a process to prepare the phosphine compound of Formulae 8-12 or a combinatorial library of phosphine compounds of Formulae 8-12 where A is a divalent group of 1-12 aliphatic or aromatic carbon atoms, linear or branched, optionally containing one or more heteroatoms or organometallic groups; R₅, R₆, R₇, and R₈ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other of R₅, R₆, R₇, and R₈ form a ring. The process comprises the steps of:
(a) contacting (i) a supported phosphine selected from the group consisting of Formulae 1, 2, 3, 4, 5, 6, and 7 where SS is a solid support wherein at least one P in the phosphine is attached indirectly or directly to the solid support via one or more covalent bonds; A is a divalent group of 1-12 aliphatic or aromatic carbon atoms, linear or branched, optionally containing one or more heteroatoms or organometallic groups; R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring; with (ii) a compound of the Formula ER₉, wherein E is an electrophilic group and R₉ is selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; thereby forming the corresponding compound of Formulae 1, 2, 3, 4, 5, 6, and 7; and
(b) optionally replacing one or more of R₅, R₆, R₇, and R₈ with any R₅, R₆, R₇, and R₈.

To create a library, one or more supported phosphines are reacted with one or more compounds of the Formula ER₉, generating a plurality of phosphine compounds.

A preferred process is where the phosphine or the library of phosphines produced by the above process is substituted asymmetrically; such compounds are difficult to prepare by techniques previously known in the art. The solid support serves essentially as a protecting group, facilitating the attachment of at least one substituent on a phosphorus that is different than the others. The process operates without any complicated separation or purification steps needed.

When the bisphosphine compounds of the present invention are unsymmetrically substituted, whether they are supported or unsupported, two isomers are present, *cis* and *trans,* as illustrated below. 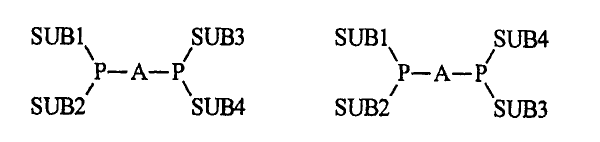 The processes described herein prepare a 50/50 mixture of these two isomers. The isomers can be isolated by standard techniques such as recrystallization.

In the above process, E is any electrophilic group that will cleave the covalent bond attaching the phosphorus to the solid support. The term electrophilic group is a term well recognized in the art and refers to chemical moieties, which can accept a pair of electrons from a nucleophilic group as defined above. Suitable electrophilic groups include -OH, trimethylsilyl, PCl₂ halogens, and protons donated from compounds such as acids, alcohols, or amines.

In the instance where ER₅ is water, the resulting POH group would rearrange to yield to form the compounds of Formula 10, 11, or 12. These compounds can also be formed from any other of Formulae 8-12 via the replacement of one or more of R₅, R₆, R₇, and R₈ with an -OH group using any method known in the art. An equivalent rearrangement occurs when a PSH group is present.

Preferred processes for the preparation of the phosphine compounds or the library of phosphine compounds of the instant invention include those wherein the supported phosphine is selected from the group consisting of Formulae 1A, 2A, 3A, 4A, 5A, 6A, and 7A where Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and L is a divalent linking group covalently attached to Z and to SS, selected from the group consisting of optionally-substituted chains of from 1 to 12 linear, branched, and cyclic carbon atoms; A is an optionally-substituted carbon chain of 1-3 carbon atoms; R₅, R₆, R₇, and R₈ are independently selected from the group consisting ofhydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any of R₅, R₆, R₇, and R₈ can optionally together with any other of R₅, R₆, R₇, and R₈ form a ring.

Also preferred is where E is selected from the group consisting of hydrogen, PCl₂, and SiMe₃, and where R₅ is a halogen.

After cleavage from the solid support, R₅, R₆, R₇, and R₈ may be replaced with any other substituent using any method known in the art, in order to prepare a further range of compounds.

The process is preferably performed under dry, inert atmosphere with dry, deoxygenated solvents. Any solvent is suitable provided that it is inert to all reagents and products. Optimum temperatures are about -80 to about 200 °C, preferably about -80 to about 150 °C.

Preferred versions of the process to prepare the phosphine compounds or the library of phosphine compounds of the instant invention include those where the supported phosphine compound is selected from the group consisting of Formulae 1 and 3 and the corresponding phosphine compound is of Formula 8, the supported phosphine compound is of Formula 2 and the corresponding phosphine compound is of Formula 9; the supported phosphine compound is of Formula 4 and the phosphine compound is of Formula 10, the supported phosphine compound is selected from the group consisting of Formulae 3 and 5 and the phosphine compound is of Formula 11, and the supported phosphine compound is of Formula 2, and the phosphine compound is of Formula 12. More preferred is where Z is selected from the group consisting of optionally-substituted carbon chain of 1-10 carbon atoms, -(NR₄)-, and -O-, A is selected from the group consisting of an optionally-substituted carbon chain of 1-3 carbon atoms and an optionally-substituted carbon ring of 6-12 carbon atoms, R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle, and any of R₅, R₆, R₇, and R₈ can optionally together with any other of R₅, R₆, R₇, and R₈ form a ring.

The phosphorus compounds and libraries described herein, both supported and unsupported, can be utilized as ligands for catalytic compounds.

Another aspect of the instant invention is a coordination compound comprising one or more transition metals complexed to a ligand selected from the group consisting of Formulae 1, 2, 3, 4, S, 6, and 7 where SS is a solid support wherein at least one P in each phosphine is attached indirectly or directly to the solid support via one or more covalent bonds, A is a divalent group of 1-12 aliphatic or aromatic carbon atoms, linear or branched, optionally containing one or more heteroatoms or organometallic groups, R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring.

"Coordination compound" refers to a compound formed by the union of a metal ion (usually a transition metal) with a non-metallic ion or molecule called a ligand or complexing agent.

The transition metals are hereby defined as metals of atomic weight 21 through 83. Preferably, the transition metal is from Periodic Group VIII, hereby defined as Fe, Co, Ni, Ru, Rh, Pd, Os, Ir, and Pt. Preferred is Rh. The complex can be made by any synthetic method known in the art, either through direct reaction or via the use of a transition metal precursor. Many of these techniques are described in Hartley, *ibid.*

A preferred embodiment for the coordination compound is where SS is selected from the group consisting of polyolefins, polyacrylates, polymethacrylates, and copolymers thereof, and wherein the transition metals are selected from Periodic Group VIII.

Another preferred embodiment of the coordination compound is where the ligand is selected from the group consisting of Formulae 1A, 2A, 3A, 4A, 5A, 6A, and 7A where Z is a divalent attaching group covalently attached to at least one phosphorus in the phosphine, selected from the group consisting of hydrocarbylene, substituted hydrocarbylene, -O-, -S-, and -NR₄- where R₄ is selected from the group consisting of an optionally-substituted hydrocarbyl and halogen, and L is a divalent linking group covalently attached to Z and to SS, selected from the group consisting of optionally-substituted chains of from 1 to 12 linear, branched, and cyclic carbon atoms.

More preferred is where the ligand is Formula 1A where SS is polystyrene, L is -CH₂-, A is selected from the group consisting of an optionally-substituted carbon chain of 1-3 carbon atoms and an optionally-substituted carbon ring of 6-12 carbon atoms, Z is selected from the group consisting of an optionally-substituted carbon chain of 1-10 carbon atoms, -(NR₄)-, and -0-, R₄ is selected from the group consisting of chloro, cyclohexyl, n-propyl, i-propyl, n-butyl, phenyl and t-butyl, R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl or alkyl ring, and the transition metal is Rh. Most preferred is where the ligand is polymer-bound 1-(1,1-di-n-propylphosphino)-2-n-propyl phospinioethane.

Most preferred is where the ligand is Formula 1A, L is (CH₂), Z is N(t-butyl), A is (CH₂)₂, R₁ is n-propyl, R₂ is n-propyl, R₃ is n-propyl, and M is Rh.

Another aspect of the invention is a combinatorial library of coordination compounds comprising one or more transition metals complexed to one or more ligands selected from the group consisting of Formulae 1, 2, 3, 4, 5, 6, and 7 where SS is a solid support wherein at least one P in each phosphine is attached indirectly or directly to the solid support via one or more covalent bonds, A is a divalent group of 1-12 aliphatic or aromatic carbon atoms, linear or branched, optionally containing one or more heteroatoms or organometallic groups, R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and R₂ and R₃ together, R₁ and R₃ together, or R₁ and R₂ together can optionally form a ring.

A preferred embodiment is where SS is selected from the group consisting of polyolefins, polyacrylates, polymethacrylates, and copolymers thereof, and wherein the transition metals are selected from Periodic Group VIII.

Also preferred is where the ligand is selected from the group consisting of Formulae 1A, 2A, 3A, 4A, 5A, 6A, and 7A where Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen, and L is a divalent linking group covalently attached to Z and to SS, selected from the group consisting of optionally-substituted chains of from 1 to 12 linear, branched, and cyclic carbon atoms.

More preferred is where the ligand is Formula 1A, SS is polystyrene, L is -CH₂-, A is selected from the group consisting of an optionally-substituted carbon chain of 1-3 carbon atoms and an optionally-substituted carbon ring of 6-12 carbon atoms, Z is selected from the group consisting of an optionally-substituted carbon chain of 1-10 carbon atoms, -(NR₄)-, and -O-, R₄ is selected from the group consisting of chloro, cyclohexyl, n-propyl, i-propyl, n-butyl, phenyl, and t-butyl, R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring, and the transition metal is Rh.

Another aspect of the instant invention are novel combinatorial libraries of coordination compounds comprising one or more transition metals complexed to one or more ligands selected from the group consisting of Formulae 8, 9, 10, 11, and 12 where A is a divalent group of 1-12 aliphatic or aromatic carbon atoms, linear or branched, optionally containing one or more heteroatoms or organometallic groups, R₅, R₆, R₇, and R₈ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and any of R₅, R₆, R₇, and R₈ can optionally together with any other of R₅, R₆, R₇, and R₈ form a ring.

Preferred is the combinatorial library where A is an optionally-substituted carbon chain of 1-3 carbon atoms, R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle, and any of R₅, R₆, R₇, and R₈ can optionally together with any other of R₅, R₆, R₇, and R₈ form a ring, and the transition metals are selected from Periodic Group VIII.

Also preferred is where the ligands are of Formula 8, and where at least one of R₅, R₆, R₇, and R₈ are different from the rest.

More preferred is where A is an optionally-substituted carbon chain of 1-3 carbon atoms, R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle, and any of R₅, R₆, R₇, and R₈ can optionally together with any other of R₅, R₆, R₇, and R₈ form a ring, and the transition metal is Pd.

Most preferred is where the ligand is of Formula 8, A = (CH₂)₂, and where R₅, R₆, R₇, R₈, and M are shown below:

| R₅ | R₆ | R₇ | R₈ | M |
|---|---|---|---|---|
| thiopropyl | phenyl | thiopropyl | phenyl | Pd |
| thiopropyl | phenyl | phenyl | thiopropyl | Pd |

The phosphine coordination compounds and libraries of phosphine coordination compounds can be prepared by any method known in the art, but preferably by those described herein.

Another aspect of the instant invention is a novel reaction to prepare coumarin, useful as an intermediate in pharmaceutical preparations, by contacting salicylaldehyde with an acrylate of the formula 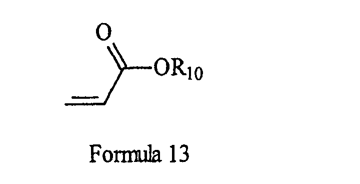 wherein R₁₀ is an alkyl group of 1-6 carbons. Preferred is where R₁₀ is n-butyl. Salicyladehyde is converted via decarbonylation and insertion of an acrylate, followed by ring closure, as shown in Scheme 3.

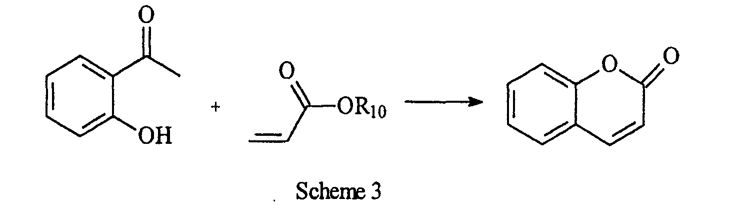

A preferred process is where the reaction is performed in the presence of a catalytic amount of the novel, phosphine coordination compounds of the instant invention, described above. Preferred is where the coordination compounds comprise a ligand selected from the group consisting of Formulae 1-7. Most preferred is where the metal is Rh, and the ligand is of Formula 1A where wherein SS is polystyrene, L is -CH₂-, A is selected from the group consisting of an optionally-substituted carbon chain of 1-3 carbon atoms and an optionally-substituted carbon ring of 6-12 carbon atoms, Z is selected from the group consisting of an optionally-substituted carbon chain of 1-10 carbon atoms, -(NR₄)-, and -0-, R₄ is selected from the group consisting of chloro, cyclohexyl, n-propyl, i-propyl, n-butyl, phenyl, and t-butyl, R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring. Most preferred is where SS is polystyrene, A is (CH₂)₂, Z is N(t-butyl), and R₁, R₂, and R₃ are n-propyl.

Any solvent is suitable for this process provided that it is inert to all reagents and products. Optimum temperatures are about -80 to about 200 °C, preferably about -80 to about 150 °C.

### EXAMPLES

The following non-limiting Examples are meant to illustrate the invention but are not intended to limit it in any way.

### Materials and Methods

All manipulations of air-sensitive materials were carried out with rigorous exclusion of oxygen and moisture in flame-dried Schlenk-type glassware on a dual manifold Schlenk line, interfaced to a high-vacuum (10⁻⁴-10⁻⁵ Torr) line, or in a nitrogen-filled Vacuum Atmospheres glovebox with a high-capacity recirculator (1-2 ppm of O₂). Before use, all solvents were distilled under dry nitrogen over appropriate drying agents (such as sodium benzophenone ketyl and metal hydrides except for chlorinated solvents). Deuterium oxide, THF-D₈, C₆D₆ and chloroform-d were purchased from Cambridge Isotopes (Andover, MA). All organic and inorganic starting materials were purchased from Aldrich Chemical Co. (Milwaukee WI), Farchan Laboratories Inc. (Gainesville, FL), Strem Chemicals (Newburyport, MA), Calbiochem-NovaBiochem Corp. (San Diego, CA), Rieke Metals, Inc. (Lincoln, NE), or Lancaster Synthesis Inc. (Windham, NH), and when appropriate were distilled prior to use. The substrates zirconium metallacycles 2,3,4,5-tetramethylphospholylchloride, 2,3,4,5-tetraethylphospholyl-chloride, and 1,7-di-tert-butyl-1, 6-bicyclo[3,3]heptadiynylphospholylchloride were synthesized via modifications of literature methods (Fagan et al., *J. Am. Chem. Soc.* 1988,*110*, *pp*. 2310-2312).

### Physical And Analytical Measurements

NMR spectra were recorded on either a Nicolet NMC-300 wide-bore (FT, 300 MHz,¹H; 75 MHz, ¹³C, 121 MHz ³¹P), or GE QM-300 narrow-bore (FT, 300 MHz, ¹H) instrument. Chemical shifts (δ) for ¹H, ¹³C are referenced to internal solvent resonances and reported relative to SiMe₄. ³¹P NMR shifts are reported relative to external phosphoric acid. Analytical gas chromatography was performed on a Varian Model 3700 gas chromatograph with FID detectors and a Hewlett-Packard 3390A digital recorder/integrator using a 0.125 in. i.d. column with 3.8% w/w SE-30 liquid phase on Chromosorb W support. GC/MS studies were conducted on a VG 70-250 SE instrument with 70 eV electron impact ionization.

### EXAMPLE 1

### Reaction of Merrifield Resin with tert-Butylamine

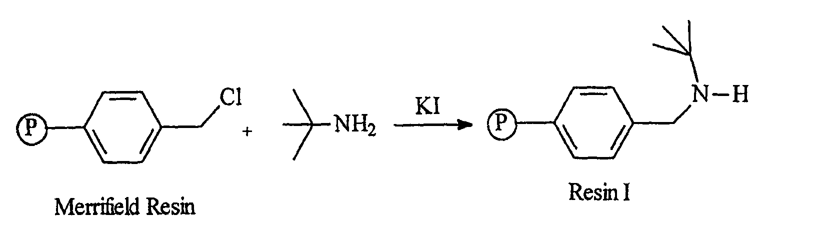

A solution of *t*-butylamine (70 g, 0.95 moles) and KI (0.3 g, 2 mmol) in 800 mL of THF was treated with Merrifield resin (chloromethylpolystyrene-divinylbenzene crosslinked with 2% divinylbenzene, 50 g, 0.89 mmol/g, 44.5 mmol) while stirring at room temperature for 30 min. The suspension was then refluxed for 48 h before the solution was filtered off. The resulting resin was washed sequentially with water (3 x 250 mL), THF (3 x 150 mL), hexane (3 x 200 mL). After drying *in vacuo* overnight, 51 g of the resin was obtained (98% yield according to N elemental analysis, anal. calculated for polymer-NHC(Me)₃: N, 1.25. Found: N,1.22). The disappearance of ¹H resonances of polymer-Ph-CH₂-Cl (δCH₂= ~ 4.5 ppm) and the appearance of ¹H resonances of polymer-Ph-CH₂-NHC(Me)₃ (δCH₂ = ~ 3.7 ppm) indicates the complete transformation of the chloromethyl groups to tert-butylaminomethyl groups. Hereafter, this will be referred to as Resin I.

### EXAMPLE 2

### Reaction of tertiary-butylaminomethyl Merrifield Resin and 1,2-bis(dichlorophosphino)ethane

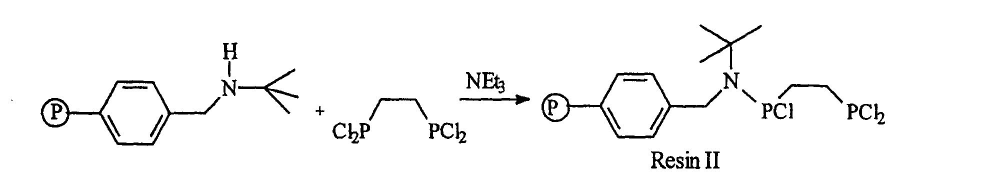

A solution of Cl₂PCH₂CH₂PCl₂ (15 g, 64.7 mmol) in 200 mL of THF was treated slowly with Resin I (15 g, 0.72 mmol/g, 10.8 mmol) while stirring at room temperature for a period of 30 min. before Et₃N (5 g, 49 mmol) was added. The resulting suspension was stirred at room temperature overnight before the solution was filtered off. The resin was sequentially washed with hexane (2 x 50 mL), CH₂Cl₂ (3 x 80 mL), and hexane (2 x 30 mL). The resulting resin was dried *in vacuo* overnight. ³¹P NMR (122 MHz, C₆D₆): δ 195, 152 ppm. Hereafter this will be referred to as Resin II.

### EXAMPLE 3

Reaction of 1,2-bis(dichlorophosphino)ethane with 1% divinylbenzene crosslinked polystyrene containing 0.80 mmol/g of hydroxymethyl substitution.

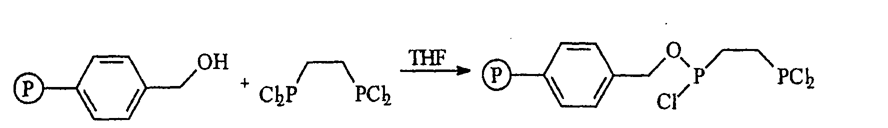

A 500 mL round bottomed flask with a magnetic stirrer was charged with 10.0 g of Cl₂PCH₂CH₂PCl₂ and 100 mL of tetrahydrofuran. In a 300 mL beaker was mixed 25 g of 1% divinylbenzene cross-linked polystyrene with a loading of hydroxymethyl groups of 0.80 mmol/g (NovaBiochem 01-64-0110), 150 mL of tetrahydrofuran, and 3.00 g of 8.08 g of triethylamine. The mixture was added slowly to the flask containing the Cl₂PCH₂CH₂PCl₂ and was stirred for 4.0 h at room temperature. The resin was isolated by filtration, was washed once with 100 mL of tetrahydrofuran, five times with 100 mL of hexane, four times with 100 mL portions of dichloromethane, and twice with 100 mL portions of hexane. The resin was then dried under high vacuum. ³¹P{¹H} NMR (122 MHz, C₆D₆ solvent): δ 201 (broad singlet, 1 P), 194 (broad singlet, 1 P).

### EXAMPLE 4

### Reaction of Merrifield resin with 1,5-bis(bromomagnesium)pentane followed by reaction with 1,2-bis(dichlorophosphino)ethane

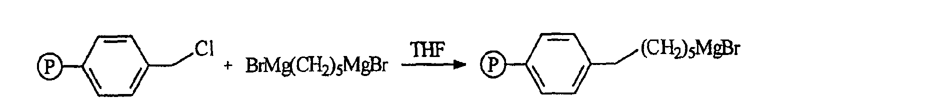

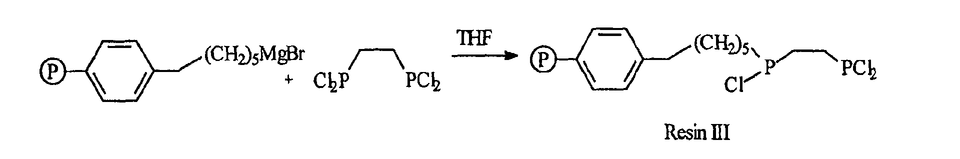

A two-necked 2 L round-bottomed flask with magnetic stirrer was charged with 500 mL (250 mmol) of BrMg(CH₂)₅MgBr (0.5 M in tetrahydrofuran) and 250 mL of tetrahydrofuran. To this was added while stirring 50 g (50 mmol) of Merrifield Resin (polystyrene 1% crosslinked with divinylbenzene, and 1.0 mmol/g of chloromethyl group substitution) in small portions over 30-40 minutes. The reaction mixture was stirred overnight at room temperature, and was then refluxed for 2 d. After cooling, the resin was isolated by filtration, was washed five times sequentially with 300 mL portions of tetrahydrofuran and 300 mL of hexane. This was then dried *in vacuo.* A one liter round-bottomed flask with a magnetic stirring bar was charged with 1,2-bis(dichlorophosphino)-ethane (46.4 g, 200 mmol) and tetrahydrofuran 500 mL. The resin was added to this solution, and the reaction mixture was stirred at room temperature overnight. The resin was collected by filtration and was washed five times with 300 mL portions of tetrahydrofuran, and then five times with 300 mL of hexane. It was then dried *in vacuo.* Hereafter, this will be referred to as Resin III. ³¹P{¹H} NMR (122 MHz, C₆D₆ solvent): δ 107 (broad singlet); 197 (broad singlet). In some cases integration of these two resonances indicated the phosphorus reagent crosslinked some of the alkyl linking chains of the polymer to the degree of approximately 20%.

### EXAMPLE 5

### Reaction of Resin II with Grignard Reagents

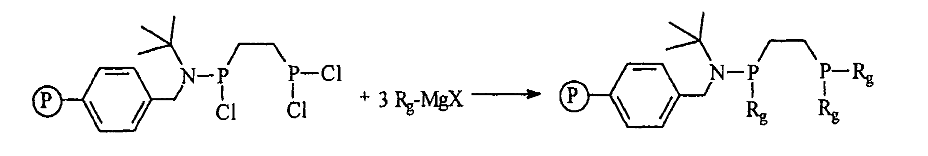

To each of sixteen 20 mL glass vials was added 1.35 g of Resin II. To each of these vials was added the Grignard solution in the amount and concentration indicated in Table 2A below, and the volume in each vial was brought up to nearly the top of the vial by addition of tetrahydrofuran. The capped vials were agitated on an orbital shaker for 24 h, and each resin was collected by filtration. Each resin was washed twice with 10 mL of tetrahydrofuran, twice with 10% water/tetrahydrofuran, twice with 10 mL of tetrahydrofuran, and twice with 10 mL of hexane. The resins were then dried *in vacuo* and analyzed by ³¹P NMR (121 MHz, C₆D₆). Table 2A indicates the Grignard reagent and the molarity used, solvent, volume of reagent, yield, and NMR analysis of resulting products.

**TABLE 2A**

| Ex. | R_{g}-MgX | MOLARITY | SOLVENT | VOL. (mL) | YIELD (g) | ³¹P δ |
|---|---|---|---|---|---|---|
| 5-A | (4-methylphenyl)MgBr | 1.0 | Ether | 9 | 1.42 | 46 |
| 5-B | (4-chlorophenyl)MgBr | 1.0 | Ether | 9 | 1.54 | 45 |
| 5-C | (4-tert-butylphenyl)MgBr | 2.0 | Ether | 4.5 | 1.57 | 46 |
| 5-D | (ethynyl)MgBr | 0.5 | THF | 18 | 1.74 | 46 |
| 5-E | (propynyl)MgBr | 0.5 | THF | 18 | 1.33 | - 46 |
| 5-F | (4-fluorophenyl)MgBr | 2.0 | Ether | 4.5 | 1.52 | 45 |
| 5-G | (vinyl)MgBr | 1.0 | THF | 9 | 1.21 | 46 |
| 5-H | (cyclopentyl)MgBr | 2.0 | Ether | 4.5 | 1.37 | 59 |
| 5-1 | (decyl)MgBr | 1.0 | Ether | 9 | 1.51 | 47 |
| 5-J | (3,4-difluorophenyl)MgBr | 0.5 | THF | 18 | 1.52 | 46 |
| 5-K | (4-n-butylphenyl)MgBr | 0.5 | THF | 18 | 1.51 | 46 |
| 5-L | (3-fluoro-2-methylphenyl)MgBr | 0.5 | THF | 18 | 1.63 | 37 |
| 5-M | (4-methylthiophenyl)MgBr | 0.5 | THF | 18 | 1.53 | 46 |
| 5-N | (3-methoxyphenyl)MgBr | 0.5 | THF | 18 | 1.52 | 48 |
| 5-O | (3-fluoro-4-methylphenyl)MgBr | 0.5 | THF | 18 | 1.51 | 46 |
| 5-P | (4-methoxyphenyl)MgBr | 0.5 | THF | 18 | 1.49 | 44 |

### EXAMPLE 6

### Reaction of Resin II with bis(cyclopentadienyl)-1,2,3,4-tetramethylbuta-1,4-dienylzirconium(IV)

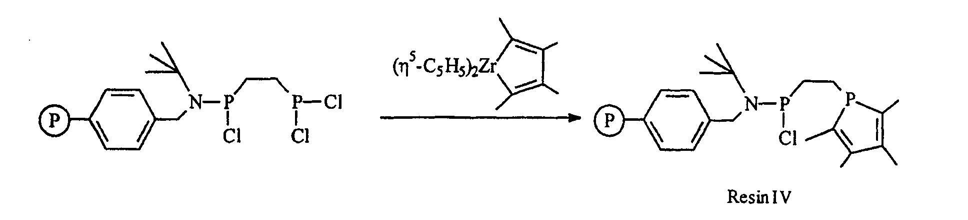

Resin II (5 g) was reacted with 2.0 g of bis(cyclopentadienyl)-1,2,3,4-tetramethylbuta-1,4-dienylzirconium(IV) in anhydrous dichloromethane at room temperature. The resin was collected by filtration, was washed twice with 100 mL of hexane, and then three times with 100 mL of dichloromethane. It was then *dried in vacuo.* Hereafter, this will be referred to as Resin IV. ³¹P{¹H} NMR (122 MHz, CDCl₃ solvent): δ 14 (broad singlet); 160 (broad singlet).

### EXAMPLE 7

Reaction of Resin II with bis(cyclopentadienyl)-dimethyl-1,4-dienylzirconium(IV)

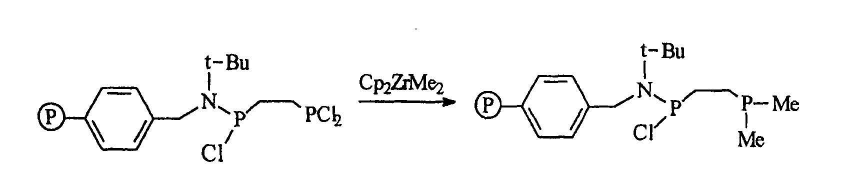

A suspension of Resin II (0.9 g, ~1.24 mmol/g, 1.1 mmol) in 100 mL of THF was treated with (η⁵-C₅H₅)₂ZrMe₂ (0.70 g, 2.8 mmol) at room temperature for 8 h before the solution was filtered off. The resulting resin was washed with THF (3 x 30 mL), CH₂Cl₂ (2 x 30 mL) and hexane (2 x 20 mL). The resin was dried *in vacuo* overnight. The polymer-supported 1-(1,1-dimethylphosphino)-2-chlorophosphinoethane, 0.9 g, was obtained. ³¹P NMR (122 MHz, C₆D₆): δ 155, -47 ppm.

### EXAMPLE 8

### Reaction of Resin IV with 2,4,6-trimethylphenylmagnesium bromide

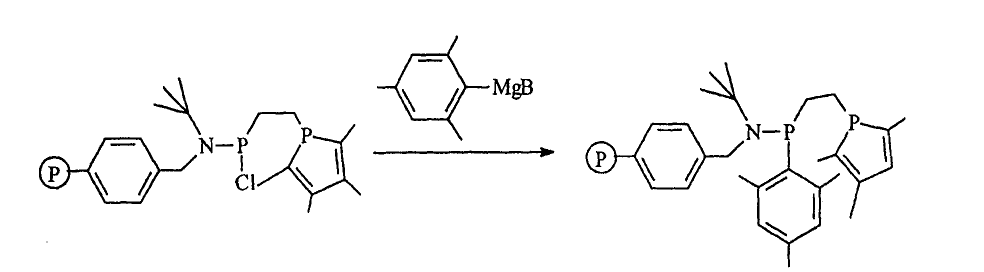

Resin IV was reacted with an excess of 1.0 M solution of 2,4,6-trimethylphenylmagnesium bromide in ether. The resin was collected by filtration, and was washed twice with 100 mL portions of tetrahydrofuran, twice with 100 mL portions of hexane, twice with 150 mL portions of dichloromethane, once with 5% water/tetrahydrofuran, and finally twice with 100 mL portions of dichloromethane. ³¹P {¹H} NMR (122 MHz, CDCl₃ solvent): δ 17 (broad singlet); 49 (broad singlet).

### EXAMPLE 9

### Reaction of Resin III with Grignard Reagents

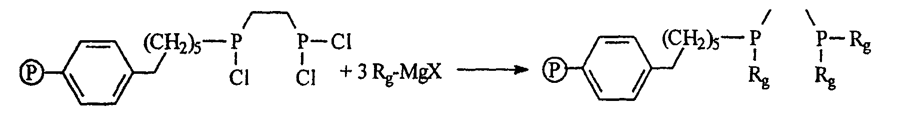

Thirty-two 20 mL glass vials were charged 1.0 g (1.0 mmol) of Resin III. To each vial was added 9.0 mmol of a Grignard reagent as listed in the Table 3A below. The reactions were shaken overnight. Then the resin in each vial was collected by filtration, and washed with in order with the following solvents: tetrahydrofuran (2 x 10 mL), hexane (2 x 10 mL), 10% water/tetrahydrofuran (12 mL), tetrahydrofuran (2 x 10 mL), hexane (2 x 10 mL), tetrahydrofuran (2 x 10 mL), and hexane (2 × 10 mL). Each sample was then dried by flushing with nitrogen. The yield of each isolated resin was in the range 1.02-1.110 g. All of the resins had ³¹P NMR peaks in the range 50 to -50 ppm relative to external phosphoric acid which indicated the expected products. Table 3A indicates the Grignard reagent, molarity used, and volume of reagent.

Example 9-FF was prepared using the above procedure, except that (2-thiophenyl)Li was used in place of a Grignard reagent.

**TABLE 3A**

| Ex. | R_{g}-MgX | MOLARITY | VOL. (mL) |
|---|---|---|---|
| 9-A | (methyl)MgBr | 3 | 3 |
| 9-B | (ethyl)MgBr | 2 | 4.5 |
| 9-C | (n-propyl)MgBr | 2 | 4.5 |
| 9-D | (isopropyl)MgBr | 2 | 4.5 |
| 9-E | (butyl)MgBr | 2 | 4.5 |
| 9-F | (iso-butyl)MgBr | 2 | 4.5 |
| 9-G | (2-butyl)MgCl | 2 | 4.5 |
| 9-H | (cyclopentyl)MgBr | 2 | 4.5 |
| 9-1 | (cyclohexyl)MgBr | 2 | 4.5 |
| 9-J | (dodecyl)MgBr | 1 | 9 |
| 9-K | (pentadecyl)MgBr | 0.5 | 18 |
| 9-L | (phenyl)MgBr | 3 | 3 |
| 9-M | (2-methyl-2-phenylpropyl)MgCl | 0.5 | 18 |
| 9-N | (ordio-tolyl)MgCl | 1 | 9 |
| 9-O | (meta-tolyl)MgCl | 1 | 9 |
| 9-P | (para-tolyl)MgBr | 1 | 9 |
| 9-Q | (4-tert-butylphenyl)MgBr | 2 | 4.5 |
| 9-R | (4-fluorophenyl)MgBr | 2 | 4.5 |
| 9-S | (3-bis(trimethylsilyl)aminophenyl)MgCl | 1 | 9 |
| 9-T | (2,6-dimethylphenyl)MgBr | 1 | 9 |
| 9-U | (3,4-difluorophenyl)MgBr | 0.5 | 18 |
| 9-V | (3-fluoro-2-methylphenyl)MgBr | 0.5 | 18 |
| 9-W | (4-methylthiophenyl)MgBr | 0.5 | 18 |
| 9-X | (3-methoxyphenyl)MgBr | 0.5 | 18 |
| 9-Y | (3-fluoro-4-methylphenyl)MgBr | 0.5 | 18 |
| 9-Z | (2-methoxyphenyl)MgBr | 0.5 | 18 |
| 9-AA | (4-methoxyphenyl)MgBr | 0.5 | 18 |
| 9-BB | (4-phenoxyphenyl)MgBr | 0.5 | 18 |
| 9-CC | (2,4-difluorophenyl)MgBr | 0.5 | 18 |
| 9-DD | (2-naphthyl)MgBr | 0.25 | 36 |
| 9-EE | (4-dimethylaminophenyl)MgBr | 0.5 | 18 |
| 9-FF | (2-thiophenyl)Li | 1 | 9 |

### EXAMPLE 10

### Reaction of Resin I with 1,2-bis(dichlorophosphino)benzene

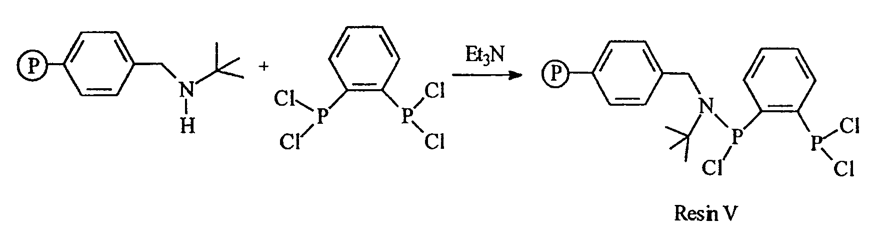

Polymer-supported 1-(1,1-dichlorophosphino)-2-chlorophosphinobenzene was prepared using the procedure for Resin II with 1,2-bis(dichlorophosphino)-benzene used in place of 1,2-bis(dichlorophosphino)ethane. 1,2-bis(dichlorophosphino)benzene (12 g, 42.9 mmol) in 300 mL of THF was treated slowly with Resin I (10 g, 0.72 mmol/g, 7.2 mmol) and Et₃N (4.4 g, 43.5 mmol). ³¹P NMR (122 MHz, C₆D₆): δ 162, 124 ppm. Hereafter this will be referred to as Resin V.

### EXAMPLE 11

### Reaction of Resin V with 4-methylphenylmagnesium bromide

A suspension of Resin V (0.6 g, ~0.72 mmol, 0.43 mmol) in 15 mL of THF was treated with 4-methylphenylmagnesium bromide (0.5 M solution in diethylether, 5.1 mmol) at room temperature for 5 min. The resulting mixture was stirred for 2 h before the solution was filtered off and the resin was washed with H₂O (2 x 10 mL), CH₂Cl₂ (2 x 20 mL) and hexane (3 x 20 mL). After drying *in vacuo,* ca. 0.6 g of the polymer-bound 1-[1,1-di(4-methylphenyl)phosphino]-2-(4-methylphenyl)phosphinobenzene was obtained. ³¹P NMR (122 MHz, C₆D₆): δ 43, -13 ppm.

### EXAMPLE 12

### Reaction of Resin II with 3,5-difluorophenylmagnesium bromide

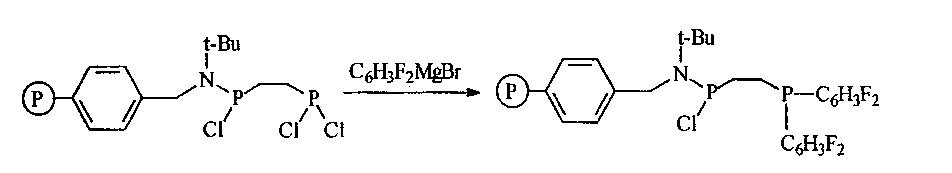

A suspension of Resin II (2 g, ~0.72 mmol/g, 1.44 mmol) in 100 mL of THF was treated with 3,5-difluorophenylmagnesium bromide (0.5 M in diethyl ether, 4.3 mmol) at room temperature for 8 h before the solution was filtered off. The resulting resin was washed with THF (3 x 15 mL), CH₂Cl₂ (2 x 20 mL) and hexane (2 x 20 mL). The resin was dried *in vacuo* overnight. The polymer-supported 1-[di(3,5-difluorophenyl)phosphino]-2-(chlorophosphino)ethane, 2.0 g, was obtained. ³¹P NMR (122 MHz, C₆D₆): δ 155, -7.4 ppm.

### EXAMPLE 13

### Reaction of Resin I with mono-substituted 1,2-bis (dichlorophosphino) ethane

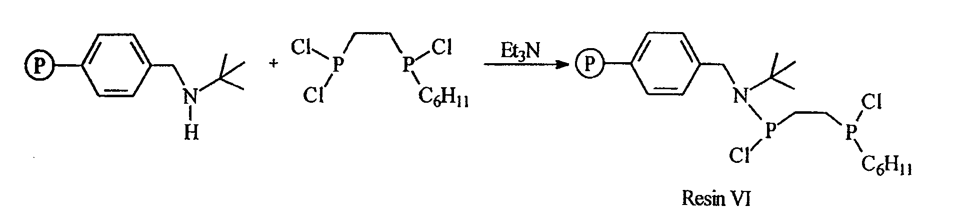

A solution of Cl₂PCH₂CH₂PCl₂ (3.0 g, 12.6 mmol) in 200 mL of THF was treated slowly with cyclohexylzinc bromide (0.5 M in diethyl ether, 12.5 mmol) while stirring at 0 °C for a period of 30 min. before the resulting solution was warmed to room temperature and stirred overnight. The resulting mixture of cyclohexyl-substituted diphosphines were treated slowly with Resin I (2.0 g, 0.72 mmol/g, 1.44 mmol) for 10 min. before Et₃N (0.73 g, 7.2 mmol) was added. The resulting suspension was stirred at room temperature overnight before the solution was filtered off. The resin was washed sequentially with hexane (2 x 30 mL), CH₂Cl₂ (3 x 30 mL), hexane (2 x 20 mL), and dried *in vacuo* overnight. ³¹P NMR (122 MHz, C₆D₆): δ 155, 120 ppm. Hereafter this will be referred to as Resin VI.

### EXAMPLE 14

### Reaction of Resin II with Zr(OCH₂CH₂CH₃)₄

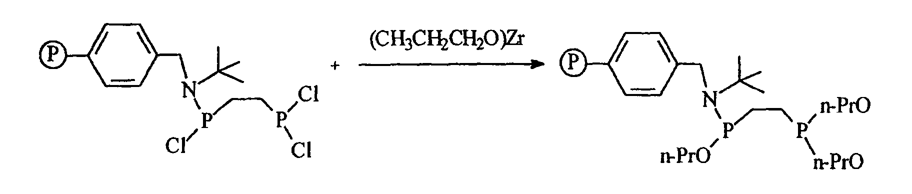

A suspension of Resin II (10 g, 1.24 mmol/g, 12.4 mmol) in 250 mL of THF was treated slowly with Zr(OCH₂CH₂CH₃)₄ (6.7 g, 20.5 mmol). The resulting mixture was stirred at room temperature for 4 h before the solution was filtered off and the resin was washed with THF (3 x 50 mL), H₂O (2 x 10 mL), hexane (3 x 30 mL). The polymer-bound -P(OCH₂CH₂CH₃)CH₂CH₂P(OCH₂CH₂CH₃)₂ 10 g, was obtained. ³¹P NMR (122 MHz, C₆D₆): δ 183, 138 ppm.

### EXAMPLE 15

### Reaction of Chloromethylated Resin II with Lithium Phenoxide

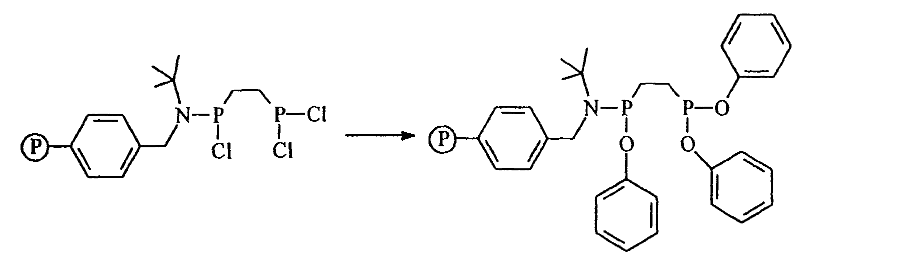

A resin analogous to Resin II was prepared as follows. To 10 g of 2% divinylbenzene cross-linked chloromethylated polystyrene (1.25 mmol of chloromethyl groups per gram) in 300 mL of tetrahydrofuran was added to a solution of *tert*-butylamine (14 g, 190 mmol). The reaction mixture was refluxed overnight and the resin was filtered, washed with H₂O (200 mL), tetrahydrofuran (200 mL), hexane (200 mL), H₂O (100 mL), and diethyl ether (200 mL). The resulting resin was dried *in vacuo* overnight. The resin was slowly added to a solution of Cl₂PCH₂CH₂PCl₂ (7.4 g, 31.9 mmol) and Et₃N (6.5 g, 64.2 mmol) in tetrahydrofuran (300 mL) at room temperature, and the resulting mixture was stirred overnight before filtration and washing with tetrahydrofuran (2 x 100 mL), hexane (2 x 100 mL), CH₂Cl₂ (2 x 100 mL), and hexane (2 x 100 mL). The resin was added to tetrahydrofuran (150 mL), and then at room temperature treated with a mixture of tetrahydrofuran (50 mL) and lithium phenoxide (62.0 mmol). After the mixture was stirred for 4 hr, the solvents were filtered off and the resulting resin was washed with tetrahydrofuran (3 x 100 mL), H₂O (2 x 100 mL), and hexane (3 x 200 mL), dried *in vacuo* to give ca. 10 g of the title polymer-bound compound.
³¹P NMR (122 MHz, C₆D₆): δ 182,137.

### EXAMPLE 16

### Reaction of Resin VI with Lithium Phenoxide

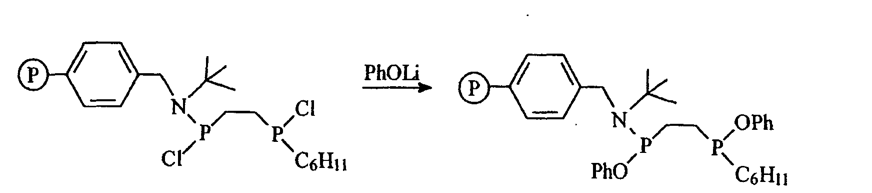

A suspension of Resin VI (2 g, ~0.72 mmol/g, 1.44 mmol) in 100 mL of THF was treated with PhOLi (1.0 M in diethyl ether, 7.2 mmol) at room temperature for 2 h before the solution was filtered off. The resulting resin was washed with H₂O (5 mL), THF (2 x 20 mL) and hexane (2 x 20 mL). The resin was dried *in vacuo* overnight. ³¹P NMR (122 MHz, C₆D₆): δ 182, 139 ppm.

### COMBINATORIAL SYNTHESES

### EXAMPLE 17

### Reaction of Resin II with a mixture of Grignard Reagents

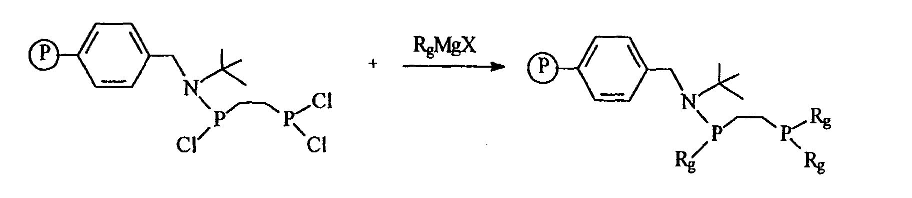

A suspension of Resin II (1.0 g, ~ 0.88 mmol/g, 0.88 mmol) in 15 mL of THF was treated slowly with a mixture of n-propylmagnesium bromide (2.0 M in diethyl ether, 0.44 mmol) and 3,5-difluorophenylmagnesium bromide (0.5 M in diethyl ether, 0.44 mmol) over a period of 5 min. at room temperature. The resulting suspension was stirred at room temperature for 30 min. before the solution was filtered off and the resin was washed with THF (2 x 20 mL). The procedures above were successively repeated 4 times with the same amount of RMgBr mixture before the solution was filtered off and the resin was washed with H₂O (2 x 3 mL), THF (2 x 10 mL) and hexane (2 x 15 mL). After drying *in vacuo,* a polymer-supported mixture of six components, 1.0 g, was obtained.

The resulting mixture resin with six components, and EtOH (0.28 g, 6.1 mmol) in 5 mL of THF was refluxed overnight. After cooling to room temperature, the resin was filtered off and washed with THF (2 x 5 mL). The combined filtrates were dried *in vacuo.* By ³¹P-NMR and mass spectrum analysis it was shown that the mixture contained 6 compounds. ³¹P NMR (122 MHz, C₆D₆): δ 13.3.5, -27.4 ppm; 132.8, -16.6 ppm, 132.5, -16.9 ppm (cis- and trans-isomers); 132.1, -8.0 ppm; 120.4, -27.7 ppm; 119.3, -17.0 ppm, 119.1, -17.4 ppm (cis- and trans- isomers); 118.1, -8.5 ppm.

A polymer-supported mixture of 936 components (ligands) was produced according to the procedure above except that the resin was treated with a mixture of 12 R_{g}MgX reagents (R_{g} = *n*-propyl, cyclopentyl, *t*-butyl, phenyl, 4-*t*-butylphenyl, 2,4,6-trimethylphenyl, 4-anisole, 3-anisole, 2-anisole, 4-fluorophenyl, 3,4-difluorophenyl, 3,5-difluorophenyl) instead of 2 R_{g}MgX reagents.

### CLEAVAGE OF LIGANDS FROM THE RESIN

### EXAMPLE 18

### Synthesis of 1-[di(3,5-diflurophenyl)phosphino]-2-(chloro-3,5-diflurophenylphosphino)ethane

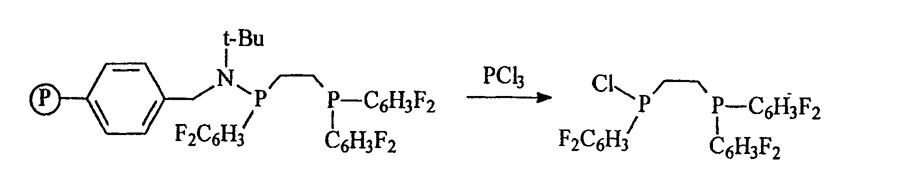

A suspension of Resin II (4.0 g, ~ 0.96 mmol/g, 3.84 mmol) in 150 mL of THF was treated with 3,5-difluorophenylmagnesium bromide (0.5 M in diethyl ether, 38.4 mmol, 10 eq) at room temperature for 20 min, then the mixture was stirred overnight before the solution was filtered off. The resulting resin was washed with THF (2 x 50 mL), H₂O (20 mL), THF (4 x 50 mL), and hexane (3 x 50 mL). The resin was dried *in vacuo* overnight. The polymer-supported 1-[di(3,5-difluorophenyl)phosphino]-2-[chloro-3, 5-diflurophenylphosphino)-ethane, ~4.0 g, was obtained. ³¹P NMR (122 MHz, CDCl₃): δ 49.2, -7.3 ppm.

A suspension of the above resin (2.0 g, 0.96 mmol/g, ~1.92 mmol,) in THF (100 mL) was treated dropwise with PCl₃ (2.64 g, 19.2 mmol)over 5 min. at room temperature. The resulting reaction mixture was then stirred overnight before the resin was filtered off and washed with THF (2 x 20 mL). Removal of solvents and excess PCl₃ *in vacuo* afforded 0.34 g (3 8%) of 1-[di(3,5-difluorophenyl)phosphino]-2-[chloro-3,5-diflurophenylphosphino)ethane. ³¹P NMR (202 MHz, CDCl₃): 90.8 (δ, J = 29.8 Hz), -9.2 (δ, J = 29.9 Hz). ¹H NMR (500 MHz, CDCl₃): 7.03 (3H), 6.75 (6H), 2.02 (4H). 13C NMR (125.8 MHz, CDCl₃): 164.1, 162.0, 141.9, 140.9, 115.1, 113.4, 106.3,105.1, 32.4, 22.0. HRMS Calcd for C₂₀H₁₃F₆P₂Cl: 464.0085. Found: 464.0075.

### EXAMPLE 19

### Synthesis of 1-(diphenylphosphinite)-2-(chlorophenylphosphinite)ethane

Method A: A suspension of polymer-bound -P(PhO)CH₂CH₂P(OPh)₂ (from Example 15, 0.5 g, 1.25 mmol/g, ~0.62 mmol) in THF (20 mL) was treated dropwise with PCl₃ (0.43 g, 3.1 mmol). The resulting reaction mixture was then stirred overnight before the resin was filtered off and washed with THF (10 mL). The filtrate was dried *in vacuo* to remove the solvent and excess PCl₃, the residue was extracted with 3 x 20 mL of hexane. The combined hexane extracts were dried under reduced pressure to give 0.12 g (48 % yield) of (PhO)CIPCH₂CH₂P(OPh)₂.

³¹P NMR (122 MHz, C₆D₆): δ 199.5 (d, J = 16.8 Hz), 178.9 (d, J = 16.8 Hz) ppm.

Method B: A mixture of polymer-bound -P(PhO)CH₂CH₂P(OPh)₂ (from Example 15,0.5 g, 1.25 mmol/g, ~0.62 mmol) and TMSCI (10 eq., 6.2 mmol) in THF (20 mL) was stirred at room temperature for 4 days before the resin was filtered off, the solvent and excess TMSCI were removed *in vacuo.* The phosphorus-31 NMR spectrum of the crude filtrate indicated the presence of the title compound (ca. 90%).

### EXAMPLE 20

### Synthesis of 1-(diphenylphosphino)-2-(ethouylphenylphosphinite)ethane

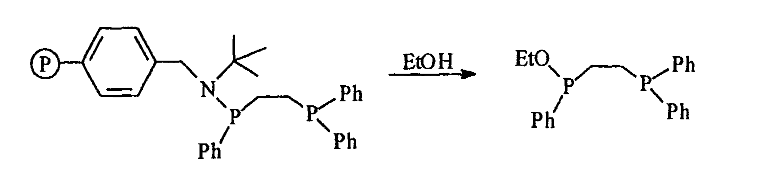

A suspension of polymer-bound -P(Ph)CH₂CH₂P(Ph)₂ prepared as in Example 5 using phenyl magnesium bromide (13.6 g, 0.74 mmol/g, ~10. mmol), and EtOH (5 g, 109 mmol) in THF (200 mL) was refluxed overnight before the resin was filtered off and washed with THF (2 x 10 mL). The filtrate was dried *in vacuo* to remove the solvent and excess EtOH, the residue was extracted with 3 x 20 mL of hexane. The combined hexane extracts were dried under reduced pressure to give 2.17 g (59% yield) of (Ph)(EtO)PCH₂CH₂P(Ph)₂. ³¹P NMR (122 MHz, C₆D₆): δ 120.4, -11.6 ppm.

### EXAMPLE 21

### Preparation of Catalyst

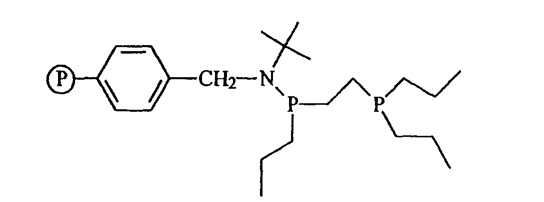

A flask was charged with 0.50 g of resin prepared as in Example 5 using n-propylmagnesium bromide and Resin II, 0.50 g (1,5-cyclooctadiene)rhodium(I) chloride dimer, and 20 mL of methylene chloride. This was allowed to stir at room temperature for 8 h. It was then filtered and the product was washed with hexane (2x15 mL), THF (2 x 10 mL), methylene chloride (2 x 10 mL), hexane (2 x 15 mL). To remove all excess (1,5-cyclooctadiene)rhodium(I) chloride dimer, the resin was then washed in portions with a total of 500 mL of methylene chloride until the washings were colorless. The resin was then dried *in vacuo.*

### EXAMPLE 22

### Reaction of Salicylalde and Butyl Acrylate to Form Coumarin

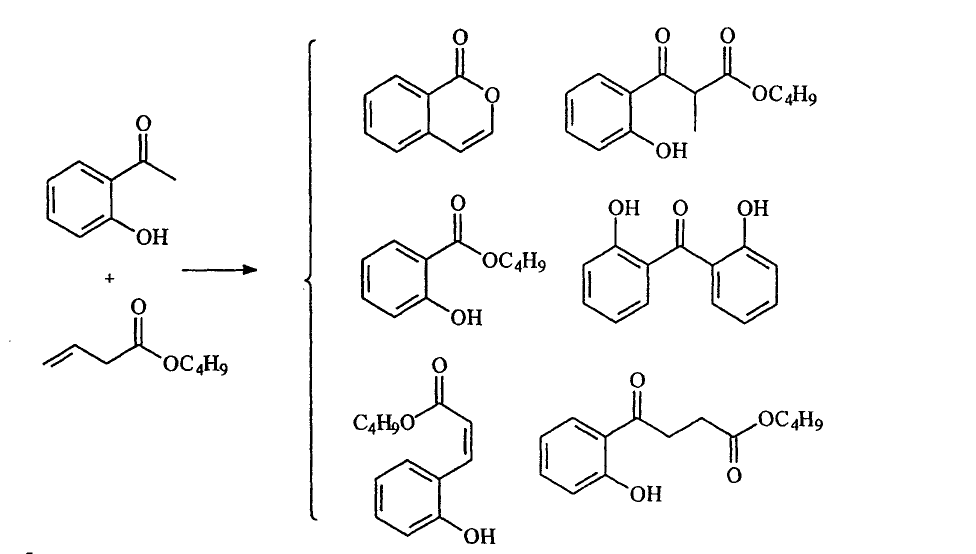

A flask was charged with 0.200 g of the complexed resin of Example 21, 1.00 g of salicylaldehyde, 2.00 g of butylacrylate, 0.122 g of sodium carbonate, and 5 mL of toluene. This was stirred at 100 °C for 48 h. The reaction mixture was filtered from the catalyst resin and then divided into two equal portions. The portions were each placed onto a 20 x 20 cm, 2000 micron thick silica gel preparatory chromatography plate, and each plate was eluted with 10% ethyl acetate/hexane solution.

On each of the plates, six bands were observed with the following R_{f} values: Band 1, R_{f} range 0.84-0.93; Band 2, R_{f} range 0.78-0.84; Band 3, R_{f} range 0.61-0.68; Band 4, R_{f} range 0.50-0.59; Band 5, R_{f} range 0.22-0.43; Band 6, R_{f} range 0.00-0.22. Each band was scraped off the plates, and the bands from each with similar R_{f} ranges were combined and extracted with 75 mL of ethylacetate. Solvent was removed from these extracts *in vacuo.* The final weight from each band is as follows: Band 1, 40 mg; Band 2, 50 mg; Band 3, 200 mg; Band 4, 90 mg; Band 5, 200 mg; Band 6, 110 mg. Proton NMR spectra and mass spectra were taken of each sample.

The product from Band 1 was identified as 2-hydroxybenzoic acid butyl ester with hydrocarbon impurities. The product from Band 2 was identified as essentially pure 2-hydroxybenzoic acid butyl ester. The product from Band 3 was identified as 3-(2-hydroxyphenyl)-2-methyl-3-oxo-propionic (~90 mol %). The product from Band 4 was identified as a mixture of 4-(2-hydroxyphenyl)-4-oxo butyric acid butyl ester and 2,2'-dihydroxybenzophenone in a 1.4:1 mole ratio, respectively. The 4-(2-hydroxyphenyl)-4-oxo-butyric acid butyl ester was further purified by elution with 1:1 methylene chloride:hexane on a preparatory silica gel chromatography plate. Two bands were partially separated. The bottom portion of the band was scraped off the plate and extracted with ethylacetate. Removal of solvent *in vacuo* yielded pure 4-(2-hydroxyphenyl)-4-oxo-butyric acid butyl ester. The product from Band 5 was a mixture of coumarin and Z-3-(2-hydroxyphenyl)-acrylic acid butyl ester in a 1:2 mole ratio, respectively. The products in Band 6 were a complex mixture of unidentified organic compounds. Based on the amount of starting salicylaldehyde, the following percent yields of each compound were obtained: 2-hydroxybenzoic acid butyl ester (3%), 3-(2-hydroxyphenyl)-2-methyl-3-oxo-propionic acid butyl ester (10%), 4-(2-hydroxyphenyl)-4-oxo butyric acid butyl ester (3%), 2,2'-dihydroxybenzophenone (2%), Z-3-(2-hydroxyphenyl)-acrylic acid butyl ester (8%), and coumarin (4%).

### Polymer-Supported Synthesis of Diphosphine Monoxide Ligands Method A

### EXAMPLE 23

### Synthesis of MePH(O)CH₂CH₂PMe₂

A suspension of polymer-bound (Me)PCH₂CH₂P(Me)₂ (2.0 g, 1.0 mmol/g, 2.0 mmol, prepared using the procedure in Example 5 with methylMgBr) and H₂O (0.60 g, 33.3 mmol) in THF (10 mL) was refluxed overnight, then the resin was filtered off and washed with THF (2 X 10 mL). Removal of solvents and excess H₂O from the filtrates by vacuum afforded 100 mg (33% yield) of MePH(O)CH₂CH₂PMe₂. It was >95% pure by ¹H NMR and GC/MS. ³¹P NMR (121 MHz, CDCl₃, ¹H-decoupled): δ 30.3 (d, Jₚ₋ₚ = 38.1 Hz), -44.5 (d, Jₚ₋ₚ= 38.1 Hz). ³¹P NMR (121 MHz, CDCl₃, ¹H-coupled): δ 30.3 (d, J_{p-H} = 457.6 Hz), -44.5 (s). ¹H NMR (500 MHz, CDCl₃): δ 7.00 (d, J_{p-H} = 457.6 Hz, 1H), 1.83 (m, 3H), 1.58-1.521 (m, 4H), 0.99 (m, 6H). ¹³C NMR (125 MHz, CDCl₃): δ 25.4 (d, J_{p-c} = 65.9 Hz), 21.8, 13.1(d, J_{p-c} = 65.7 Hz), 12.6. HRMS: Calcd for C₅H₁₄P₂O(M⁺): 152.0520. Found: 152.0527.

### EXAMPLE 24

### Synthesis of EtPH(O)CH₂CH₂PEt₂

A similar procedure to that described above was used to prepare EtPH(O)CH₂CH₂PEt₂ using polymer-bound EtPCH₂CH₂PEt₂ (2.0 g, 0.96 mmol/g, 1.92 mmol, prepared using the procedure in Example 5 with ethylMgBr) and H₂O (0.6 g, 33.3 mmol). After the solvents were removed from the filtrates by vacuum, 160 mg (43% yield) of EtPH(O)CH₂CH₂PEt₂ was obtained. It was >95% pure by ¹H NMR and GC/MS. ³¹P NMR (121 MHz, CDCl₃, ¹H-decoupled): δ 36.2 (d, Jₚ₋ₚ = 36.0 Hz), -16.7 (d, Jₚ₋ₚ = 36.0 Hz). ³¹P NMR (121 MHz, CDCl₃, ¹H-coupled): δ 39.7 (d, J_{p-H} = 449.6 Hz), -16.6 (s). ¹H NMR (500 MHz, CDCl₃): δ 6.78 (d, J_{p-H} = 449.6 Hz, ¹H), 1.79 (m, 4H), 1.63 (m, 1H), 1.35 (m, 3H), 1.15 (m, 3H), 1.00 (m, 6H). ¹³C NMR (125 MHz, CDCl₃): δ 24.0 (d, J_{p-c} = 62.8 Hz), 20.9 (d, J_{p-c} = 65.7 Hz), 18.4,17.3, 9.3, 5.6. HRMS: Calcd for C₈H₂₀P₂O(M⁺): 194.0989. Found: 194.0952.

### EXAMPLE 25

### Synthesis of (CH₃CH₂CH₂)PH(O)CH₂CH₂P(CH₂CH₂CH₃)₂

A suspension of polymer-bound (CH₃CH₂CH₂)PCH₂CH2_{P}(CH₂CH₂CH₃)₂ (2.0 g, 0.92 mmol/g, 1.84 mmol, prepared using the procedure in Example 5 with *n*-propylMgBr) and H₂O (0.6 g, 33.3 mmol) in THF (10 mL) was refluxed overnight before the resin was filtered off and washed with THF (2 X 10 mL). Removal of solvents and excess H₂O from the filtrates by vacuum afforded 170 mg (39% yield) of the title compound. It was >90% pure by ¹H NMR and GC/MS. ³¹P NMR (121 MHz, CDCl₃, ¹H-decoupled): δ 35.8 (d, Jₚ₋ₚ = 35.3 Hz), -26.3 (d, Jₚ₋ₚ = 35.3 Hz). ³¹P NMR (121 MHz, CDCl₃, ¹H-coupled): δ 35.8 (d, J_{p-H} = 448.6 Hz), -26.3 (s). ¹H NMR (500 MHz, CDCl₃): δ 6.83 (d, J_{p-H} = 448.0 Hz, 1H), 1.78 (m, 4H), 1.61 (m, 4H), 1.50 (m, 2H), 1.49-1.35 (m, 6H), 1.02 (t, J = 7.2 Hz, 3H), 0.94 (t, J = 7.10 Hz, 6H). ¹³C NMR (125 MHz, CDCl₃): δ 29.5 (d, J_{p-c} = 65.5 Hz), 28.4, 23.9 (d, J_{p-c} = 62.8 Hz), 18.3, 17.5, 15.0, 14.8, 14.4. HRMS: Calcd for C₁₁H₂₆P₂O(M⁺): 236.1459. Found: 236.1428.

### EXAMPLE 26

### Synthesis of (Me₂CH)PH(O)CH₂CH₂P(CHMe₂)₂

An analogous procedure to that for (CH₃CH₂CH₂)PH(O)-CH₂CH₂P(CH₂CH₂CH₃)₂ was used for the synthesis of title compound using polymer-bound (Me₂CH)PCH₂CH₂P(CHMe₂)₂ (10.0 g, 0.92 mmol/g, 9.2 mmol, prepared using the procedure in Example 5 with *i*-propylMgBr) and H₂O (2.0 g, 111.1 mmol). After the solvents were removed from filtrates by vacuum, 912 mg (42% yield) of (Me₂CH)PH(O)CH₂CH₂P(CHMe₂)₂ was obtained. It was >95% pure by ¹H NMR and GC/MS. ³¹P NMR (121 MHz, CDCl₃, ¹H-decoupled): δ 46.8 (d, Jₚ₋ₚ = 40.0 Hz), 10.5 (d, Jₚ₋ₚ = 40.4 Hz). ³¹P NMR (121 MHz, CDCl₃, ¹H-coupled): δ 46.8 (d, J_{p-H} = 442.3 Hz), 10.5 (s). ¹H NMR (500 MHz, CDCl₃): δ 6.55 (d, J_{p-H} = 442.3 Hz, 1H), 1.94-1.82 (m, 3H), 1.76-1.65 (m, 4H), 1.51 (m, 1H), 1.69-1.10 (m, 6H), 1.04-0.98 (m, 12H). ¹³C NMR (125 MHz, CDCl₃): δ 26.3 (d, J_{p-c} = 66.0 Hz), 24.0, 23.0,18.5,14.7, 12.8. HRMS: Calcd for C₁₁H₂₆P₂O(M⁺): 236.1459. Found: 236.1448.

### EXAMPLE 27

### Synthesis of (Ph)PH(O)CH₂CH₂P(Ph)₂

A suspension of polymer-bound (Ph)PCH₂CH₂P(Ph)₂ (1.5 g, 0.84 mmol/g, 1.26 mmol, prepared using the procedure in Example 5 with phenylMgBr) and H₂O (0.5 g, 27.8 mmol) in THF (10 mL) was refluxed overnight before the resin was filtered off and washed with THF (2 X 5 mL). The filtrate was dried *in vacuo* to remove the solvent and excess H₂O. The resulting residue was 200 mg (47% yield) of (Ph)PH(O)CH₂CH₂P(Ph)₂. It was >95% pure by ¹H NMR and GC/MS. ³¹P NMR (121 MHz, CDCl₃, ¹H-decoupled): δ 28.5 (d, J = 46.0 Hz), -11.6 (d, J = 46.0 Hz). ³¹P NMR (121 MHz, CDCl₃, ¹H-coupled): δ 28.5 (d, J_{p-H} = 468.9 Hz), -11.6 (s). ¹ H NMR (500 MHz, CDCl₃): δ 7.39 (d, J_{p-H} = 468.9 Hz, 1H), 7.51 (m, 2H), 7.43 (m, 1H), 7.35 (m, 2H), 7.24 (m, 4H), 7.19 (m, 6H), 2.16 (m, 2H), 1.95 (m, 2H). ¹³C NMR (125 MHz, CDCl₃): δ 135.4, 135.3,131.2, 130.9, 128.4, 128.3, 127.4, 127.0, 25.0 (d, J_{p-c} =65.6 Hz), 17.5. HRMS: Calcd for C₂₀H₂₀P₂O(M⁺): 338.0989. Found: 338.0979.

### EXAMPLE 28

### Synthesis of (3,5-F₂H₃C₆)PH(O)CH₂CH₂P(3,5-C₆H₃F₂)₂

A suspension of polymer-bound (3,5-F₂H₃C₆)PCH₂CH₂P(3,5-C₆H₃F₂)₂ (1.0 g, 0.77 mmol/g, 0.77 mmol, prepared using the procedure in Example 5 with (3,5-difluorophenyl)MgBr) and H₂O (0.60 g, 33.3 mmol) in THF (10 mL) was refluxed overnight before the resin was filtered off and washed with THF (2 X 5 mL). The filtrate was dried *in vacuo* to remove the solvent and excess H₂O. The resulting residue was 187 mg (54% yield) of (3,5-C₆H₃F₂)PH(O)CH₂CH₂P(3,5-C₆H₃F₂)₂. It was >95% pure by ¹H NMR and GC/MS. ³¹P NMR (121 MHz, CDCl₃, ¹H-decoupled): δ 24.1 (d, J = 47.3 Hz), -8.2 (d, J = 47.3 Hz). ³¹P NMR (121 MHz, CDCl₃, ¹H-coupled): δ 24.1 (d, J_{p-H} = 480.6 Hz), -8.2 (s). ¹H NMR (500 MHz, CDCl₃): δ 7.50 (d, J_{p-H} = 480.6 Hz, 1H), 7.19-7.10 (m, 2H), 6.95 (m, 1H), 6.79 (m, 6H), 2.19-2.10 (m, 2H), 2.0-1.88 (m, 2H). ¹³C NMR (125 MHz, CDCl₃): δ 164.4, 162.1, 140.3, 134.0, 115.1, 113.0, 108.6, 105.4, 26.0, 18.8. HRMS: Calcd for C₂₀H₂₄P₂OF₆(M⁺): 446.0424. Found: 446.0419.

### EXAMPLE 29

### Synthesis of (2,4,6-Me₃H₂C₆)PH(O)CH₂CH₂P(2,4,6-Me₃C₆ H₂)₂

A suspension of polymer-bound (2,4,6-Me₃H₂C₆)PCH₂CH₂P(2,4,6-Me₃H₂C₆)₂ (15.0 g, 0.76 mmol/g, 11.4 mmol, prepared using the procedure in Example 5 with (2,4,6-trimethylphenyl)MgBr) and H₂O (6.5 g, 361 mmol) in THF (200 mL) was refluxed overnight before the resin was filtered off and washed with THF (2 X 50 mL). The filtrate was dried *in vacuo* to remove the solvent and excess H₂O. The resulting residue was 2.53 g (48 % yield) of (2,4,6-Me₃H₂C₆)PH(O)CH₂CH₂P(2,4,6-Me₃H₂C₆)₂. It was >95% pure by ¹H NMR and GC/MS. ³¹P NMR (121 MHz, CDCl₃, ¹H-decoupled): δ 25.0 (d, J = 53.4 Hz), -18.1 (d, J = 53.4 Hz). ³¹P NMR (121 MHz, CDCl_{3'} ¹H-coupled): δ 25.0 (d, J_{p-H} = 470.0 Hz), -18.1 (s). ³¹P NMR (121 MHz, C₆D₆, ¹H-coupled) : δ 20.5 (d, J_{p-H} = 470.0Hz), -18.0 (s). ¹HNMR(500MHz,C₆D₆): δ 7.83 (d, J_{p-H} = 470.0 Hz, 1H), 6.59 (m, 4H), 6.48 (m, 2H), 2.63 (m, 4H), 2.24 (s, 6H), 2.21 (s, 12H), 2.02 (d, J_{P-C} = 3.96 Hz), 1.93 (s, 3H). ¹³C NMR (125 MHz, C₆D₆): δ 141.9, 141.2, 141.0, 137.4, 136.9, 132.4, 132.2, 129.8, 22.7, 22.5, 20.4, 20.3, 19.2,19.0. HRMS: Calcd for C₂₉H₃₈P₂O(M⁺): 464.2398. Found: 464.2395.

### EXAMPLE 30

A suspension of hydroxymethylpolystyrene-bound (*i*-C₃H₇)PCH₂CH₂P(i-C₃H₇)₂ (prepared using the procedure in Example 3, followed by reaction with (*i*-propyl)MgBr as in Example 5), 1.0 g, 0.68 mmol/g, 0.68 mmol) and H₂O (0.4 g, 22.2 mmol) in 8 mL of THF was refluxed for 3h. The ³¹P NMR spectrum of this crude product indicated the presence of (Me₂CH)PH(O)CH₂CH₂P(CHMe₂)₂ (~70%). Removal of solvent and excess H₂O afforded 40 mg (25% yield) of the title compound. ³¹P NMR (121 MHz, CDCl₃, ¹H-decoupled): δ 46.2 (d, Jp-p = 41.2 Hz), 9.1 (d, Jₚ₋ₚ = 38.2 Hz).

### Method B

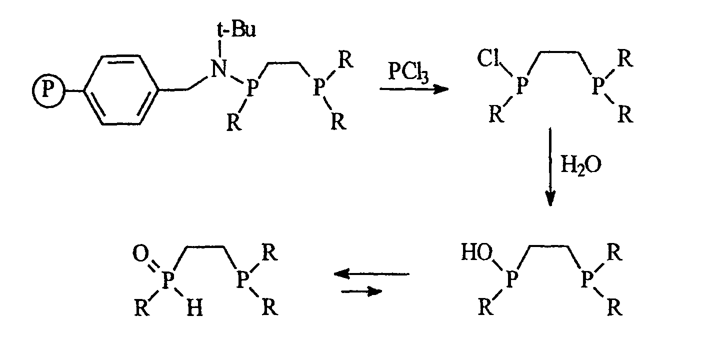

### EXAMPLE 31

A suspension of polymer-bound (C₆H₃F₂)PCH₂CH₂P(C₆H₃F₂)₂ (6.0 g, 0.77 mm/g, 4.6 mmol, prepared using the procedure in Example 5 with (3,5-difluorophenyl)MgBr) and PCl₃ (5.0 g, 36.4 mmol) in THF (10 mL) was stirred overnight at room temperature before the resin was filtered off and washed with THF (2 X 5 mL) and hexane (2 X 10 mL). The combined filtrates were dried *in vacuo* to remove the solvent and excess PCl₃. The resulting residue was extracted with hexane (3 X 30 mL). The concentration of the extracts afforded 1.58 g (74%) of the title compound (C₆H₃F₂)(Cl)PCH₂CH₂P(C₆H₃F₂)₂. It was >95% pure by ¹H NMR and GC/MS. ³¹P NMR (202 MHz, CDCl₃): δ 90.8 (d, J = 29.8 Hz), -9.2 (d, J = 29.9 Hz). ¹H NMR (500 MHz, CDCl₃): δ 7.03 (µ, 3H), 6.76 (µ, 6H), 2.02 (µ, 4H), 1.97. ¹³C NMR (125 MHz, C₆D₆): δ 164.1,162.0, 141.9, 140.9, 115.1, 113.4, 106.3, 105.1, 32.4, 22.0. HRMS: Calcd for C₂₀H₁₃F₆P₂Cl: 464.0085. Found: 464.0075.

A solution of 50 mg (0.108 mmol) of (C₆H₃F₂)(Cl)PCH₂CH₂P(C₆H₃F₂)₂ and 0.04 g (2.2 mmol) of H₂O in 10 mL of THF was refluxed overnight. After filtration, the solvent and excess H₂O were removed *in vacuo* to give 38 mg (79%) of (C₆H₃F₂)PH(O)CH₂CH₂P(C₆H₃F₂)₂. It was >95% pure by ¹H NMR and GC/MS. ³¹P NMR (121 MHz, CDCl₃, ¹H-decoupled): δ 24.1 (δ, J = 47.3 Hz), -8.2 (δ, J = 47.3 Hz). ³¹P NMR (121 MHz, CDCl₃, ¹H-coupled): δ 24.1 (d, J_{p-H} = 480.6 Hz), -8.2 (s). ¹H NMR (500 MHz, CDCl₃): δ 7.50 (δ, J_{p-H} = 480.6 Hz, 1H), 7.19-7.10 (µ, 2H), 6.95 (µ, 1H), 6.79 (µ, 6H), 2.19-2.10 (µ, 2H), 2.0-1.88 (µ,2H). ¹³CNMR (125 MHz, CDCl₃): 64.4, 162.1, 140.3, 134.0, 115.1, 113.0, 108.6, 105.4, 26.0, 18.8. HRMS: Calcd for C₂₀H₂₄P₂OF₆(M⁺): 446.0424. Found: 446.0419.

### Method C

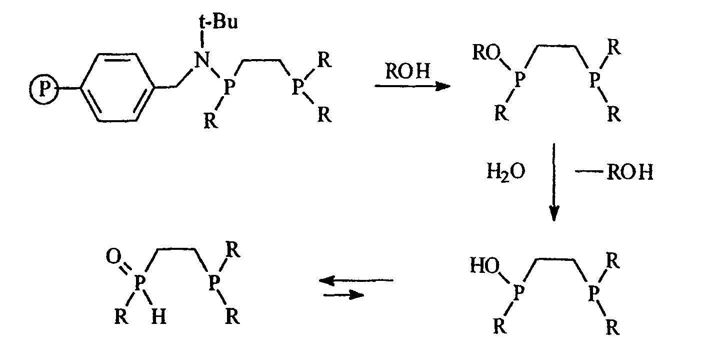

### EXAMPLE 32

A suspension of polymer-bound (CH₃CH₂CH₂)PCH₂CH₂P (CH₂CH₂CH₃)₂ (1.0 g, 0.92 mmol/g, ~0.92 mmol, prepared using the procedure in Example 5 with (n-propyl)MgBr) and MeOH (0.1 g, 3.1 mmol) in THF (5 mL) was refluxed overnight before the resin was filtered off and washed with THF (2 X 5 mL). The filtrates were dried *in vacuo* to remove the solvent and excess MeOH. The residue was crude (CH₃CH₂CH₂)P(OMe)CH₂CH₂P (CH₂CH₂CH₃)₂. It was directly used for next reaction without further purification. ³¹P NMR (122 MHz, THF-D₈): δ 138.5 (d, J =19.8 Hz), -27.3 (d, J = 19.8 Hz). A solution of (CH₃CH₂CH₂)P(OMe)CH₂CH₂P(CH₂CH₂CH₃)₂ above and 0.1 g (5.6 mmol) of H₂O in 1.0 mL of THF was stirred overnight at room temperature. The ³¹P NMR spectrum of this crude product indicated the presence of (CH₃CH₂CH₂)PH(O)CH₂CH₂P(CH₂CH₂CH₃)₂ (~ 90%). Removal of solvent and excess H₂O afforded 50 mg (23% yield) of the title compound. It was >90% pure by ¹H NMR and GC/MS. ³¹P NMR (121 MHz, THF-D₈, ¹H-decoupled): δ 37.8 (d, Jp-p = 35.1 Hz), -27.0 (d, Jp-p = 35.1 Hz). ³¹P NMR (121 MHz, THF-D₈, ¹H-coupled): δ 37.8 (d, Jₚ₋ₕ = 453.2 Hz), -27.0 (s). ¹H NMR (500 MHz, CDCl₃): δ 6.83 (d, Jₚ₋ₕ = 448.0 Hz,1H), 1.78 (m, 4H),1.61 (m, 4H),1.50 (m, 2H), 1.49-1.35 (m, 6H),1.02 (t, J = 7.2 Hz, 3H), 0.94 (t, J = 7.10 Hz, 6H). ¹³C NMR (125 MHz, CDCl₃): δ 29.5 (d, J_{p-c} = 65.5 Hz), 28.4, 23.9 (d, J_{p-c} = 62.8 Hz),18.3, 17.5, 15.0, 14.8, 14.4. HRMS: Calcd for C₁₁H₂₆P₂O(M⁺): 236.1459. Found: 236.1428.

### Solution Synthesis of Diphosphine Monoxide Ligands

### EXAMPLE 33

A solution of Cl₂PCH₂CH₂PCl₂ (1.0 g, 4.3 mmol) in 50 mL of THF was treated with a mixture of Et₂NH (0.63 g, 8.6 mmol) in THF (5 mL) dropwise over a period of 10 min. at room temperature. The resulting solution was stirred for 2 h before removal of THF *in vacuo.* The residue was extracted with hexane (3 X 30 mL). Removal of the solvents from extracts gave a mixture of Et₂NP(Cl)CH₂CH₂PCl₂ [ca. 35% by ³¹P NMR, ³¹P NMR (121 MHz, CDCl₃, ¹H-decoupled): δ 193.4 (d, Jₚ₋ₚ = 19.8 Hz), 144.6 (δ, Jₚ₋ₚ = 18.4 Hz)], Et₂NP(Cl)CH₂CH₂P(Cl)(NEt₂) [ca. 15% by ³¹P NMR, ³¹P NMR (121 MH_{z}, CDCl₃, ¹H-decoupled): δ 148.5 (s), 148.4 (s)], and unreacted Cl₂PCH₂CH₂PCl₂ (ca. 50% by ³¹P NMR, ³¹P NMR (121 MHz, CDCl₃, ¹H-decoupled): δ 191.4 (s).].

A solution of the mixture above was treated with PhMgCl (3 M solution in THF, 13 mmol) at room temperature over a period of 5 min., and the resulting solution was stirred for 30 min. before 1.0 mL of H₂O was used to quench the reaction. After filtration, the solvents were removed *in vacuo.* The residue was extracted with hexane (3 X 30 mL). Extracts was dried at reduced pressure to give the compounds which were used directly for the next step without further purification.

A mixture of the compounds above and H₂O (1.0 g, 55.5 mmol) in THF (10 mL) was refluxed overnight in a sealed reactor. After filtration, the filtrate was dried *in vacuo* to give 0.20 g of the residue. The ³¹P NMR spectrum of this crude reaction mixture indicated the presence of PhPH(O)CH₂CH₂PPh₂ (<5%), Ph₂PCH₂CH₂PPh₂ (ca. 80%) and two compounds (<5%) exhibiting two singlets at δ 27.5, 27.3 ppm.

### Synthesis of Polymer-Bound Bisphosphines

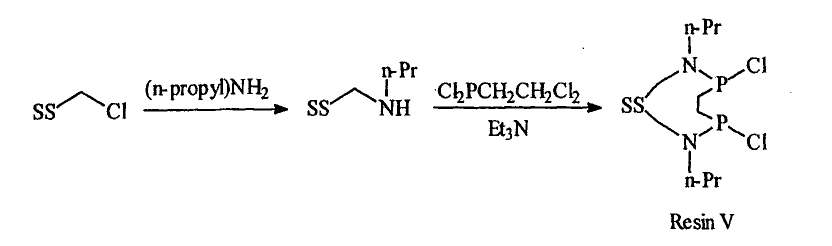

### EXAMPLE 34

A solution of *n*-propylamine (72 g, 1.22 moles) and KI (0.3 g, 2 mmol) in 800 mL of THF was treated with chloromethylpolystyrene-divinylbenzene (Merrifield resin, 2% DVB,100 g, 0.72 mmol/g, 72 mmol) while stirring at room temperature for 30 min. The suspension was then refluxed for 24 h before the solution was filtered off. The resulting resin was washed with a mixture of H₂O/THF (20% H₂O, 3 X 250 mL), THF (3 X 150 mL), hexane (3 X 200 mL). After drying *in vacuo* overnight, 100 g of the resin were obtained. The disappearance of ¹H resonances of polymer-Ph-CH₂-Cl (CH₂=~ 4.5 ppm) and the appearance of ¹H resonances of polymer-Ph-CH₂-NHCH₂CH₂Me indicates the complete transformation of the chloromethyl groups to *n*-propylaminomethyl groups.

A solution of resin above (99.0 g, 0.709 mmol/g, 70.1 mmol) in 800 mL of THF was treated slowly with Cl₂PCH₂CH₂PCl₂ (7.32 g, 31.58 mmol, 0.45 eq) while stirring at room temperature for a period of 30 min before Et₃N (35.5 g, 350.8 mmol) was added. The resulting suspension was stirred at room temperature overnight before the solution was filtered off. The resin was washed with hexane (2 X 100 mL), CH₂Cl₂ (5 X 100 mL), and hexane (5 X 100 mL). The resulting resin was dried *in vacuo* overnight. ³¹P NMR (122 MHz, CDCl₃): δ 148.6 ppm. ¹³C NMR (75 MHz, THF-d₈): δ 41.4, 31.9, 22.9, 14.0, 11.7 for polymer-supported groups. Thereafter this will be referred to as Resin V.

A suspension of Resin V above (15.5 g, 0.67 mmol/g, 10.4 mmol) in 250 mL of THF was treated slowly with phenylmagnesium bromide (1.0 M solution in diethylether, 112 mmol). The resulting mixture was stirred at room temperature for 2 h before the solution was filtered off and the resin was washed with THF (3 X 50 mL), H₂O/THF (20% H₂O, 2 X 50 mL), hexane (3 X 80 mL). The resulting resin was dried *in vacuo* overnight to afford polymer-bound PhPCH₂CH₂PPh. ³¹P NMR (122 MHz, CDCl₃): δ 62.4 (s, br.) ppm.

### Synthesis of Polymer-Bound Bisphosphinites

### EXAMPLE 35

A suspension of Resin V above (2.0 g, 0.99 mmol/g, 1.98 mmol) in 20 mL 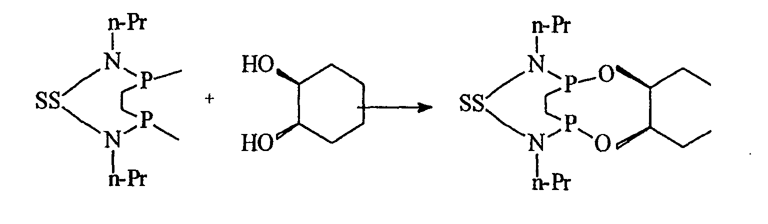 of THF was treated with (1S,2S)-trans-1, 2-cyclohexanediol (0.113 g, 0.973 mmol) and Et₃N (1.0 g, 9.9 mmol) over a period of 5 min. The resulting mixture was stirred at room temperature for 2 days before the solution was filtered off and the resin was washed with THF (3 X 30 mL), hexane (3 X 30 mL). The resulting resin was dried *in vacuo* overnight to afford the polymer-bound chiral bisphosphinite. ³¹P NMR (122 MHz, CDCl₃): δ 148.2 (s, br.) ppm.

### EXAMPLES 36A-36M

Examples 36-A to 36-M were prepared using the procedure in Examples 34-35 with the amines, phosphines, and Grignard reagents specified in Table 4A, below. Where no Grignard reagent is specified, the procedure was discontinued at addition of the phosphine.

**TABLE 4A**

| Ex. | Amine | Phosphine | Grignard | ³¹_{P NMR} |
|---|---|---|---|---|
| 36-A | (n-propyl)NH₂ | Cl₂PCH₂CH₂PCl₂ | (n-butyl)MgBr | 61.5 |
| 36-B | (n-propyl)NH₂ | Cl₂PCH₂CH₂PCl₂ | (t-butyl)MgBr | 35.3 |
| 36-C | (*n*-propyl)NH₂ | Cl₂PCH₂CH₂PCl₂ | BrMgCH₂(CH₂)₃CH₂MgBr | 35.6 |
| 36-D | (*n*-propyl)NH₂ | Cl₂PCH₂CH₂PCl₂ | phenylC(CH₃)₂CH₂MgBr | 56.2 |
| 36-E | (n-propyl)NH₂ | Cl₂PCH₂CH₂PCl₂ | 4-(t-butyl)phenylMgBr | 61.5 |
| 36-F | (n-propyl)NH₂ | Cl₂PCH₂CH₂PCl₂ | 2,4,6-trimethylphenylMgBr | 66.0 |
| 36-G | (t-butyl)NH₂ | Cl₂PCH₂CH₂PCl₂ | none | 149.3 |
| 36-H | (t-butyl)NH₂ | Cl₂PCH₂CH₂PCl₂ | p-chlorophenylMgBr | 46.8 |
| 36-I | (t-butyl)NH₂ | Cl₂PCH₂CH₂PCl₂ | phenylCH₂CH₂MgBr | 49.2 |
| 36-J | (*t*-butyl)NH₂ | Cl₂PCH₂CH₂PCl₂ | i-propylMgBr | 62.4 |
| 36-K | (t-butyl)NH₂ | Cl₂PCH₂CH₂PCl₂ | phenoxyMgBr | 137.1 |
| 36-L | (cyclohexyl)NH₂ | Cl₂PCH₂CH₂PCl₂ | none | 146.0 |
| 36-M | (cyclohexy])NH₂ | Cl₂PCH₂CH₂PCl₂ | BrMgCH₂(CH₂)₃CH₂MgBr | 33.7 |

### Cleavage of Bisphosphine Ligands from Resin

### EXAMPLE 37

### Synthesis of cis- and trans-PhP(Cl)CH₂CH₂P(Cl)Ph

A suspension of polymer-bound (Ph)PCH₂CH₂P(Ph) from Example 34 (14.6 g, 0.29 mmol/g, 4.3 mmol) and PCl₃ (5.0 g, 36.4 mmol) in THF (150 mL) was stirred overnight at room temperature before the resin was filtered off and washed with hexane (2 X 10 mL). Removal of solvents and excess PCl₃ from the filtrates by vacuum afforded 1.3 g (96% yield) of cis and trans-mixture of (Ph)P(Cl)CH₂CH₂P(Cl)(Ph). It was >95% pure by ¹H NMR. ³¹P NMR (121 MHz, CDCl₃): δ 93.9 (~45%), 93.3 (~55%) ppm. HRMS: Calcd for C₁₄H₁₄P₂Cl₂(M⁺): 313.9948. Found: 313.9944.

### EXAMPLE 38

### Synthesis of cis- and trans-PhP(H)CH₂CH₂P(H)Ph

A solution of (Ph)P(Cl)CH₂CH₂P(Cl)(Ph) from Example 37 (cis- and trans- mixture, 1.0 g, 3.17 mmol) in 15 mL of THF was treated slowly with LiAlH₄ (1.0 M in THF, 3.17 mmol) over a period of 5 min. The resulting mixture was stirred at room temperature for 2 h before 1.0 g of H₂O was added to quench the reaction. After filtration, the filtrate was dried *in vacuo,* extracted with hexane (3 X 20 mL). Removal of solvent from extracts gave 290 mg (37%) of cis- and trans-PhP(H)CH₂CH₂P(H)Ph. ³¹P NMR (75 MHz, C₆D₆, ¹H-decoupled): δ -45.4 (~40%), -45.8 (~60%) ppm. ³¹P NMR (75 MHz, C₆D₆, ¹H-coupled): δ -45.4 (d, J_{p-H} = 204.5 Hz), -45.8 (d, J_{p-H} = 202.9 Hz). HRMS: Calcd for C₁₄H₁₆P₂(M⁺): 246.0727. Found: 246.0730.

### EXAMPLE 39

### Synthesis of cis- and trans-(2,4,6-Me₃C₆H₂)P(Cl)CH₂CH₂P(Cl)(2,4,6-Me₃C₆H₂)

The procedure used in Example 34 was used to prepare the title compound using polymer-bound (2,4,6-Me₃C₆H₂)PCH₂CH₂P(2,4,6-Me₃C₆H₂) from Example 36-F (28.6 g, 0.286 mmol/g, 8.17 mmol) and PCl₃ (14.1 g, 130 mmol). After the solvent and excess PCl₃ were removed from filtrates *in vacuo,* 3.05 g (93% yield) of the mixture of cis- and trans-(2,4,6-Me₃H₂C₆)P(Cl)CH₂CH₂P(Cl)(2,4,6-Me₃H₂C₆) was obtained. It was ~95% pure by ¹H and ³¹P NMR. ³¹P NMR (75 MHz, CDCl₃): δ 92.3, 91.4ppm.

A mixture of cis- and trans-(2,4,6-Me₃C₆H₂)P(Cl)CH₂CH₂P(Cl) (2,4,6-Me₃C₆H₂) (1.0 g, 2.5 mmol) was sublimed at 170°C/10⁻⁴ torr conditions overnight. 0.25 g (25%) of trans-(2,4,6-Me₃C₆H₂)P(Cl)CH₂CH₂P(Cl)(2,4,6-Me₃C₆H₂) was obtained. It was >95% pure by ¹H and ³¹P NMR. ³¹P NMR (121 MHz, CDCl₃): δ 92.0 ppm. ¹H NMR (500 MHz, CDCl₃): δ 6.92 (s, 4H), 2.63 (s, 12H), 2.51 (s, 4H), 2.33 (s, 6H). ¹³C NMR (125 MHz, CDCl₃): δ 144.4, 141.6, 130.4, 128.6, 28.2, 22.4, 21.0. HRMS: Calcd for C₂₀H₂₆P₂Cl₂(M⁺): 398.0887. Found: 398.0875.

### EXAMPLE 40

### Synthesis of cis- and trans-(4-ClC₆H₄)P(OMe)CH₂CH₂P(OMe)(4-ClC₆H₄)

A suspension of polymer-bound (4-ClC₆H₄)PCH₂CH₂P( 4-ClC₆H₄) from Example 36-H (1.5 g, 0.408 mmol/g, 0.61 mmol) and MeOH (0.3 g, 9.38 mmol) in 15 mL of THF was refluxed overnight before the resin was filtered off and washed with THF (2 X 5 mL). After the solvent and excess MeOH were removed from filtrates by vacuum, 112 mg (49% yield) of (4-ClC₆H₄)P(OMe)CH₂CH₂P(OMe)(4-ClC₆H₄) was obtained. It was >95% pure by ¹H NMR and GC/MS. ³¹P NMR (121 MHz, CDCl₃): δ 125.7, 125.5 ppm. ¹H NMR (500 MHz, CDCl₃): δ 7.26 (m, 8H), 3.44 (m, 6H, 2 CH₃), 1.68 (m, 2H), 1.60 (m, 2H). ¹³C NMR (125 MHz, CDCl₃): δ 141.6,137.0,132.9,132.2,132.0, 130.9,130.3,130.1,58.3,29.1. HRMS: Calcd for C₁₆H₁₈P₂O₂Cl₂(M⁺): 374.0159. Found: 374.0163.

### EXAMPLE 41

### Synthesis of cis- and trans-(MeCH₂CH₂CH₂CH₂)P(OMe)CH₂CH₂P(OMe) (CH₂CH₂CH₂CH₂Me)

A suspension of polymer-bound (Cl)PCH₂CH₂P(Cl) (Resin V, 27.0 g, 0.48 mmol/g, 13.0 mmol) in 200 mL of THF was treated slowly with an excess of ClMg(CH₂)₅MgCl (0.5 M in THF, 60 mmol) over a period of 10 min. The resulting mixture was stirred at room temperature for 2 h before the solution was filtered off. The resin was washed with THF (3 X 10 mL), H₂O/THF (20% H₂O, 2 X 10 mL), hexane (3 X 10 mL). The resulting resin was dried *in vacuo* overnight to afford polymer-bound Me(CH₂)₄PCH₂CH₂P(CH₂)₄Me. ³¹P NMR (122 MHz, CDCl₃): δ 6.15 (s, br.) ppm.

A mixture of polymer-bound Me(CH₂)₄PCH₂CH₂P(CH₂)₄Me (20 g, 0.476 mmol/g, 9.52 mmol) and MeOH (0.77 g, 24 mmol) in 200 mL of THF was refluxed overnight before the resin was filtered off and washed with THF (2 X 10 mL). The combined filtrates were concentrated *in vacuo* to afford 850 mg (30% yield) of the title compounds Me(CH₂)₄P(OMe)CH₂CH₂P(OMe)(CH₂)₄Me. It was >95% pure by ¹H NMR and GC/MS. ³¹P NMR (202 MHz, CDCl₃): δ 139.4,139.1 ppm. ¹H NMR (500 MHz, CDCl₃): δ 3.44 (d, J_{p-H} = 10.6 Hz, 6H), 1.78-1.25 (m, 20H), 0.85 (t, J = 7.09 Hz, 6H). ¹³C NMR (125 MHz, CDCl₃): δ 56.7, 33.3, 32.7, 26.1, 23.7, 22.3,13.8. HRMS: Calcd for C₁₃H₂₉P₂O₂(M⁺-CH₃): 279.1643. Found: 279.1616.

### EXAMPLE 42

### Synthesis of cis- and trans-(-CH₂CH₂CH₂CH₂CH₂)PH(O)CH₂CH₂PH(O)-

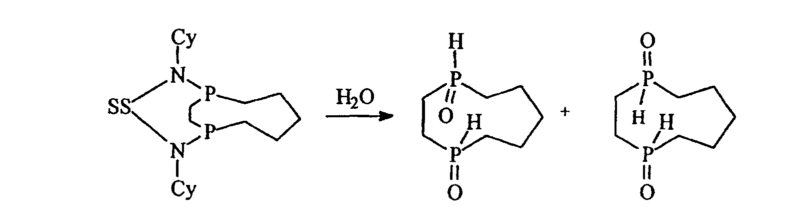

A mixture of polymer-bound (-CH₂CH₂CH₂CH₂CH₂)PCH₂CH₂P- (1.0 g, 0.327 mmol/g, 0.327 mmol, from Example 36-M) and H₂O (0.5 g, 27.8 mmol) in 5 mL of THF was refluxed overnight before the resin was filtered off and washed with THF (2 X 5 mL). The combined filtrates were concentrated *in vacuo* to afford 10 mg (16% yield) of the title compounds. It was >95% pure by ¹H NMR and GC/MS. 3¹P NMR (121 MHz, CDCl₃, ¹H-decoupled): δ 36.0, 35.0 ppm. ³¹P NMR (202 MHz, CDCl₃, ¹H-coupled): δ 36.0 (d, Jₚ-H = 460.1 Hz), 35.0 (d, J_{p-H} = 457.1 Hz). ¹H NMR (500 MHz, CDCl₃): δ 6.91 (d, J_{p-H} = 456.4 Hz, 1H), 6.89 (d, J_{p-H} = 465.4 Hz, 1H), 2.07 (m, 2H), 1.84-1.76 (m, 3H), 1.57 (m, 2H), 1.37-1.26 (m, 5H), 0.84 (t, J = 7.21 Hz, 2H). ¹³C NMR (75 MHz, CDCl₃): δ 32.7 (t, J = 7.0 Hz), 22.1, 21.3,13.7. HRMS: Calcd. for C₇H₁₅P₂O₂(M⁺-H): 193.0547. Found: 193.0557.

### EXAMPLE 43

### Synthesis of cis-and trans-(-CH₂CH₂CH₂CH₂CH₂)P(OMe)CH₂CH₂P (OMe)-

A mixture of polymer-bound (-CH₂CH₂CH₂CH₂CH₂)PCH₂CH₂P- (0.5 g, 0.44 mmol/g, 0.22 mmol) and MeOH (0.20 g, 6.3 mmol) in 5 mL of THF was refluxed overnight before the resin was filtered off and washed with THF (2 X 5 mL). The combined filtrates were concentrated *in vacuo* to afford 10 mg (2 1 % yield) of the title compounds. ³¹P NMR (121 MHz, CDCl₃): δ 137.6,137.4 ppm. HRMS: Calcd. for C₉H₂₀P₂O₂(M⁺): 222.0939. Found: 222.0909.

### EXAMPLE 44

### Synthesis of [(1S, 2S)-trans-1, 2-C₆H₁₀O₂]P(Cl)CH₂CH₂P(Cl)-

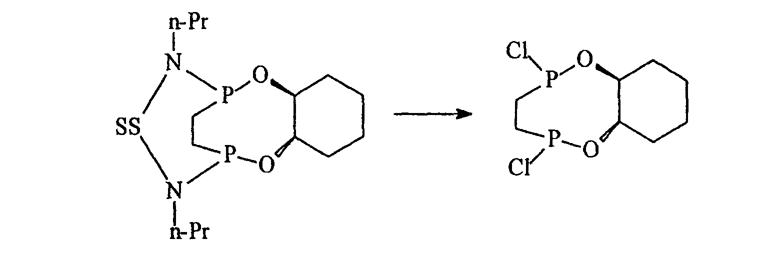

A mixture of polymer-bound [(1S,2S)-trans-1,2-OCHCH₂CH₂CH₂CH₂CHO)PCH₂CH₂P- from Example 35 (0.5 g, 0.48 mmol/g, 0.24 mmol) and PCl₃ (0.50 g, 3.64 mmol) in 5 mL of THF was stirred at room temperature overnight before the resin was filtered off and washed with THF (2 X 5 mL). The combined filtrates were concentrated *in vacuo* to afford 23 mg (35% yield) of the title compounds. ³¹P NMR (121 MHz, CDCl₃): δ 190.9 ppm.

### EXAMPLE 45

### Synthesis of (PhCH₂CH₂)PH(O)CH₂CH₂PH(O)(CH₂CH₂Ph)

A mixture of polymer-bound (PhCH₂CH₂)PCH₂CH₂P(CH₂CH₂Ph) (1.5 g, 0.45 mmol/g, 0.675 mmol, from Example 36-I) and H₂O (0.5 g, 27.8 mmol) in 5 mL of THF was refluxed overnight before the resin was filtered off and washed with THF (2 X 5 mL). The combined filtrates were concentrated *in vacuo* to afford 65 mg (29% yield) of the title compounds. It was >95% pure by ¹H NMR and GC/MS. ³¹P NMR (202 MHz, CDCl₃, ¹H-decoupled): δ 34.0 ppm. ³¹P NMR (202 MHz, CDCl₃, ¹H-coupled) δ 34.0 (d, J_{p-H} = 465.4 Hz). ¹H NMR (500 MHz, CDCl₃): δ 7.2-7.1 (m, 10H), 6.87 (d, J_{P-H} = 465.4 Hz, 2H), 2.96-2.87 (m, 4H), 2.18-1.97 (m, 8H). ¹³C NMR (125 MHz, CDCl₃): δ 139.6, 128.8, 128.1, 126.8, 29.6, 27.7, 20.8. HRMS: Calcd. for C₁₈H₂₄P₂O₂(M⁺): 334.1252. Found: 334.1243.

### EXAMPLE 46

### Synthesis of cis- and trans-(PhO)P(Ph)CH₂CH₂P(Ph)(PhO)

A suspension of polymer-bound (Ph)PCH₂CH₂P(Ph) from Example 34 (2.0 g, 0.456 mmol/g, 0.913 mmol) and PhOH (0.152 g, 1.615 mmol) in 5 mL of THF was refluxed overnight before the resin was filtered off and washed with THF (2 X 10 mL). The combined filtrates were concentrated *in vacuo* to afford 126 mg (36% yield) of the title compounds (Ph)P(OPh)CH₂CH₂P(OPh)(Ph). It was >95% pure by ¹H NMR and GC/MS. ³¹P NMR (202 MHz, CDCl₃): δ 121.8, 121.4 ppm. ¹H NMR (500 MHz, CDCl₃): δ 7.71-6.99 (m, 20H), 2.34-2.18 (m, 4H). ¹³C NMR (125 MHz, CDCl₃): δ 157.0, 140.9, 129.9, 129.6, 128.7, 122.5, 120.2, 118.8, 115.7, 28.9. HRMS: Calcd. for C₂₆H₂₄P₂O₂(M⁺): 430.1252. Found: 430.1282.

### EXAMPLE 47

### Synthesis of cis- and trans-[3,5-(CF₃)₂C₆H₃O]P(CH₂CMe₂Ph)CH₂CH₂P[3,5-(CF₃)2C₆H₃O]P(CH₂CMe₂Ph)₂

A suspension of polymer-bound (PhCMe₂CH₂)PCH₂CH₂P (CH₂CMe₂Ph)₂ from Example 36-D (10.0 g, 0.317 mmol/g, 3.17 mmol) and 3,5-(CF₃ₕC₆H₃OH (1.10 g, 4.78 mmol) in THF (100 mL) was refluxed overnight before the resin was filtered off and washed with THF (2 X 10 mL). The filtrates were dried *in vacuo* to give 1.2 g (62% yield) of the title compounds. It was >95% pure by ¹H NMR and GC/MS. ³¹P NMR (121 MHz, C₆D₆): 8 136.3, 135.3 ppm. ¹H NMR (500 MHz, C₆D₆): 8 7.40-6.84 (m, 16H), 2.15 (m, 1H), 1.60 (m,1H), 1.52 (m, 1H),1.36-1.21 (m,17H). ³C NMR (125 MHz, C₆D₆): δ 158.9, 147.8,133.2, 133.1, 132.9,126.6,126.2, 125.0, 122.8,118.7, 116.6, 115.5, 51.0, 37.1, 31.6, 29.8, 29.7, 28.1. HRMS: Calcd. for C₃₈H₃₆P₂O₂F₁₂(M⁺): 814.1999. Found: 814.1954.

### EXAMPLE 48

### Synthesis of cis- and trans-(CH₃CH₂CH₂S)P(Ph)CH₂CH₂P(Ph)(SCH₂CH₂CH₃)

A suspension of polymer-bound (Ph)PCH₂CH₂P(Ph) from Example 34 (20.0 g, 0.456 mmol/g, 9.13 mmol) and CH₃CH₂CH₂SH (1.83 g, 23.6 mmol) in THF (200 mL) was refluxed overnight before the resin was filtered off and washed with THF (2 X 20 mL). The filtrates were dried *in vacuo* to remove the solvent and excess CH₃CH₂CH₂SH. The resulting residue was 2.69 g (78% yield) of the title compounds. It was >95% pure by ¹H NMR and GC/MS. 31P NMR (202 MHz, C₆D₆): δ 29.55,29.52 ppm. ¹H NMR (500 MHz, C₆D₆): δ 7.57 (m, 4H), 7.08-7.03 (m, 6H), 2.46 (m, 4H), 2.20 (m, 4H), 1.47 (m, 4H), 0.75 (t, J = 7.13 Hz, 6H). ¹³C NMR (125 MHz, C₆D₆): δ 138.1, 130.5, 127.6, 126.7, 34.0, 26.0 (m, Jp-C = 8.75 Hz), 24.1, 12.0. HRMS: Calcd. for C₂₀H₂₉P₂S₂(M⁺+ H): 395.1186. Found: 395.1107.

### EXAMPLE 49

### Preparation of Dichloro[cis and trans-1,2-bis[(1-propylthio)-(1-phenyl) phosphino]ethane]Palladium (II)

A solution of (CH₃CH₂CH₂S)P(Ph)CH₂CH₂P(Ph)(SCH₂CH₂CH₃) from Example 106 (cis/trans ≈ 50%, 0.300 g, 0.76 mmol) in 20 mL of CH₂Cl₂ was added dropwise to a solution of PdCl₂(COD) (0.217 g, 0.76 mmol) in 25 mL of CH₂Cl₂ at room temperature and the solution was stirred overnight. The resulting reaction mixture was concentrated *in vacuo* to give solid compounds. After washed with hexane (2 X 5 mL) and dried *in vacuo,* 0.40 g (92% yield) of the title compounds were obtained. Recrystallization from dichloromethane/hexane (1:1 volume ratio) gives the Dichloro[trans-1,2-bis[(1-propylthio)-(1-phenyl) phosphino]ethane]Palladium (II) as yellow crystals. The molecular structure of [tram-(CH₃CH₂CH₂S) P(Ph)CH₂CH₂P (Ph)(SCH₂CH₂CH₃)][PdCl_{2]} has been determined by X-ray diffraction. [trans-(CH₃CH₂CH₂S) P(Ph)CH₂CH₂P(Ph)(SCH₂CH₂CH₃)][PdCl_{2]} is triclinic , P-1 (No. 2), a = 11.414(2) A, b =12.952(2) A, c = 8.221(1) A, alpha = 92.75(1)°, beta = 97.25(1)°, gamma = 98.10(1)°, T = -100°C, Vol = 1190.9 Å³, Z = 2, Formula weight = 571.83, Density =1.594 g/cc, µ(Mo) =13.02 cm⁻¹. Anal. Calcd. for C₂₀H₂₈P₂S₂PdCl₂: C, 42.01; H, 4.94; Cl, 12.40. Found: C, 42.55; H, 4.57; Cl, 11.82.

### Synthesis of Polymer-Bound Monophosphines

### EXAMPLE 50

A solution of PCl₃ (26 g, 189 mmol) in 400 mL of THF was treated slowly with Resin I (25 g, 1.21 mmol/g, 30.3 mmol) while stirring at room temperature for a period of 30 min. before Et₃N (16 g, 157.5 mmol) was added. The resulting suspension was stirred at room temperature overnight before the solution was filtered off. The resin was washed with hexane (2 X 50 mL), CH₂Cl₂ (5 X 80 mL), and hexane (5 X 30 mL). The resulting resin was dried *in vacuo* overnight. ³¹P NMR (122 MHz, CDCl₃): δ 179.1 ppm.

A suspension of the resin above (5.0 g, 1.12 mmol/g, 5.6 mmol) in 150 mL of THF was treated slowly with phenylmagnesium bromide (2 M solution in diethylether, 64 mmol). The resulting mixture was stirred at room temperature for 30 min. before the solution was filtered off and the resin was washed with THF (3 X 50 mL), Me₂CHOH/THF (20% Me₂CHOH, 10 mL), hexane (3 X 30 mL). The resulting resin was dried *in vacuo* overnight to afford polymer-bound PPh₂. ³¹P NMR (122 MHz, CDCl₃): δ 52.3 ppm.

### EXAMPLE 51

A solution of Cl₂PPh (33.8 g, 189 mmol) and Et₃N (16.0 g, 157.5 mmol) in 500 mL of THF was treated slowly with Resin 1 (25.0 g, 1.21 mmol/g, 30.3 mmol) while stirring at room temperature for a period of 10 min. The resulting suspension was stirred at room temperature overnight before the solution was filtered off. The resin was washed with THF (50 mL), hexane (3 X 50 mL), CH₂Cl₂ (4 X 50 mL), and hexane (2 X 50 mL). The resulting resin was dried *in vacuo* overnight. ³¹P NMR (122 MHz, CDCl₃): δ 135.4 ppm.

A suspension of the resin (5.0 g, 1.03 mmol/g, 5.2 mmol) in 150 mL of THF was treated slowly with i-propylmagnesium chloride (0.5 M solution in diethylether, 32.0 mmol). The resulting mixture was stirred at room temperature for 2 h before the solution was filtered off and the resin was washed with THF (3 X 10 mL), Me₂CHOH/THF (20% Me₂CHOH, 5 mL), hexane (3 X 30 mL). The resulting resin was dried *in vacuo* overnight to afford polymer-bound (i-C₃H₇)PPh. ³¹P NMR (122 MHz, CDCl₃): δ 55.5 ppm.

### EXAMPLE 52

Example 52 was performed using the same techniques described in Examples 50 and 51. Results are shown in Table 5A below.

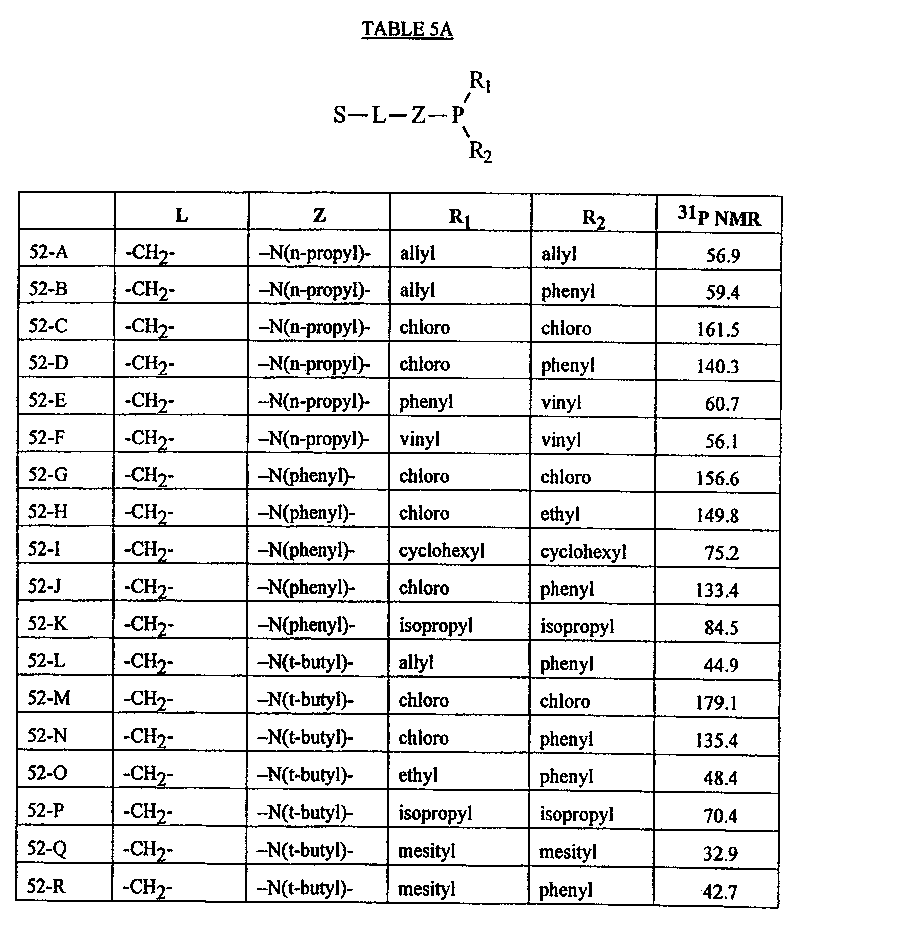

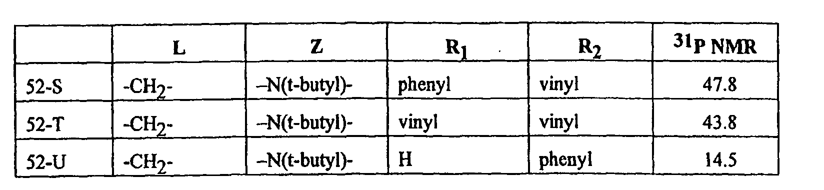

### Cleavage of Ligands from the Polymer-Supported Monophosphines

### EXAMPLE 53

### Synthesis of ClPPh₂

A suspension of polymer-bound PPh₂ from Example 50 (1.25 g, 0.98 mmol/g, 1.23 mmol) and PCl₃ (0.66 g, 4.8 mmol) in THF (10 mL) was stirred overnight at room temperature before the resin was filtered off and washed with THF (2 X 10 mL). Removal of solvents and excess PCl₃ from the filtrates by vacuum afforded 110 mg (41% yield) of crude ClPPh₂, of which the ¹H, ¹³C and ³¹P NMR spectra obtained matched exactly those for authentic sample. ³¹P NMR (121 MHz, CDCl₃): δ 83.4 ppm. ¹H NMR (500 MHz, CDCl₃): δ 7.49-7.46 (m, 4H), 7.31-7.26 (m, 6H). ¹³C NMR (125 MHz, CDCl₃): δ 138.8 (d, J_{p-c} = 32.6 Hz), 131.7 (d, J_{p-c} = 24.5 Hz), 130.4, 128.6 (d, J_{p-c} = 6.91 Hz). HRMS: Calcd. for C₁₂H₁₀PCl(M⁺): 220.0209. Found: 220.0216.

### EXAMPLE 54

### Synthesis of ClPCy₂

A suspension of polymer-bound PCy₂ from Example 52 (1.0 g, 1.1 mmol/g, 1.1 mmol) and PCl₃ (0.66 g, 4.8 mmol) in THF (10 mL) was stirred overnight at room temperature before the resin was filtered off and washed with THF (2 X 5 mL). Removal of solvents and excess PCl₃ from the filtrates by vacuum afforded 208 mg (82% yield) of crude CIPCy₂, of which the ¹H, ¹³C and ³¹P NMR spectra obtained matched exactly those for authentic sample. ³¹P NMR (121 MHz, CDCl₃): δ 128.8 ppm. ¹H NMR (500 MHz, CDCl₃): δ 1.74 (m, 12H), 1.20 (m, 10H). ¹³C NMR (125 MHz, CDCl₃): δ 38.4 (d, J_{p-c} = 31.4 Hz), 27.8 (d, J_{p-c} =11.5 Hz), 26.9 (d, J_{p-c} = 9.53 Hz), 26.4.

### EXAMPLE 55

### Synthesis of CH₃CH₂CH₂SPPh₂

A suspension of polymer-bound PPh₂ from Example 50 (1.25 g, 0.98 mmol/g, 1.23 mmol) and CH₃CH₂CH₂SH (0.37 g, 4.8 mmol) in THF (10 mL) was refluxed overnight in a sealed reactor before the resin was filtered off and washed with THF (2 X 10 mL). After the solvent and excess CH₃CH₂CH₂SH were removed from filtrates by vacuum, 200 mg (62% yield) of CH₃CH₂CH₂SPPh₂ was obtained. It was >95% pure by ¹H NMR and GC/MS. ³¹P NMR (202 MHz, CDCl₃): δ 28.8 ppm. ¹H NMR (500 MHz, CDCl₃): δ 7.45 (m, 4H), 7.21 (m, 6H), 2.62 (m, 2H), 1.59 (m, 2H), 0.86 (t, J = 7.24 Hz, 3H). ¹³C NMR (125 MHz, CDCl₃): δ 138.3, 132.4, 129.1, 128.3, 35.7; 25.0, 13.2. HRMS: Calcd. for C₁₅H₁₇PS(M⁺): 260.0789. Found: 260.0793.

### EXAMPLE 56

### Synthesis of CIP(Ph)CH=CH₂

A suspension of polymer-bound P(Ph)CH=CH₂ from Example 52-E (1.0 g, 0.94 mmol/g, 0.94 mmol) and PCl₃ (0.66 g, 4.8 mmol) in THF (10 mL) was stirred overnight at room temperature before the resin was filtered off and washed with THF (2 X 10 mL). Removal of solvents and excess PCl₃ from the filtrates by vacuum afforded 127 mg (79% yield) of crude CIP(Ph)CH=CH₂. ³¹P NMR (121 MHz, CDCl₃): δ 79.9 ppm. ¹H NMR (500 MHz, CDCl₃): δ 7.59-7.35 (m, 5H), 6.58 (m, 1H), 5.91 (m, 2H). ¹³C NMR (125 MHz, CDCl₃): δ 139.3, 138.3, 131.7, 130.9, 130.0, 128.9. HRMS: Calcd. for C₈H₈PCl(M⁺): 170.0052. Found: 170.0041.

### EXAMPLE 57

### Synthesis of EtOP(CHMe₂)

A suspension of polymer-bound P(CHMe₂)₂ from Example 51 (1.25 g, 1.06 mmol/g, 1.32 mmol, ³¹P NMR (121 MHz, CDCl₃): δ 70.4 ppm) and EtOH (0.22 g, 4.8 mmol) in THF (10 mL) was refluxed overnight before the resin was filtered off and washed with THF (2 X 10 mL). After the solvents were removed from filtrates by vacuum, 55 mg (26% yield) of EtOP(CHMe₂) was obtained. It was >95% pure by ¹H NMR and GC/MS. ³¹P NMR (202 MHz, CDCl₃): δ151.4 ppm. ¹H NMR (500 MHz, CDCl₃): δ 3.71 (m, 2H), 1.15 (m, 3H), 1.00 (m, 12H). ¹³C NMR (125 MHz, CDCl₃): δ 67.9, 27.8, 17.7, 16.9. HRMS: Calcd. for C₈H₁₉PO(N4⁺): 162.1174. Found: 162.1175.

### EXAMPLE 58

### Synthesis of CH₃CH₂CH₂SP(CHMe₂)₂

An analogous procedure to that for EtOP(CHMe₂) was used for the synthesis of title compound using polymer-bound P(CHMe₂)₂ from Example 51 (1.25 g, 1.06 mmol/g, 1.32 mmol) and CH₃CH₂CH₂SH (0.37 g, 4.8 mmol). After the solvents were removed from filtrates by vacuum, 250 mg (98% yield) of CH₃CH₂CH₂SP(CHMe₂) was obtained. It was >95% pure by ¹H NMR and GC/MS. ³¹P NMR (202 MHz, CDCl₃): δ 65.7 ppm. ¹H NMR (500 MHz, CDCl₃): δ 2.48 (m, 2H), 1.81 (m, 2H), 1.59 (m, 2H), 1.07 (m, 12H), 0.90 (t, J = 7.33 Hz, 3H). ¹³C NMR (125 MHz, CDCl₃): δ 36.3, 25.1, 19.2, 18.2, 12.9.

### EXAMPLE 59

### Synthesis of (Me₂CH)PH(O)(CHMe₂)

A suspension of polymer-bound P(CHMe₂)₂ from Example 51 (1.25 g, 1.06 mmol/g, 1.32 mmol) and H₂O (0.1 g, 4.8 mmol) in THF (10 mL) was refluxed overnight before the resin was filtered off and washed with THF (2 X 5 mL). The filtrate was dried *in vacuo* to remove the solvent and excess H₂O. The resulting residue was 50 mg (28% yield) of (Me₂CH)PH(O)(CHMe₂). It was >95% pure by ¹H NMR and GC/MS. ³¹P NMR (121 MHz, CDCl₃, ¹H-decoupled): δ 56.9 ppm. ³¹P NMR (121 MHz, CDCl₃, ¹H-coupled): δ 24.1 (d, J_{P-H} = 429.7 Hz). ¹H NMR (500 MHz, CDCl₃): δ 6.30 (d, J_{P-H} = 434.1 Hz, 1H), 1.92 (m, 2H), 1.15 (m, 12H). ¹³C NMR (125 MHz, CDCl₃): δ 25.0 (d, J_{P-C} = 63.9 Hz),16.0,14.8. HRMS: Calcd. for C₆H₁₅PO(M⁺): 134.0861. Found: 134.0856.

### EXAMPLE 60

### Synthesis of CH₃CH₂CH₂SP(Ph)(2,4,6-Me₃H₂C₆)

A suspension of polymer-bound PPh(2,4,6-Me₃H₂C₆) from Example 52-R (1.25 g, 0.95 mmol/g, 1.18 mmol, ³¹P NMR (121 MHz, CDCl₃): δ 42.7 ppm) and CH₃CH₂CH₂SH (0.37 g, 4.8 mmol) in THF (10 mL) was refluxed overnight before the resin was filtered off and washed with THF (2 X 5 mL). The filtrate was dried *in vacuo* to remove the solvent and excess CH₃CH₂CH₂SH. The resulting residue was 350 mg (98 % yield) of CH₃CH₂CH₂SP(Ph)(2,4,6-Me₃H₂C₆). It was >95% pure by ¹H NMR and GC/MS. ³¹P NMR (121 MHz, CDCl₃): δ 20.6 ppm. ¹H NMR (500 MHz, CDCl₃): δ 7.31 (m, 2H), 7.13 (m, 3H), 6.79 (s, 2H), 2.72 (m, 2H), 2.26 (s, 6H), 2.17 (s, 3H), 1.67 (m, 2H), 0.92 (t, J = 7.31Hz, 3H). ¹³C NMR (125 MHz, CDCl₃):
δ 144.0, 140.9, 140.2, 132.0, 129.7, 129.4, 128.2, 127.1, 38.0, 25.5, 23.3, 21.2, 13. 4. Calcd for C₁₈H₂₃Ps(M⁺): 302.1258. Found: 302.1266.

### EXAMPLE 61

### Synthesis of (2,4,6-Me₃H₂C₆)PH(O)(Ph)

Scale-up preparation was carried out using the following procedure. A suspension of polymer-bound P(Ph)Cl from Example 52 (15.0 g, 1.03 mmol/g, 15.4 mmol) in 200 mL of THF was treated with Me₃C₆H₂MgCl (98 mmol, 2M solution in THF) over a period of 10 min. The resulting mixture was stirred for an additional 2 h at ambient temperature before the solution was filtered off and the resin was washed with THF (3 X 20 mL), Hexane (3 X 20 mL), Me₂CHOH (2 X 15 mL), Hexane (2 x 20 mL). A suspension of the resin above (ca. 15 g) and H₂O (3.6 g, 200 mmol) in 200 of THF was refluxed overnight. The mixture was cooled to room temperature, and the resulting resin was filtered off and washed with Hexane (2 X 20 mL). The filtrates were evaporated to dryness and the residue was sublimed at 150 °C/10⁻⁴ torr conditions to afford 2.0 g (53% yield) of the title compound. ³¹P NMR (121 MHz, CDCl₃, ¹H-decoupled): 6 18.0. ³¹P NMR (121 MHz, CDCl₃, ¹H-coupled): δ 18.0 (d, J_{P-H} = 512.1 Hz). ¹H NMR (500 MHz, CDCl₃): δ 8.55 (d, J_{P-H} = 512.1 Hz,1H), 7.57 (m, 2H), 7.48 (m, 1H), 7.35 (m, 2H), 6.80 (d, J_{P-C} = 4.0 Hz, 2H), 2.29 (s, 6H), 2.23 (s, 3H). ¹³C NMR (125 MHz, CDCl₃): δ 144.8, 143.3, 133.5, 131.5, 131.0, 129.5, 128.0,120.7, 22.1, 21.9. HRMS: Calcd. for C₁₅H₁₇PO(M⁺): 244.1017. Found: 244.1015. Anal. Calcd. for C₉H₁₃PO: C, 73.76; H, 7.01; P,12.68. Found: C, 73.66; H, 6.92; P, 12.70.

### EXAMPLE 62

### Synthesis of CH₃CH₂CH₂SP(Ph)(CHMe₂)

A suspension of polymer-bound PPh(CHMe₂) from Example 51 (1.25 g, 1.02 mmol/g,1.28 mmol, ³¹P NMR (121 MHz, CDCl₃): δ 55.5 ppm) and CH₃CH₂CH₂SH (0.37 g, 4.8 mmol) in THF (10 mL) was refluxed overnight before the resin was filtered off and washed with THF (2 X 5 mL). The filtrate was dried *in vacuo* to remove the solvent and excess CH₃CH₂CH₂SH. The resulting residue was 280 mg (97 % yield) of CH₃CH₂CH₂SP(Ph)(CHMe₂). It was >95% pure by ¹H NMR and GC/MS. ³¹P NMR (121 MHz, CDCl₃): δ 45.2 ppm. ¹H NMR (500 MHz, CDCl₃): δ 7.55 (m, 2H), 7.28 (m, 3H), 2.58 (m, 2H), 1.99 (m, 1H), 1.58 (m, 2H), 1.04 (m, 2H), 0.97-0.81 (m, 9H). ¹³C NMR (125 MHz, CDCl₃): δ 138.1, 132.0, 131.1, 128.2, 35.6, 34.5, 29.6, 19.0, 13.0. Calcd. for C₁₂H₁₉PSO(MO⁺): 242.0894. Found: 242.0883.

### EXAMPLE 63

### Synthesis of (Me₂CH)PH(O)(Ph)

A suspension of polymer-bound PPh(CHMe₂) from Example 51 (1.25 g, 1.02 mmol/g, 1.28 mmol, ³¹P NMR (121 MHz, CDCl₃): δ 55.5 ppm) and H₂O (0.1 g, 4.8 mmol) in THF (10 mL) was refluxed overnight before the resin was filtered off and washed with THF (2 X 5 mL). The filtrate was dried *in vacuo* to remove the solvent and excess H₂O. The resulting residue was 80 mg (37 % yield) of (Me₂CH)PH(O)(Ph). It was >95% pure by ¹H NMR and GC/MS. ³¹P NMR (121 MHz, CDCl₃, ¹H-decoupled): δ 47.8. ³¹P NMR (121 MHz, CDCl₃, ¹H-coupled): δ 47.8 (d, J_{P-H} = 487.7 Hz). ¹H NMR (500 MHz, CDCl₃): δ 7.44-7.53 (m, 5H), 7.25 (d, J_{P-H} = 487.5 Hz, 1H), 2.33 (m, 1H), 1.12 (m, 6H). ¹³C NMR (125 MHz, CDCl₃): δ 133.8, 131.1, 129.4, 125.4, 28.0, 14.7. HRMS: Calcd for C₉H₁₃PO(M⁺): 168.0704. Found: 168.0704.

### Synthesis of Polymer-Bound Bidentate Ligands

### EXAMPLE 64

### Polymer-Bound P(Ph)CH₂CH₂P(Ph)₂

A suspension of polymer-bound P(Ph)CH=CH₂ from Example 52-E (1.0 g, 0.94 mmol), Ph₂PH (2.1 g, 11.3 mmol) and NaO-*t*Bu (0.1 g, 1.0 mmol) in 10 mL of THF was refluxed overnight before the solution was filtered off. The resulting resin was washed with hexane (2 X 50 mL), CH₂Cl₂ (5 X 80 mL), Me₂CHOH (2 X 5 mL) and hexane (5 X 30 mL). The resin was dried *in vacuo* overnight. ³¹P NMR (122 MHz, CDCl₃): δ 62.7, -11.3 ppm.

### EXAMPLE 65

### Polymer-Bound P(Ph)CH₂CH₂P(Ph)Me

A suspension of polymer-bound P(Ph)CH=CH₂ from Example 52-S (1.7 g, 1.76 mmol, 1.04 mm/g), Ph(Me)PH (2.0 g, 14.5 mmol) and NaO-*t*Bu (0.1 g, 1.0 mmol) in 10 mL of THF was refluxed overnight before the solution was filtered off The resulting resin was washed with hexane (2 X 50 mL), CH₂Cl₂ (5 X 80 mL), Me₂CHOH (2 X 5 mL) and hexane (5 X 30 mL). The resin was dried *in vacuo* overnight. ³¹P NMR (122 MHz, CDCl₃): δ 45.8, -31.7 ppm.

### EXAMPLE 66

### Polymer-Bound 1-P(Ph)-2-C₆H₄OMe

A suspension of polymer-bound P(Ph)Cl from Example 52-D (2.0 g, 1.86 mmol, 0.93 mm/g), and 1,2-MeOC₆H₄MgBr (15.0 mmol, 0.5 M in THF solution) in 10 mL of THF was refluxed over 2 h before the solution was filtered off. The resulting resin was washed with hexane (2 X 10 mL), CH₂Cl₂ (5 X 10 mL), Me₂CHOH (5 mL) and hexane (5X10 mL). The resin was dried *in vacuo* overnight. ³¹P NMR (122 MHz, CDCl₃): δ 57.3 ppm.

### EXAMPLE 67

### Polymer-Bound 1-P(Ph)-2,4-C₆H₃(OMe)₂

A suspension of polymer-bound P(Ph)Cl Example 52-D (2.0 g, 1.86 mmol, 0.93 mm/g), and 1,2,4-(MeO)₂C₆H₃MgBr (15.0 mmol, 0.5 M in THF solution) in 10 mL of THF was refluxed over 2 h before the solution was filtered off. The resulting resin was washed with hexane (2 X 10 mL), CH₂Cl₂ (5 X 10 mL), Me₂CHOH (5 mL) and hexane (5X10 mL). The resin was dried *in vacuo* overnight. ³¹P NMR (122 MHz, CDCl₃): δ 56.1 ppm.

### EXAMPLE 68

### Polymer-Bound 1-P(Ph)-3-C₆H₄OMe

A suspension of polymer-bound P(Ph)Cl Example 52-N (0.8 g, 0.88 mmol, 0.95 mm/g), and 1,3-MeOC₆H₄MgBr (4.0 mmol, 0.5 M in THF solution) in 10 mL of THF was stirred at room temperature over 2 h before the solution was filtered off. The resulting resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 52. 8 ppm

### EXAMPLE 69

### Polymer-Bound 1-P(Ph)-2-C₆H₄SMe

A suspension of polymer-bound P(Ph)Cl Example 52-D (2.0 g, 1.86 mmol, 0.93 mm/g), and 1,2-MeSC₆H₄ZnI (15.0 mmol, 0.5 M in THF solution) in 10 mL of THF was refluxed overnight before the solution was filtered off. The resulting resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ56.9 ppm.

### EXAMPLE 70

### Polymer-Bound 1-P(Ph)-8-N,N-Dimethylnaphthylamine

A solution of N,N,N',N'-tetramethylethylenediamine (2.04 g, 17.6 mmol) in 15 mL of hexane was treated with n-butyllithium (9.28 mmol, 1.6 M solution in Hexane) dropwise over a period of 5 min, the solution was stirred an additional 15 min before N,N-dimethyl-1-naphthylamine (4.0 g, 23.4 mmol) was added. The resulting mixture was stirred at room temperature overnight before a polymer-bound P(Ph)Cl Example 52-D (1.0 g, 0.93 mmol, 0.93 mm/g) was added to the reaction mixture. The resulting suspension was stirred overnight before solution was filtered off and resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 65.0 ppm.

### EXAMPLE 71

### Polymer-Bound P(Ph)2-(R)-N,N-Dimethyl-1'-Ferrocenylethyl amine

A solution of N,N,N',N'-tetramethylethylenediamine (0.22 g, 1.89 mmol) in 5 mL of hexane was treated with n-butyllithium (1.28 mmol, 1.6 M solution in Hexane) dropwise over a period of 5 min, the solution was stirred an additional 15 min before (R)-(+)-N,N-dimethyl-1-ferrocenylethylamine (0.5 g, 1.89 mmol) was added. The resulting mixture was stirred at room temperature overnight before a polymer-bound P(Ph)Cl (0.5 g, 0.466 mmol, 0.93 mm/g, Example 52-D) was added to the reaction mixture. The resulting suspension was stirred overnight before solution was filtered off and resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 52.5 ppm.

### EXAMPLE 72

### Polymer-Bound P(Et)-2-(R)-N,N-Dimethyl-1'-Ferrocenylethyl amine

A similar procedure to those described above was used to synthesize the title compound using N,N,N',N'-tetramethylethylenediamine (0.80 g, 6.88 mmol), n-butyllithium (4.8 mmol, 1.6 M solution in Hexane), (R)-(+)-N,N-dimethyl-1-ferrocenylethylamine (1.5 g, 5.66 mmol) and a polymer-bound P(Et)Cl from Example 52-H (2.3 g, 2.16 mmol, 0.94 mm/g). ³¹P NMR (122 MHz, CDCl₃): δ 35.4 ppm.

### EXAMPLE 73

### Polymer-Bound P(Ph)-2-C₄H₃S

A suspension of polymer-bound P(PH)Cl from Example 52-N (0.8 g, 0.82 mmol, 1.03 mm/g), and 2-thienyllithium (5.0 mmol, 2 M in THF solution) in 10 mL of THF was stirred at room temperature over 2 h before the solution was filtered off. The resulting resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 37.0 ppm.

### EXAMPLE 74

### Polymer-Bound P(Ph)-2-C₃H₂SN

A suspension of polymer-bound P(Ph)Cl from Example 52-D (2.0 g, 1.86 mmol, 0.93 mm/g), and 2-thiazolezinc bromide (15.0 mmol, 0.5 M in THF solution) in 10 mL of THF was refluxed overnight before the solution was filtered off. The resulting resin was washed with hexane (2 X 10 mL), CH₂Cl₂ (5 X 10 mL), Me₂CHOH (5 mL) and hexane (5 X 10 mL). The resin was dried *in vacuo* overnight. ³¹PNMR(122MHz,CDCl₃): δ56.2 ppm.

### EXAMPLE 75

### Polymer-Bound P(Ph)-2-C₅H₄N

A suspension of polymer-bound P(Ph)Cl from Example 52-D (3.0 g, 2.79 mmol, 0.93 mm/g), and 2-pyridylmagnesium bromide (15 mmol, 0.5 M in THF solution) in 20 mL of THF was stirred at room temperature overnight before the solution was filtered off. The resulting resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 63.4 ppm.

### EXAMPLE 76

### Polymer-Bound P(Ph)CH₂CH₂PPh₂ by Hydrophosphinations

A suspension of polymer-bound N(CH₂CH₂Me)P(Ph)H from Example 52-U (0.8 g, 0.80 mmol, 1.0 mm/g) and diphenylvinylphosphine (1.5 g, 7.06 mmol) in 20 mL of toluene was refluxed overnight before the solution was filtered off. The resulting resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 62.7, -11.4 ppm.

### EXAMPLE 77

### Polymer-Bound P(Ph)CH₂CH₂SPh

A suspension of polymer-bound N(Ph)P(Ph)CH=CH₂ from Example 52-J (2.0 g, 2.0 mmol, 1.0 mm/g) and EtS-SEt (1.0 g, 8.18 mmol) in 20 mL of THF was refluxed for 2 days before the solution was filtered off. The resulting resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 70.9 ppm.

### Cleavage of Bidentate Ligands from Resin

### EXAMPLE 78

### Synthesis of PhP(Cl)CH₂CH₂PPh₂

A suspension of polymer-bound PhPCH₂CH₂PPh₂ (1.0 g, 0.80 mmol, prepared as in Example 5 using n-propylamine and phenylMgBr, ³¹P NMR 62.7, -11.3 ppm) and PCl₃ (0.75 g, 5.46 mmol) in THF (10 mL) was stirred overnight at room temperature before the resin was filtered off and washed with THF (2 X 10 mL). Removal of solvents and excess PCl₃ from the filtrates by vacuum afforded 160 mg (56% yield) of crude PhP(Cl)CH₂CH₂PPh₂. It was >95% pure by ¹H NMR and GC/MS. ³¹P NMR (202 MHz, CDCl₃): δ 93.9 (d, J = 30.2 Hz), -11.8 (d, J = 30.4 Hz) ppm. ¹H NMR (500 MHz, CDCl₃): δ 7.53-7.16 (m, 15H), 2.05 (m,4H). ¹³CNMR(125 MHz, CDCl₃): δ 138.0, 137.7, 132.9, 131.2, 131.0, 129.1, 128.9, 128.7, 32.8, 22.5. HRMS: Calcd. for C₂₀H₁₉P₂Cl(M⁺): 356.0651. Found: 356.0650.

### EXAMPLE 79

### Synthesis of PhPH(O)CH₂CH₂PMe(Ph)

A suspension of polymer-bound PhPCH₂CH₂PMe(Ph) (1.0 g, 0.92 mmol, prepared as in Example 65, ³¹P NMR 47.9, -31.2 ppm) and H₂O (0.75 g, 41.7 mmol) in THF (10 mL) was refluxed overnight before the resin was filtered off and washed with THF (2 X 10 mL). Removal of solvents and excess H₂O from the filtrates by vacuum afforded 100 mg (39% yield) of crude PhPH(O)CH₂CH₂PMe(Ph). It was >95% pure by ¹H NMR and GC/MS. ³¹P NMR (202 MHz, CDCl₃): δ 29.2 (d, J = 38.1 Hz), -30.0 (d, J = 38.1 Hz); 29.0 (d, J = 38.6 Hz), -30.3 (d, J = 38.7 Hz) ppm. ³¹P NMR (202 MHz, CDCl₃, ¹H-coupled): δ 29.1 (d, J_{P-H} = 440.4 Hz), -30.0; 29.1 (d, J_{P-H} = 440.4 Hz), -30.3 ppm.

### EXAMPLE 80

### Synthesis of 1-PhP(Cl)-2-MeOC₆H₄

A suspension of polymer-bound 1-PPh-2-MeOC₆H₄ (2.0 g, 0.873 mmol/g, 1.746 mmol, prepared as in Example 66, ³¹P NMR 57.3) and PCl₃ (1.3 g, 9.49 mmol) in 15 mL of THF was stirred overnight at room temperature before the resin was filtered off and washed with THF (2 X 10 mL). Removal of solvents and excess PCl₃ from the filtrates by vacuum afforded 325 mg (74% yield) of crude 1-PhP(Cl)-2-MeOC₆H₄. It was >95% pure by ¹H NMR and GC/MS. ³¹P NMR (202 MHz, CDCl₃): δ 78.3 ppm. ¹H NMR (500 MHz, CDCl₃): δ 7.45 (m, 3H), 7.22 (m, 4H), 6.91 (m, 1H), 6.68 (m, 1H), 3.54 (s, 3H). ¹³C NMR (125 MHz, CDCl₃): δ 160.5,139.0, 132.2, 131.7, 131.6, 130.4, 128.5, 126.3, 121.5, 110.8, 55.9. HRMS: Calcd. for C₁₃H₁₂PClO(M⁺): 250.0314. Found: 250.0311.

### EXAMPLE 81

### Synthesis of 1-PhP(Cl)-2,4-(MeO)₂C₆H₃

A suspension of polymer-bound 1-PPh-2,4-(MeO)₂C₆H₃ (2.0 g, 0.85 mmol/g, 1.70 mmol, prepared as in Example 57, ³¹P NMR 56.1) and PCl₃ (1.3 g, 9.49 mmol) in 15 mL of THF was stirred overnight at room temperature before the resin was filtered off and washed with THF (2 X 10 mL). Removal of solvents and excess PCl₃ from the filtrates by vacuum afforded 450 mg (94% yield) of crude 1-PhP(Cl)-2,4-(MeO)₂C₆H₃. It was >95% pure by ¹H NMR and GC/MS. ³¹P NMR (202 MHz, CDCl₃): δ 78.8 ppm. ¹H NMR (500 MHz, CDCl₃): δ 7.43 (m, 2H), 7.22 (m, 4H), 6.38 (m, 1H), 6.27 (m, 1H), 3.62 (s, 3H), 3.55 (s, 3H). ¹³C NMR (125 MHz, CDCl₃): δ 163.4, 162.0, 139.0, 133.2, 131.5, 129.9, 128.2, 117.4, 105.7, 98.3, 55.7, 55.3. HRMS: Calcd. for C₁₄H₁₄PClO₂(M⁺): 280.0420. Found: 280.0421.

### EXAMPLE 82

### Synthesis of 1-PhP(Cl)-3-MeOC₆H₄

A suspension of polymer-bound 1-PPh-3-MeOC₆H₄ (0.8 g, 0.95 mmol/g, 0.76 mmol, prepared as in Example 58, ³¹P NMR 52.8) and PCl₃ (0.56 g, 4.1 mmol) in 15 mL of THF was stirred overnight at room temperature before the resin was filtered off and washed with THF (2 X 10 mL). Removal of solvents and excess PCl₃ from the filtrates by vacuum afforded 80 mg (42% yield) of crude 1-PPh(Cl)-3-MeOC₆H₄. It was >95% pure by ¹H NMR and GC/MS. ³¹P NMR (202 MHz, CDCl₃): δ 83.3ppm. ¹H NMR (500 MHz, CDCl₃): δ 7.05 (m, 2H), 7.30 (m, 3H), 7.21 (m, 1H), 7.06 (m, 2H), 6.83 (m, 1H), 3.68 (s, 3H). ¹³C NMR (125 MHz, CDCl₃): δ 159.8, 140.4, 139.0, 132.0, 130.6,129.9, 128.8, 124.1, 117.1,116.4,55.5. HRMS: Calcd for C₁₃H₁₂PCIO(M⁺): 250.0314. Found: 250.0322.

### EXAMPLE 83

### Synthesis of 2-PhP(Cl)C₄H₃S

A suspension of polymer-bound 2-PhPC₄H₃S (0.8 g, 0.98 mmol/g, 0.78 mmol, from Example 73,³¹P NMR 37.0) and PCl₃ (0.56 g, 4.1 mmol) in 10 mL of THF was stirred overnight at room temperature before the resin was filtered off and washed with THF (2 X 10 mL). Removal of solvents and excess PCl₃ from the filtrates by vacuum afforded 80 mg (45% yield) of crude 2-PhP(Cl)C₄H₃S. It was >95% pure by ¹H NMR and GC/MS. ^{31p} NMR (202 MHz, CDCl₃): δ 66.8 ppm. ¹H NMR (500 MHz, CDCl₃): δ 7.67-7.61 (m, 3H), 7.43 (m, 1H), 7.36 (m, 3H), 7.03 (m, 1H). ¹³C NMR (125 MHz, CDCl₃): δ 140.9,138.4,136.6,134.2,130.8,130.3,128.4,127.7. HRMS: Calcd. for C₁₀H₈PClSO(MO⁺): 241.9722. Found: 241.9739.

### Synthesis of Polymer-Bound Tridentate Ligands

### EXAMPLE 84

### Polymer-Bound P(CH₂CH₂PPh₂)₂

A suspension of polymer-bound P(CH=CH₂)₂ (2.0 g, 0.985 mm/g, 1.97 mmol, from Example 52-F), Ph₂PH (5.5 g, 29.6 mmol) and NaO-*t*Bu (0.1 g, 1.0 mmol) in 15 mL of THF was refluxed overnight before the solution was filtered off. The resulting resin was washed with hexane (2 X 10 mL), CH₂Cl₂ (5 X 10 mL), Me₂CHOH (2 X 5 mL) and hexane (5 X 10 mL). The resin was dried *in vacuo* overnight. ³¹P NMR (122 MHz, CDCl₃): δ 65.6, -12.0 ppm.

### EXAMPLE 85

### Polymer-Bound P[CH₂CH₂P(Ph)Me]₂

A suspension of polymer-bound P(CH=CH₂)₂ (1.0 g, 0.985 mmol, from Example 52-F), Ph(Me)PH (1.5 g, 10.9 mmol) and NaO-*t*Bu (0.05 g, 0.5 mmol) in 10 mL of THF was refluxed overnight before the solution was filtered off. The resulting resin was washed with hexane (2 X 10 mL), CH₂Cl₂ (5X10 mL), Me₂CHOH (2 X 5 mL) and hexane (5 X 10 mL). The resin was dried *in vacuo* overnight. ³¹P NMR (122 MHz, CDCl₃): δ 64.8, -31.5 ppm.

### EXAMPLE 86

### Polymer-Bound P(C₄H₃O)(Br)

A solution of furan (7.0 g, 102.8 mmol) and PBr₃ (25.0 g, 92.4 mmol) in 30 ml of pyridine was refluxed over 5 h before the resulting mixture was cooled to room temperature and 100 mL of hexane was added. This crude products exhibit a single ³¹P NMR peak at 103.5 ppm. After filtered off the solids, the hexane was removed from the filtrate by vacuum, a polymer-bound NH(CH₂CH₂Me) prepared as in Example 1 (10 g, 11.0 mmol, 1.1 mm/g) was added to the solution above. The resulting suspension was stirred overnight before the solution was filtered off. The resulting resin was washed with hexane (2 X 30 mL), CH₂Cl₂ (5 X 30 mL), THF (2 X 30 mL) and hexane (5 X 10 mL). The resin was dried *in vacuo* overnight. ³¹P NMR (122 MHz, CDCl₃): δ 113.1 ppm.

### EXAMPLE 87

### Polymer-Bound P(C₄H₃O)(C₄H₃S)

A suspension of polymer-bound P(C₄H₃O)(Br) from Example 86 (1.0 g, ~1.0 mmol) in 15 mL of THF was treated slowly with 2-thienyllithium (10.0 mmol, 1.0 M solution in THF) over a period of 5 min. The resulting mixture was stirred for 2 h at room temperature before the solution was filtered off. The resulting resin was washed with hexane (2 X 10 mL), CH₂Cl₂ (5 X 10 mL), Me₂CHOH (2 X 5 mL) and hexane (5 X 10 mL). The resin was dried *in vacuo* overnight. ³¹P NMR (122 MHz, CDCl₃): δ 28.4 ppm.

### EXAMPLE 88

### Polymer-Bound P(C₅H₄N)₂

A suspension of polymer-bound PCl₂ (2.0 g, 0.968 mm/g, 1.94 mmol, from Example 52-C) in 15 mL of THF was treated slowly with 2-pyridylzinc bromide (15 mmol, 0.5 M solution in THF) over a period of 5 min. The resulting mixture was refluxed overnight before the solution was filtered off. The resulting resin was washed with hexane (2 X 10 mL), CH₂Cl₂ (5 X 10 mL), Me₂CHOH (2 X 5 mL) and hexane (5 X 10 mL). The resin was dried *in vacuo* overnight. ³¹P NMR (122 MHz, CDCl₃): δ 59.0 ppm.

### EXAMPLE 89

### Polymer-Bound P(2-C₆H₄SMe)₂

A suspension of polymer-bound PCl₂ (2.0 g, 0.968 mm/g, 1.94 mmol, from Example 52-C) in 15 mL of THF was treated slowly with 2-(thiomethyl)-phenylzinc iodide (15 mmol, 0.5 M solution in THF) over a period of 5 min. The resulting mixture was refluxed overnight before the solution was filtered off. The resulting resin was washed with hexane (2 X 10 mL), CH₂Cl₂ (5X10 mL), Me₂CHOH (2 X 5 mL) and hexane (5 X 10 mL). The resin was dried *in vacuo* overnight. ³¹P NMR (122 MHz, CDCl₃): δ 49.6 ppm.

### EXAMPLE 90

### Polymer-Bound P(2-C₆H₄OMe)₂

A suspension of polymer-bound PCl₂ (2.0 g, 0.968 mm/g, 1.94 mmol, from Example 52-C) in 15 mL of THF was treated slowly with 2-methoxyphenylmagnesium bromide (15 mmol, 0.5 M solution in THF) over a period of 5 min. The resulting mixture was refluxed for 3 h before the solution was filtered off. The resulting resin was washed with hexane (2 X 10 mL), CH₂Cl₂ (5 X 10 mL), Me₂CHOH (2 X 5 mL) and hexane (5 X 10 mL). The resin was dried *in vacuo* overnight. ³¹PNMR(122MHz,CDCl₃): δ 48.5ppm.

### EXAMPLE 91

### Polymer-Bound P(8-C)₁₀H₆NMe₂)₂

A solution of N,N,N',N'-tetramethylethylenediamine (2.1 g, 18.1 mmol) in 15 mL of hexane was treated with *n*-butyllithimn (12.8 mmol, 1.6 M solution in Hexane) dropwise over a period of 5 min, the solution was stirred an additional 15 min before N,N-dimethyl-1-naphthylamine (5.0 g, 29.2 mmol) was added to the reaction solution. The resulting mixture was stirred at room temperature overnight before a polymer-bound PCl₂ (1.0 g, 0.97 mmol, from Example 52-C) was added to the reaction mixture. The resulting suspension was stirred overnight before solution was filtered off and resin was washed with hexane (2 X 10 mL), CH₂Cl₂ (5 X 10 mL), Me₂CHOH (5 mL) and hexane (5 X 10 mL). The resin was dried *in vacuo* overnight. ³¹P NMR (122 MHz, CDCl₃): δ 70.0 ppm.

### Cleavage of Tridentate Ligands from Resin

### EXAMPLE 92

### Synthesis of Ph₂PCH₂CH₂PH(O)CH₂CH₂PPh₂

A suspension of polymer-bound P(CH₂CH₂PPh₂)₂ (1.0 g, 0.72 mmol, from Example 84) and H₂O (0.5 g, 27.8 mmol) in THF (10 mL) was refluxed overnight before the resin was filtered off and washed with THF (2 X 10 mL). Removal of solvents and excess H₂O from the filtrates by vacuum afforded 127 mg (37% yield) of crude Ph₂PCH₂CH₂PH(O)CH₂CH₂PPh₂. It was >95% pure by ¹H NMR and GC/MS. ³¹P NMR (202 MHz, CDCl₃): δ 36.4 (dd, J = 43.5 Hz), -11.7 (d, J = 43.5 Hz) ppm. ³¹P NMR (202 MHz, CDCl₃, H-coupled): δ 36.2 (d, J_{P-H} = 455.3 Hz), -11.7 ppm. ¹H NMR (500 MHz, CDCl₃): δ 7.68-7.19 (m, 20H), 6.81 (d, J_{P-H} = 452.6 Hz, 1H), 2.50-1.73 (m, 8H). ¹³C NMR (125 MHz, CDCl₃): δ 136.9, 132.7, 131.5, 128.8, 24.3, 19.5.

### EXAMPLE 93

### Synthesis of PhP(Me)CH₂CH₂PH(O)CH₂CH₂P(Me)Ph

A suspension of polymer-bound P[CH₂CH₂P(Me)Ph]₂ (1.0 g, 0.79 mmol, from Example 85) and H₂O (0.4 g, 22.2 mmol) in THF (10 mL) was refluxed overnight before the resin was filtered off and washed with THF (2 X 10 mL). Removal of solvents and excess H₂O from the filtrates by vacuum afforded 200 mg (72% yield) of crude PhP(Me)CH₂CH₂PH(O)CH₂CH₂P(Me)Ph. It was >95% pure by ¹H NMR and GC/MS. ³¹P NMR (202 MHz, CDCl₃): δ 37.2 (t, J = 36.1 Hz), -30.2 (dd, ³J = 36.3 Hz, ⁶J = 4.7 Hz, ⁶J = 4.4 Hz), -30.5 (dd, ³J = 36.3 Hz, ⁶J = 3.2 Hz, ⁶J = 3.6 Hz ) ppm. ³¹P NMR (202 MHz, CDCl₃, ¹H-coupled) : δ 37.2 (d, J_{P-H} = 454.7 Hz), -30.2 (d, J = 36.5 Hz), -30.5 (d, J = 37.1 Hz) ppm. ¹H NMR (500 MHz, CDCl₃): δ 7.39-7.17 (m, 10H), 6.72 (d, J_{P-H} = 453.8 Hz, 1H), 1.79-1.65 (m, 8H), 1.26 (s, 6H). ¹³C NMR (125 MHz, CDCl₃): δ 137.9, 131.4, 128.9, 128.3, 23.9, 21.6, 10.8. HRMS: Calcd. for C₁₈H₂₅P₃O₃(MO₂⁺): 382.1017. Found: 382.0954.

### EXAMPLE 94

### Synthesis of C₄H₃O-PH(O)-C₄H₃S

A suspension of polymer-bound P(C₄H₃O)(C₄H₃S) (0.6 g, 0.54 mmol, 0.899 mm/g, from Example 87) and H₂O (0.5 g, 27.7 mmol) in THF (10 mL) was refluxed overnight before the resin was filtered off and washed with THF (2 X 10 mL). Removal of solvents and excess H₂O from the filtrates by vacuum afforded 16 mg (15% yield) of crude C₄H₃O-PH(O)-C₄H₃S. It was >95% pure by ¹H NMR and GC/MS. ³¹P NMR (122MHz, CDCl₃): δ -6.66 ppm. ³¹P NMR (122 MHz, ¹H-coupled, CDCl₃): δ -6.66 (d, J_{P-H} = 515.5 Hz) ppm.

### EXAMPLE 95

### Synthesis of 2-MeSC₆H₄P(Cl)-2-MeSC₆H₄

A suspension of polymer-bound P[C₆H₄(SMe)₂]₂ (1.0 g, 0.83 mmol) and PCl₃(0.75 g, 5.47 mmol, from Example 89) in THF (10 mL) was stirred overnight at room temperature before the resin was filtered off and washed with THF (2 X 10 mL). Removal of solvents and excess PCl₃ from the filtrates by vacuum afforded 205 mg (79% yield) of crude 2-MeSC₆H₄P(Cl)-2-MeSC₆H₄. It was >95% pure by ¹H NMR and GC/MS. ³¹P NMR (202 MHz, CDCl₃): δ 57.3 ppm. ¹H NMR (500 MHz, CDCl₃): δ 7.40 (m, 2H), 7.32 (m, 4H), 7.20 (m, 2H), 2.34 (s,6H). ¹³CNMR(125MHz, CDCl₃): δ 141.7, 140.5, 132.6, 131.1, 130.0, 127.5,19.0. HRMS: Calcd. for C₁₄H₁₄PCIS₂(M⁺): 311.9963. Found: 311.9970.

### EXAMPLE 96

### Synthesis of 2-MeOC₆H₄P(Cl)-2-MeOC₆H₄

A suspension of polymer-bound P[C₆H₄(OMe)₂]₂ (2.0 g, 1.65 mmol, 0.83 mm/g, from Example 90) and PCl₃(1.3 g, 7.30 mmol) in THF (10 mL) was stirred overnight at room temperature before the resin was filtered off and washed with THF (2 X 10 mL). Removal of solvents and excess PCl₃ from the filtrates by vacuum afforded 400 mg (86% yield) of crude 2-MeOC₆H₄P(Cl)-2-MeOC₆H₄. It was >95% pure by ¹H NMR and GC/MS. ³¹P NMR (202 MHz, CDCl₃): δ 70.8 ppm. ¹H NMR (500 MHz, CDCl₃): 8 7.30 (m, 4H), 6.90 (m, 2H), 6.80 (m, 2H), 3.73 (s, 6H). ¹³C NMR (125 MHz, CDCl₃): δ 161.3, 132.5, 132.1, 126.3, 121.5, 110.9, 56.2. HRMS: Calcd. for C₁₄H₁₄PClO₂(M⁺): 280.0420. Found: 280.0429.

### EXAMPLE 97

### Synthesis of 8-Me₂NC₁₀H₆PH(O)-8-Me₂NC₁₀H₆

A suspension of polymer-bound P[8-Me₂NC₈H₆]₂ (1.0 g, 0.77 mmol, from Example 91) and H₂O (0.5 g, 27.8 mmol) in THF (10 mL) was refluxed overnight before the resin was filtered off and washed with THF (2 X 10 mL). Removal of solvents and excess H₂O from the filtrates by vacuum afforded 115 mg (38% yield) of crude 8-Me₃NC₁₀H₆PH(O)-8-Me₂NC₁₀H₆. ³¹P NMR (202 MHz, CDCl₃): 8 15.7 ppm. ³¹P NMR (202 MHz, CDCl₃, ¹H-coupled): 8 15.7 (d, J_{P-H} = 605.8 Hz) ppm.

### Cleavage of Diphosphine Ligands from Resin

### EXAMPLE 98

### Synthesis of 1-(diethylphosphino)-2 (ethoxylethylphosphinite)ethane

A suspension of polymer-bound (Et)PCH₂CH₂P(Et)₂ (1.0 g, ~0.899 mmol/g, ~0.90 mmol, prepared as in Example 5) and EtOH (0.41 g, 9.1 mmol) in THF (10 mL) was refluxed overnight before the resin was filtered off and washed with THF (2 X 10 mL). Removal of solvents and excess EtOH from the filtrates by vacuum afforded 162 mg (81% yield) of (EtO)(Et)PCH₂CH₂P(Et)₂ - It was >95% pure by 1H NMR and GC/MS. ³¹P NMR (202 MHz, C₆D₆): δ 135.8 (d, J = 20.5 Hz), -18.2 (d, J = 20.2 Hz). ¹H NMR (500 MHz, C₆D₆): 8 3.76 (m, 2H), 1.81 (m, 2H), 1.66 (m, 4H), 1.48 (m, 2H), 1.36 (m, 4H), 1.22-1.07 (m, 12H). ¹³C NMR (125 MHz, C₆D₆): 8 67.2, 30.2, 27.1, 21.8, 20.5, 18.8, 11.1, 9.5. HRMS: Calcd. for C₈H₁₉P₂O(M⁺-Et): 193.0911. Found: 193.0922.

### EXAMPLE 99

### Synthesis of 1-(diisobutylphosphino)-2-(ethoxylisobutylphosphinite) ethane

A similar procedure to that described above in Example 98 was used to prepare the title compound using polymer-bound (Me₂CHCH₂)PCH₂CH₂P(CH₂CHMe)₂ (1.17 g, ~0.82 mmol/g, -0.96 mmol, prepared as in Example 5) and EtOH (0.27 g, 6.0 mmol). After the solvents were removed from filtrates by vacuum, 70 mg (24% yield) of (EtO)(Me₂CHCH₂)PCH₂CH₂P(CH₂CHMe)₂ was obtained. It was >95% pure by ¹H NMR and GC/MS. ³¹P NMR (202 MHz, CDCl₃): δ 132.5 (d, J = 20.4 Hz), -33.5 (d, J = 20.4 Hz). ¹H NMR (500 MHz, CDCl₃): δ 3.66 (m, 2H), 1.79 (m, 1H), 1.63 (m, 4H), 1.43 (m, 2H), 1.26-1.13 (m, 8H), 1.03-0.92 (m, 19H). ¹³C (125 MHz, CDCl₃): δ 65.6, 43.4, 38.6, 29.1, 26.3, 25.2, 24.6, 24.3, 23.8, 22.1, 17.2. MS (rel. abundance): M⁺-Et (6), M⁺-EtO (10), 221.1 (100). HRMS: Calcd. for C₁₄H₃₁P₂O (M⁺-Et): 277.1850. Found: 277.1846.

### EXAMPLE 100

### Synthesis of 1-(diphenylphosphino)-2(ethoxylphenylphosphinite)ethane

A suspension of polymer-bound (Ph)PCH₂CH₂P(Ph)₂ (13.6 g, ~0.74 mmol/g, ~10.1 mmol, prepared as in Example 5) and EtOH (5 g, 109 mmol) in THF (200 mL) was refluxed overnight before the resin was filtered off and washed with THF (2 X 10 mL). The filtrate was *dried in vacuo* to remove the solvent and excess EtOH, the residue was extracted with 3 x 20 mL of hexane. The combined hexane extracts were dried under reduced pressure to give 2.17 g (59 % yield) of (Ph)(EtO)PCH₂CH₂P(Ph)₂. It was >95% pure by ¹H NMR and GC/MS. ³¹P NMR (122 MHz, C₆D₆): δ 120.4 , -11.6 ppm. ¹H NMR (500 MHz, C₆D₆): δ 7.59-7.13 (m, 15H), 3.69 (m, 2H), 2.3-2.0 (m, 2H),1.1 (t, J = 7.0 Hz). ¹³C NMR (125 MHz, C₆D₆): δ 145.4, 141.5, 131.8, 131.5, 131.0, 130.9, 130.7, 130.5, 67.9, 34.1, 24.3, 19.5 HRMS: Calcd. for C₂₂H₂₄P₂O: 366.1302. Found: 366.1306.

### EXAMPLE 101

### Synthesis of 1-[di(4-fluorophenyl)phosphino]-2-[ethoxyl(4-fluoro phenyl) phosphinite)ethane

An analogous procedure to that for (Et)(EtO)PCH₂CH₂P(Et)₂ was used for the synthesis of title compound using polymer-bound (4-FC₆H₅)PCH₂CH₂P(4-FC₆H₅)₂ (1.28 g, -0.75 mmol/g, -0.96 mmol, prepared as in Example 5) and EtOH (0.27 g, 6.0 mmol). After the solvents were removed from filtrates by vacuum, 110 mg (27% yield) of (EtO)(4-FC₆H₅)PCH₂CH₂P(4-FC₆H₅)₂ was obtained. It was >95% pure by ¹H NMR and GC/MS. ³¹P NMR (202 MHz, CDCl₃): δ 119.2 (d, J = 28.5 Hz), -14.0 (d, J = 28.5 Hz). ¹⁹F(377 MHz CDCl₃): δ 112.0, 112.6. ¹H NMR (500 MHz, CDCl₃): δ 7.36 (m, 2H), 7.19 (m, 4H), 7.00 (m, 2H), 6.92 (m, 4H), 3.66 (m, 2H), 1.90 (m, 2H), 1.70 (m, 1H), 1.58 (m, 1H), 1.14 (t, J = 6.99 Hz, 3H). ¹³C (125 MHz, CDCl₃): δ 164.6, 164.3, 162.6, 162.2, 134.3, 133.5, 131.3, 115.9, 65.7, 30.9, 21.6, 17.1. HRMS: Calcd. for C₂₂H₂₁P₂OF₃: 420.1020. Found: 420.1028.

### EXAMPLE 102

### Synthesis of 1 -[di(4-chlorophenyl)phosphino]-2-[methoxyl(4-chtorophenyl) phosphinite)ethane

An analogous procedure to that for (Et)(EtO)PCH₂CH₂P(Et)₂ was used for the synthesis of title compound using polymer-bound (4-ClC₆H₅)PCH₂CH₂P(4-ClC₆H₅)₂ (1.2 g, ~0.80 mmol/g, ~0.96 mmol, prepared as in Example 5) and MeOH (0.27 g, 6.0 mmol). After the solvents were removed from filtrates by vacuum, 132 mg (30% yield) of (MeO)(4-ClC₆H₅)PCH₂CH₂P(4-ClC₆H₅)₂ was obtained. It was >95% pure by ¹H NMR and GC/MS. ³¹P NMR (202 MHz, CDCl₃): δ 124.7(d, J = 27.9 Hz), -13.4 (d, J = 27.9 Hz). ¹H NMR (500 MHz, CDCl₃): δ 7.28-7.12 (m, 12H), 3.45 (d, J_{p-H} =13.6 Hz, 3H), 1.93(m, 2H), 1.66 (m, 2H). ¹³C (125 MHz, CDCl₃): δ 139.6, 136.2, 135.2,135.1, 133.9, 130.7, 128.8, 128.5, 56.8, 30.5, 21.1. HRMS: Calcd. for C₂₁H₁₉P₂OCl₃: 453.9977. Found: 453.9951.

### EXAMPLE 103

### Synthesis of 1-[di(2-mesityl)phosphino]-2-[methoxyl(2-mesityl) phosphinite]ethane

The procedure described above was employed except that polymer-bound (2,4,6-Me₃C₆H₂)PCH₂CH₂P(2,4,6-Me₃C₆H₂)₂ (1.33 g, -0.72 mmol/g, ~0.96 mmol, prepared as in Example 5) and MeOH (0.21 g, 6.0 mmol) were used to prepare the title compound. After the solvents were removed from filtrates by vacuum, 136 mg (30% yield) of (MeO)(2,4,6-Me₃C₆H₂)PCH₂CH₂P(2,4,6-Me₃C₆H₂)₂ was obtained. It was >95% pure by ¹H NMR and GC/MS. ³¹P NMR (202 MHz, CDCl₃): δ 131.6 (d, J = 33.2 Hz), -17.7 (d, J = 33.2 Hz). ¹H NMR (500 MHz, CDCl₃): δ 6.75(m, 6H), 3.47 (d, J_{P-H} =14.3 Hz, 3H), 2.48-2.19 (m, 31H). ¹3C (125 MHz, CDCl₃): δ 142.4, 142.1, 141.6, 139.1, 137.4, 132.7, 132.6, 129.8,67.9,57.1,28.0,25.6,23.1,21.3,20.7. HRMS: Calcd. for C₃₀H₄₀P₂O: 478.2554. Found: 478.2553.

### EXAMPLE 104

### Synthesis of 1-[diphenethylphosphino]-2-(methoxylphenethyl phosphinite) ethane

A similar procedure to those described above was used to prepare the title compound using polymer-bound (PhCH₂CH₂)PCH₂CH₂P(CH₂CH₂Ph)₂ (1.29 g, ~0.74 mmol/g, -0.96 mmol, prepared as in Example 5) and MeOH (0.21 g, 6.0 mmol). After the solvents were removed from filtrates by vacuum, 110 mg (26% yield) of (MeO) (PhCH₂CH₂)PCH₂CH₂P(CH₂CH₂Ph)₂ was obtained. It was >95% pure by ¹H NMR and GC/MS. ³¹P NMR (202 MHz, CDCl₃): δ 138.5 (d, J = 21.7 Hz), -23.0 (d, J = 21.9 Hz). ¹H NMR (500 MHz, CDCl₃): δ 7.21-7.08 (m, 15H), 3.44 (d, J_{p-H} = 12.8 Hz, 3H), 2.77-2.64 (m, 6H), 1.91 (m, 2H), 1.67 (m, 6H), 1.51 (m, 2H). ¹³C (125 MHz, CDCl₃): δ 142.8, 142.5, 128.8, 128.3, 126.7,126.2,126.0, 125.9, 57.1, 34.5, 32.2, 30.5, 28.2, 27.8, 20.3. HRMS: Calcd. for C₂₇H₃₅P₂O(M+H)⁺: 437.2163. Found: 437.2197.

### EXAMPLE 105

### Synthesis of 1-(diphenylphosphino)-2-(1-propylthio-1-phenylphosphinite) ethane

A suspension of polymer-bound (Ph)PCH₂CH₂P(Phh (1.0 g, 0.96 mmol, prepared as in Example 5) and CH₃CH₂CH₂SH (0.366 g, 4.8 mmol) in THF (10 mL) was refluxed overnight before the resin was filtered off and washed with THF (2 X 5 mL). The filtrate was dried *in vacuo* to remove the solvent and excess CH₃CH₂CH₂SH. The resulting residue was 117 mg (31 % yield) of (Ph)(CH₃CH₂CH₂S)PCH₂CH₂P(Ph)₂. It was >95% pure by ¹H NMR and GC/MS. ³¹P NMR (202 MHz, CDCl₃): δ 30.0 (d, J = 30.0 Hz), -11.8 (d, J = 29.9 Hz). ¹H NMR (500 MHz, CDCl₃): δ 7.45-7.20 (m, 15H), 2.52 (m, 2H), 2.13 (m, 2H), 1.89 (m, 2H), 1.53 (m, 2H), 0.84 (t, J = 7.34 Hz, 3H). ¹³C NMR (125 MHz, CDCl₃): δ 138.5, 138.0, 133.3, 132.8, 131.6, 128.8,128.6, 128.4, 35.1, 26.9, 25.1, 23.6, 13.2. HRMS: Calcd. for C₂₃H₂₆P₂S: 396.1230. Found: 396.1217.

### EXAMPLE 106

### Synthesis of 1-(diisopropylphosphino)-2-(1-propylthio-1-isopropyl phosphinite)ethane

A suspension of polymer-bound (*i*-C₃H₇)PCH₂CH₂P(*i*-C₃H₇)₂ (1.0 g, 0.92 mmol, prepared as in Example 5) and CH₃CH₂CH₂SH (0.46 g, 6.0 mmol) in THF (10 mL) was refluxed overnight before the resin was filtered off and washed with THF (2 X 5 mL). The filtrate was dried *in vacuo* to remove the solvent and excess CH₃CH₂CH₂SH. The resulting residue was 144 mg (53 % yield) of (i-C₃H₇)(CH₃CH₂CH₂S)PCH₂CH₂P(i-C₃H₇)₂- It was >95% pure by ¹H NMR and GC/MS. ³¹P NMR (121 MHz, CDCl₃): δ 51.5 (d, J = 27.4 Hz), 9.9 (d, J = 27.5 Hz). ¹H NMR (500 MHz, CDCl₃): δ 2.54-2.49 (m, 2H), 1.75-1.57 (m, 9H), 1.03 (m, 18H), 0.92 (t, J = 7.35 Hz, 3H). ¹³C NMR (125 MHz, CDCl₃): δ 35.7, 27.7, 25.1, 23.3, 19.8, 19.0, 18.9, 18.8, 13.1 HRMS: Calcd. for C₁₁ H₂₅P₂S (M⁺-C₃H₇): 251.1152. Found: 251.1153.

### EXAMPLE 107

### Synthesis of 1-(di-3',4',5'-trifluorophenylphosphino)-2-(1-propylthio-3',4',5'-trifluorophenylphosphinite)ethane

A suspension of polymer-bound (F₃H₂C₆)PCH₂CH₂P(C₆H₂F₃)₂ (1.0 g, 0.74 mmol, prepared as in Example 5) and CH₃CH₂CH₂SH (0.46 g, 6.0 mmol) in THF (10 mL) was refluxed overnight before the resin was filtered off and washed with THF (2 X 5 mL). The filtrate was dried *in vacuo* to remove the solvent and excess CH₃CH₂CH₂SH. The resulting residue was 295 mg (71 % yield) of (C₆H₂F₃)(CH₃CH₂CH₂S)PCH₂CH₂P(C₆H₂F₃)₂. It was >95% pure by ¹H NMR and GC/MS. ³¹P NMR (121 MHz, CDCl₃): δ 31.1 (d, J = 31.7 Hz), -9.1 (d, J = 31.5 Hz). ¹H NMR (500 MHz, CDCl₃): δ 7.12 (m, 2H), 6.87 (m, 4H), 2.57 (m, 2H), 2.01 (m, 2H), 1.76 (m, 2H), 1.54 (m, 2H), 0.86 (t, J = 7.28 Hz, 3H). ¹³C NMR (125 MHz, CDCl₃): δ 152.3, 150.3, 140.9, 139.0, 135.2, 133.2, 116.3, 115.0, 35.4, 26.7, 25.1, 23.5, 12.9. HRMS: Calcd. for C₂₃H₁₇P₂F₉S: 558.0382. Found: 558.0369.

### EXAMPLE 108

### Synthesis of 1-(diisopropylphosphino)-2-(1-diethylamino-1-isopropyl phosphinite)ethane

A polymer-bound (*i*-C₃H₇)PCH₂CH₂P(*i*-C₃H₇)₂ (1.0 g, 0.92 mmol, prepared as in Example 5) resin was quickly washed with HCl solution (1.0 M in Et₂O, 10 mL) over a period of 1.0 min. and then removal of all the solution by filtration. The resulting resin and Et₂NH (0.45 g, 6.2 mmol) in THF (10 mL) was refluxed overnight before the resin was filtered off and washed with THF (2 X 5 mL). The filtrate was dried *in vacuo* to remove the solvent and excess Et₂NH. The resulting residue was 120 mg (45 % yield) of (*i*-C₃H₇)(Et₂N)PCH₂CH₂P(*I*-C₃H₇)₂. It was >95% pure by ¹H NMR and GC/MS. ³¹P NMR (202 MHz, CDCl₃): δ 47.0 (d, J = 40.3 Hz), 10.4 (d, J = 40.3 Hz). ¹H NMR (500 MHz, CDCl₃): δ 1.98-1.95 (m, 2H), 1.88 (m, 1H), 1.78 (m, 1H), 1.70 (m, 4H), 1.50 (m, 2H), 1.19-1.12 (m, 9H), 1.06-0.96 (m, 16H). ¹³C NMR (125 MHz, CDCl₃): δ 26.5, 23.5, 23.1, 19.8, 18.7, 15.3, 14.8, 13.1. HRMS: Calcd. for C₁₁H₂₇P₂O₂ (MO₂⁺ -Et₂N + H⁺): 253.1486. Found: 253.1411.

### EXAMPLE 109

### Synthesis of 1-(di-o-tolylphosphino)-2-(o-tolyl-chlorophosphinite)ethane

A suspension of polymer-bound (o-MeH₄C₆)PCH₂CH₂P(o-MeC₆H₄)₂ (1.5 g, 0.81 mm/g, 1.2 mmol, prepared as in Example 5) and PCl₃ (0.82 g, 6.0 mmol) in THF (10 mL) was stirred overnight at room temperature before the resin was filtered off and washed with THF (2 X 5 mL). The filtrate was dried *in vacuo* to remove the solvent and excess PCl₃. The resulting residue was 365 mg (75 % yield) of (o-MeH₄C₆)(Cl)PCH₂CH₂P(o-MeC₆H₄)₂. It was >95% pure by ¹H NMR and GC/MS. ³¹P NMR (121 MHz, C₆D₆): δ 89.5 (d, J = 39.7 Hz), -33.0 (d, J = 39.7 Hz). ¹H NMR (500 MHz, CDCl₃): δ 7.4-6.7 (m, 12H), 2.17 (s, 6H), 2.10 (s, 3H), 1.97 (m, 4H). ¹³C NMR (125 MHz, C₆D₆): δ 141.3, 141.2, 134.9, 134.8, 130.0, 129.2, 129.1, 129.0, 127.6, 127.1, 125.4, 125.2, 66.4, 30.2, 24.4, 19.8. HRMS: Calcd. for C₂₃H₂₆P₂O (MO⁺- Cl + H): 380.1459. Found: 380.1513.

### EXAMPLE 110

### Synthesis of 1-(di-3,5-difluorophenylphosphino)-2-(3,5-difluorophenyl-chlorophosphinite)ethane

A suspension of polymer-bound (C₆H₃F₂)PCH₂CH₂P(C₆H₃F₂)₂ (6.0 g, 0.77 mm/g, 4.6 mmol, prepared as in Example 5) and PCl₃ (5.0 g, 36.4 mmol) in THF (10 mL) was stirred overnight at room temperature before the resin was filtered off and washed with THF (2 X 5 mL) and hexane (2 X 10 mL). The combined filtrates were *dried in vacuo* to remove the solvent and excess PCl₃. The resulting residue was extracted with hexane (3 X 30 mL). The concentration of the extracts afforded 1.58 g (74%) of the title compound (C₆H₃F₂)(Cl)PCH₂CH₂P(C₆H₃F₂)₂. It was >95% pure by ¹H NMR and GC/MS. ³¹P NMR (202 MHz, CDCl₃): δ 90.8 (d, J = 29.8 Hz), -9.2 (d, J = 29.9 Hz). ¹H NMR (500 MHz, CDCl₃): δ 7.03 (m, 3H), 6.76 (m, 6H), 2.02 (m, 4H), 1.97, ¹³C NMR (125 MHz, C₆D₆): δ 164.1, 162.0, 141.9, 140.9, 115.1, 113.4, 106.3,105.1, 32.4,22.0. HRMS: Calcd. for C₂₀H₁₃F₆P₂Cl: 464.0085. Found: 464.0075.

### EXAMPLE 111

### Synthesis of 1-(di-2-thienylphosphino)-2-(2-thienylchlorophosphinite) ethane

A suspension of polymer-bound (2-C₄H₃S)PCH₂CH₂P(2-C₄H₃S)₂ (1.5 g, 0.93 mm/g, 1.4 mmol, prepared as in Example 5) and PCl₃ (1.0 g, 7.3 mmol) in THF (10 mL) was stirred overnight at room temperature before the resin was filtered off and washed with THF (2 X 5 mL) and hexane (2 X 10 mL). The combined filtrates were *dried in vacuo* to remove the solvent and excess PCl₃. The resulting residue was 300 mg (57%) of the title compound (2-C₄H₃S)(Cl)PCH₂CH₂P(2-C₄H₃S)₂. It was >95% pure by ¹H NMR and GC/MS. ³¹P NMR (202 MHz, CDCl₃): δ 76.7 (d, J = 38.3 Hz), -38.3 (d, J = 38.3 Hz). ¹H NMR (500 MHz, CDCl₃): δ 7.63 (d, J = 4.97 Hz, 1H), 7.48 (d, J = 4.89 Hz, 1H), 7.44-7.42 (m, 1H), 7.30-7.28 (m, 2H), 7.02-6.98 (m, 4H), 2.27-2.16 (m, 4H). ¹³CNMR(125MHz,C₆D₆): δ 139.5, 138.3, 137.0, 136.8, 135.5, 133.8, 132.8, 127.8, 33.9, 26.9. HRMS: Calcd. for C₁₄H₁₄S₃P₂ (M⁺- Cl + H): 339.9733. Found: 339.9742.

### EXAMPLE 112

### Synthesis of (C₆H₅O)(Cl)PCH₂CH₂P(OC₆H₅)₂

A solution of PhOH (3.0 g, 31.9 mmol) in THF (30 mL) was treated with *n*-BuLi (1.6 M solution in THF, 16 mmol) at room temperature over a period of 5 min. and stirred for 2 h before 1.0 g of polymer-bound (Cl)PCH₂CH₂P(Cl)₂ (1.0 g, 0.94 mm/g, 0.94 mmol, prepared as in Example 5) was added. The resulting suspension was stirred at room temperature for 2 h before the excess PhOH and PhOLi were filtered off, and the resin was washed with THF (3 X 20 mL), hexane (3 X 20 mL). The resulting resin was dried *in vacuo* overnight. A suspension of the resin above (0.61 g, 0.82 mm/g, 0.50 mmol) and PCl₃ (0.62 g, 4.5 mmol) in THF (10 mL) was stirred overnight at room temperature before the resin was filtered off and washed with THF (2 X 5 mL) and hexane (2 X 10 mL). The combined filtrates were *dried in vacuo* to remove the solvent and excess PCl₃. The resulting residue was 133 mg (56%) of the title compound (C₆H₅O)(Cl)PCH₂CH₂P(OC₆H₅)₂. It was >95% pure by ¹H NMR and GC/MS. ³¹P NMR (121 MHz, C₆D₆): δ 199.5 (d, J =16.8 Hz), 178.9 (d, J = 16.8 Hz). ¹H NMR (500 MHz, CDCl₃): δ 7.25-6.93 (m, 15H), 2.40 (m, 2H), 2.16 (m, 2H). ¹³C NMR (125 MHz, CDCl₃): δ 155.4, 155.0, 129.9, 129.8, 124.7, 123.8, 119.9, 119.4,31.1,27.7. HRMS: Calcd. for C₁₄H₁₄O₂P₂ Cl ( M⁺-OPh): 311.0158. Found: 311.0117.

### EXAMPLE 113

### Synthesis of 1-(di-3,5-difluorophenylphosphino)-2-(3,5-difluorophenyl-phenylphosphinite)ethane

A solution of 700 mg (1.5 mmol) of (C₆H₃F₂)(Cl)PCH₂CH₂P(C₆H₃F₂)₂ in 20 mL of THF was treated with PhMgCl (3 M solution in THF, 1.7 mmol, prepared as in Example 5) at room temperature over a period of 5 min. and stirred for 1 h before the reaction was quenched with MeOH (2 mL). The resulting mixture was dissolved in a mixture of H₂O (2 mL)/THF (10 ml), and extracted with hexane (3 X 20 mL). After separation, the hexane extracts were dried over MgSO₄, filtered, and the hexane and THF removed from the filtrate by vacuum, to afford 450 mg (59%) of (C₆H₃F₂)(Ph)PCH₂CH₂P(C₆H₃F₂)₂. It was >95% pure by ¹H NMR and GC/MS. ³¹P NMR (202 MHz, C₆D₆): δ -8.4 (d, J = 38.8 Hz), - 10.3 (d, J = 38.9 Hz). ¹H NMR (500 MHz, C₆D₆): δ 7.00-61.3 (m, 14H), 1.66-1.57 (m, 3H), 1.16 (m, 1H). ¹³C NMR (125 MHz, C₆D₆): δ 164.6, 162.6, 136.5, 133.8, 129.4, 128.9, 128.6, 128.4, 115.6, 114.9, 105.4, 104.7. 24.2,23.9. HRMS: Calcd. for C₂₆H₁₈F₆P₂: 506.0788. Found: 506.0794.

### EXAMPLES 114-116

### Synthesis of Diphosphine Ligand Array Library

A solution of 700 mg (1.5 mmol) of (C₆H₃F₂)(Cl)PCH₂CH₂P(C₆H₃F₂)₂ in mixture of 15 mL of THF and 5 mL of THF-d₈ was divided into 34 NMR tubes (0.6 mL/tube) in the dry-box. Each NMR tube above was treated with only one RgMgX (1-1.2 eq) at room temperature before the NMR tube was sealed. It was >95% pure by ³¹P NMR and GC/MS. This was repeated using 1-(di-(2-thienyl phosphino))-2-chloro- 2-thienylphosphinoethane and 1-(di-(o-tolyl phosphino))-2-chloro- *o*-tolylphosphinoethane. The scheme and results where x=Cl are shown in Tables 6A-8A.

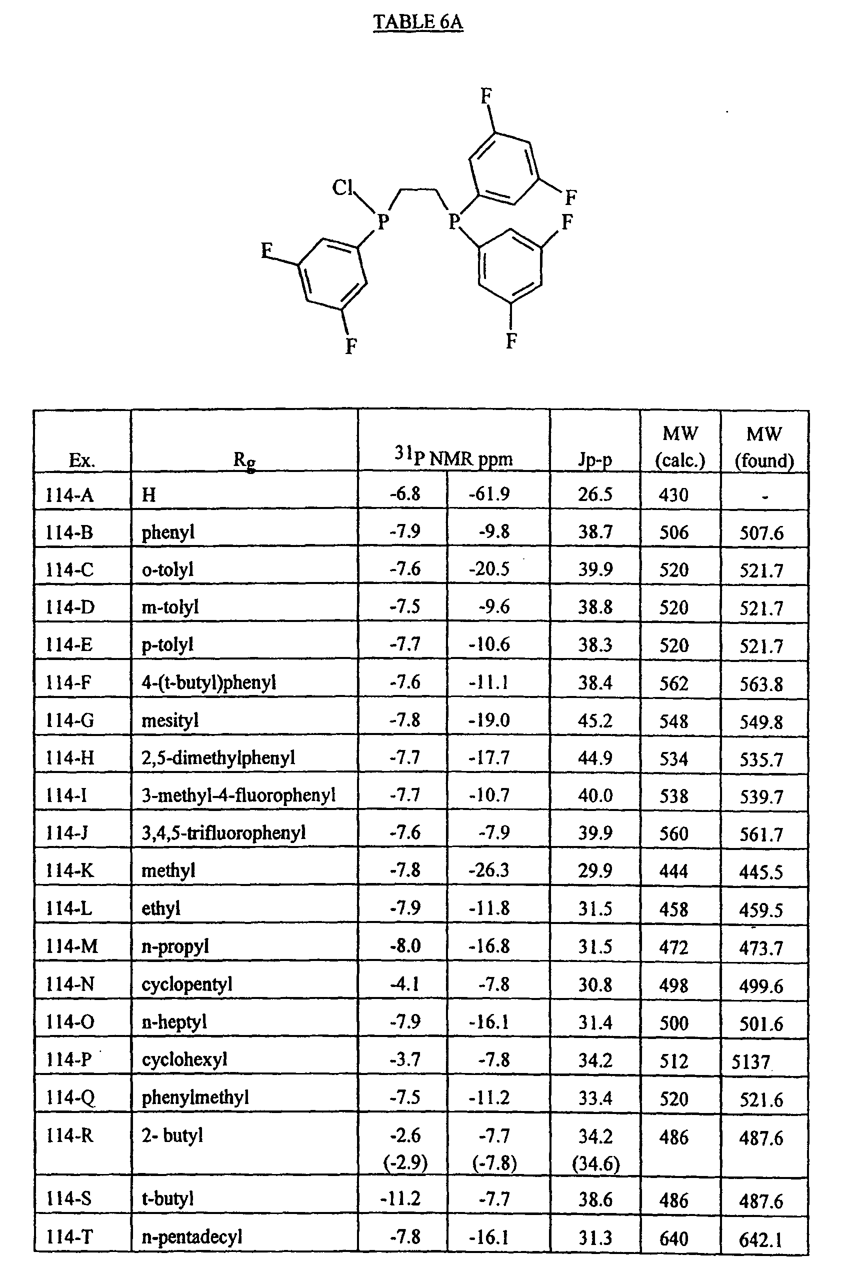

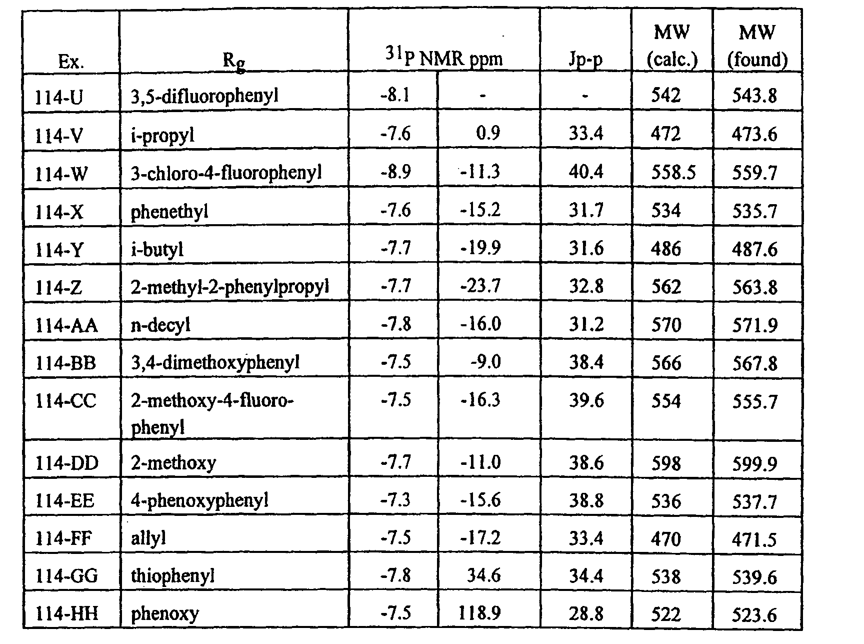

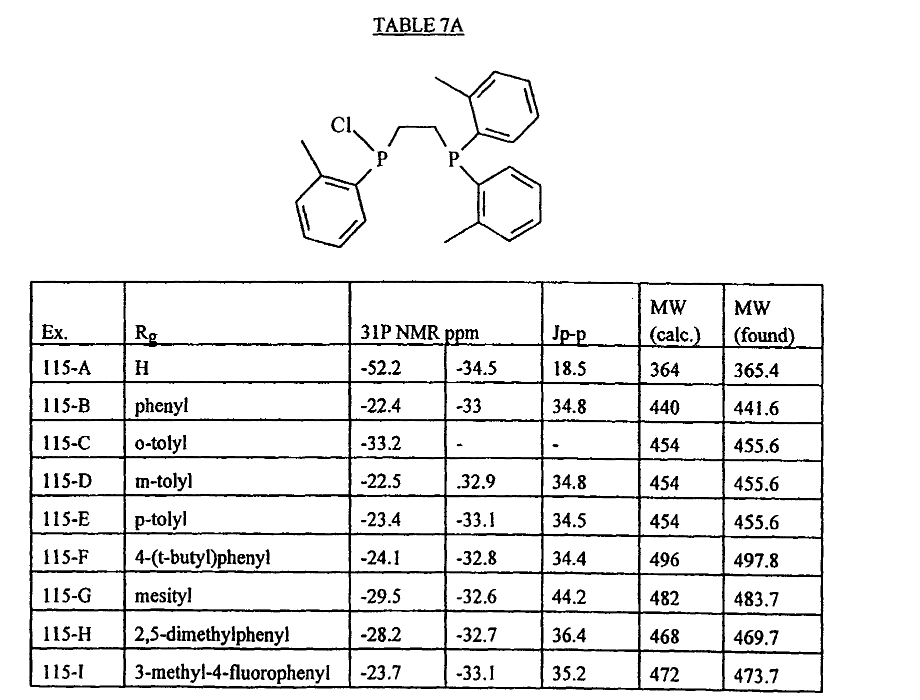

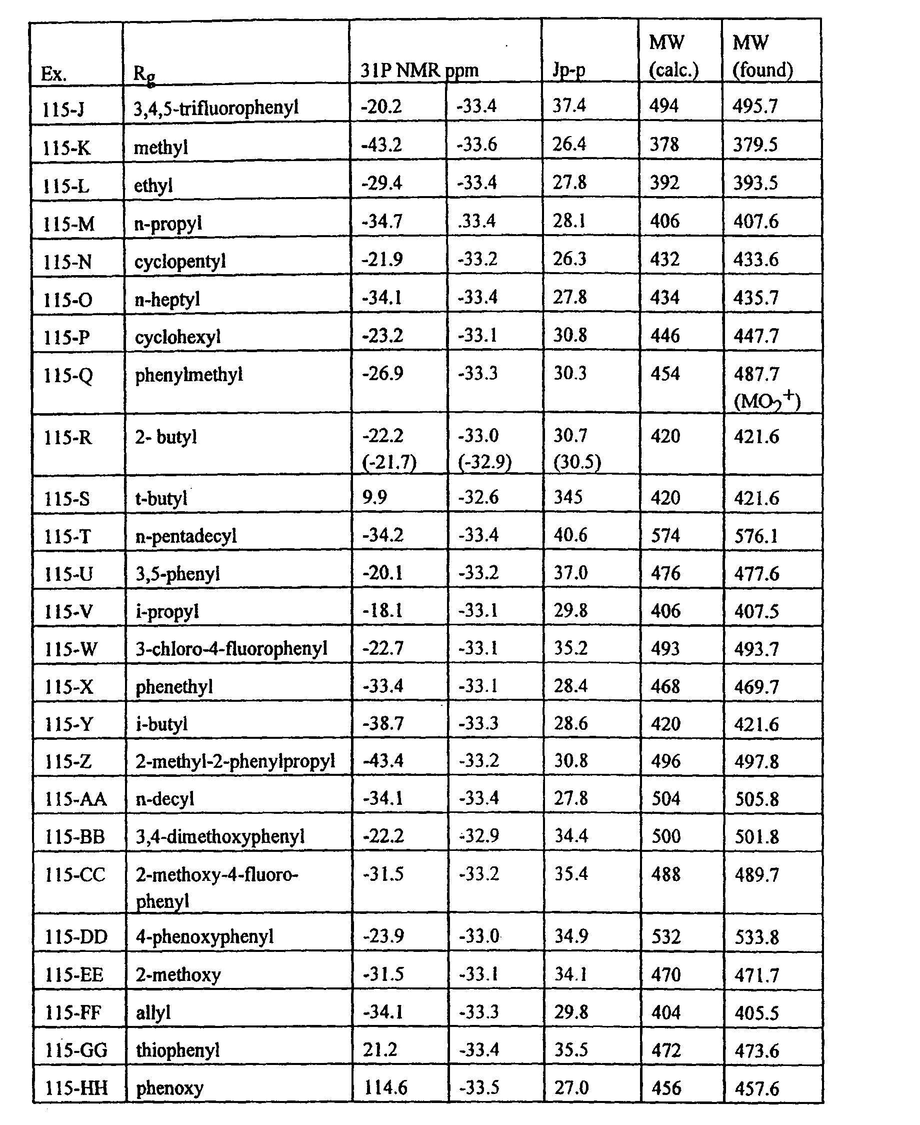

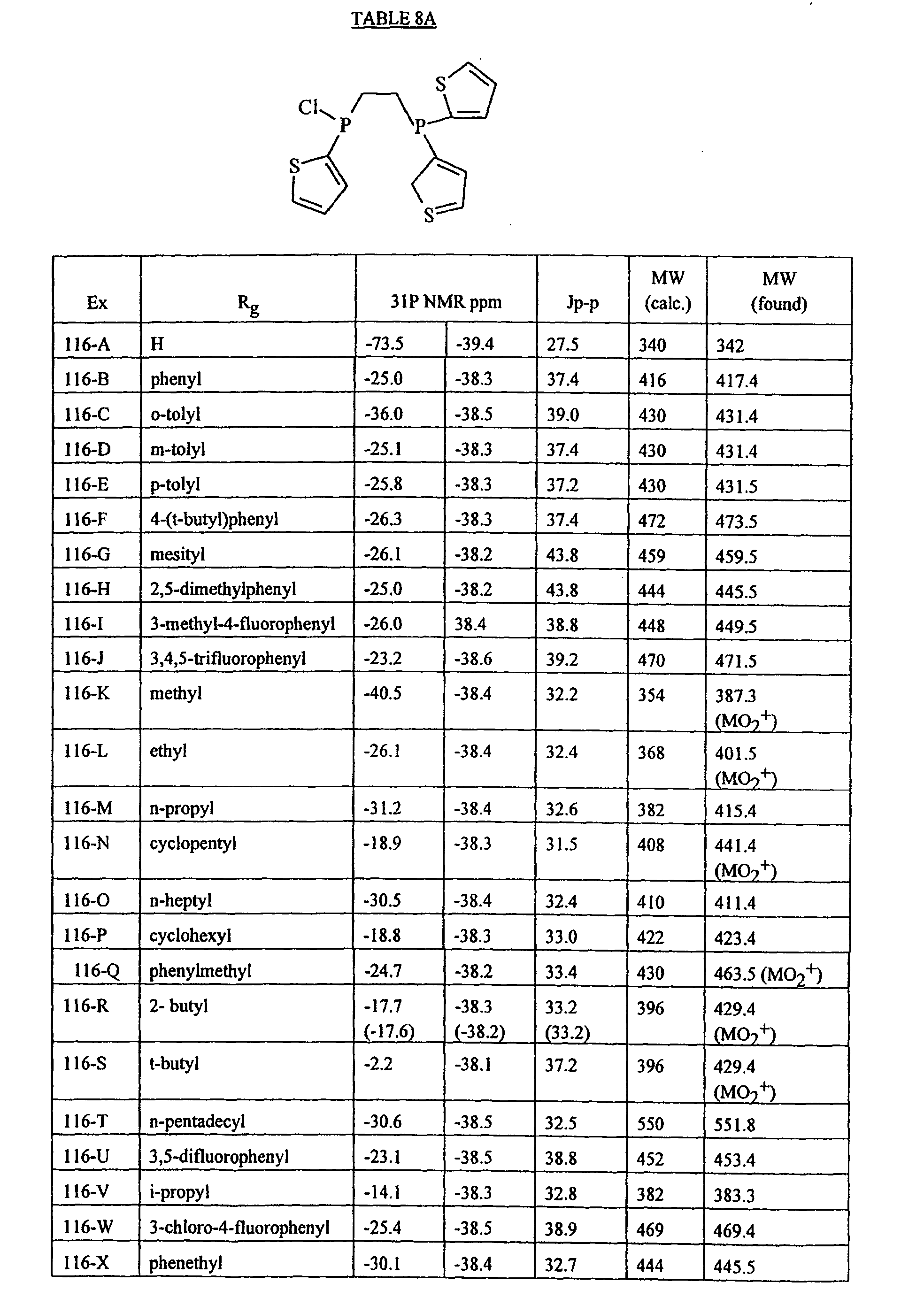

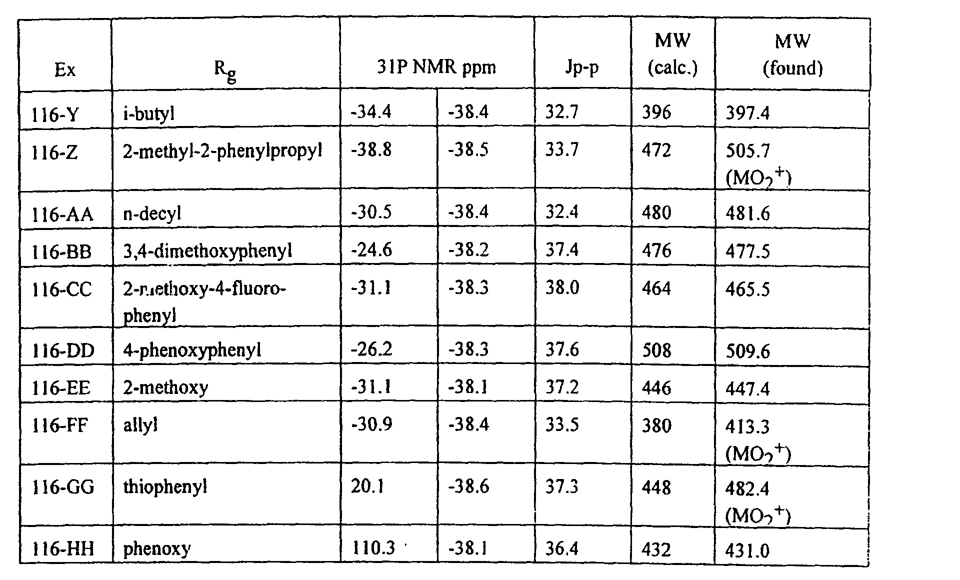

### Synthesis of Polymer-Bound Diphosphine Monoxide Ligands

### EXAMPLE 117

### Polymer-Bound (Me₂CH)P(O)CH₂CH₂P(CHMe₂)₂

A solution of 160 mg (0.68 mmol) of (Me₂CH)PH(O)CH₂CH₂P(CHMe₂)₂ from Example 26 and 1.0 mg (0.015 mmol) of NaOEt in 10 mL of THF was stirred at room temperature over a period of 20 min before formypolystyrene (2% DVB, 0.90 g, 0.46 mmol/g, 0.41 mmol) was added to the reaction mixture. The resulting suspension was stirred overnight. After the solution was filtered off, resin was washed with THF (3 X 20 mL), hexane (3 X 20 mL). The resulting resin was dried *in vacuo* overnight to afford polymer-bound (Me₂CH)PH(O)CH₂CH₂P(CHMe₂)₂. ³¹P NMR (122 MHz, CDCl₃): δ 53.3 (s), 10.5 (s) ppm. ¹³C NMR (75 MHz, CDCl₃): δ 31.5, 25.5, 22.9 (d, J_{p-c} = 55.6 Hz), 20.0, 18.9, 15.7, 14.1.

### EXAMPLE 118

### Polymer-Bound (Ph)PCH₂CH₂PPh(O)(C₆H₂Me₃)

A solution of 150 mg (0.614 mmol) of PhPH(O)(2,4,6-C₆H₂Me₃) from Example 61 and 1.0 mg (0.01 mmol) of NaO*t*Bu in 10 mL of THF was stirred at room temperature over a period of 10 min before polymer-bound PhPCH=CH₂ (2% DVB, 0.5 g, 0.938 mmol/g, 0.469 mmol, from Example 52-S) was added to the reaction solution. The resulting suspension was refluxed overnight. After the solution was filtered off, resin was washed with THF (3 X 20 mL), Me₂CHOH (2 X 5 mL), hexane (3 X 20 mL). The resulting resin was dried *in vacuo* overnight to afford polymer-bound (Ph)PCH₂CH₂PPh(O)(C₆H₂Me₃). ³¹P NMR (122 MHz, CDCl₃): δ 62.4 (s), 37.8 (s) ppm.

### EXAMPLE 119

### Synthesis of PhPH(O)CH₂CH₂PPh(O)(C₆H₂Me₃)

A suspension of polymer-bound (Ph)PCH₂CH₂PPh(O)(C₆H₂Me₃) above (0.5 g, ~0.469 mmol) and H₂O (0.5g, 27.8 mmol) in 10 mL of THF was refluxed overnight. After the resin was filtered off and washed with THF (10 mL), the filtrates were dried *in vacuo* to remove the solvents and excess H₂O. The resulting residue was 50 mg (28 % yield) of PhPH(O)CH₂CH₂PPh(O)(C₆H₂Me₃). It was >95% pure by ¹H NMR and GC/MS. ³¹P NMR (202 MHz, CDCl₃, ¹H-decoupled): δ 39.2 (d, J = 52.5 Hz), 28.2 (d, J = 52.3 Hz); 39.0 (d, J = 50.9 Hz), 28.0 (d, J = 50.7 Hz). ³¹P NMR (121 MHz, CDCl₃, ¹H-coupled): δ 39.3 (d, J_{P-P} = 48.5 Hz), 28.1 (d, J_{P-H} = 474.7 Hz); 39.0 (d, J_{P-P} = 48.8 Hz), 28.0 (d, J_{P-H} = 474.7 Hz). ¹H NMR (500 MHz, CDCl₃): δ 7.51 (d, J_{P-H} = 472.9 Hz), 7.48 (d, J_{P-H} = 473.6 Hz), 7.65-7.30 (m, 10H), 6.82 (d, J = 3.31 Hz, 1H), 6.78 (d, J = 3.29 Hz, 1H), 2.55 (m, 4H), 2.33 (s), 2.28 (s), 2.22(s), 2.20 (s). ¹³C NMR (125 MHz, CDCl₃): δ 143.3, 142.2, 135.5, 132.9, 131.7, 131.5, 130.1, 130.0, 129.2, 129.0, 124.0, 123.0, 23.6, 21.1.

### Synthesis of C1 and C2-Diphosphorus-related Ligands

### EXAMPLE 120

### Synthesis of polymer-bound 1-(2,3,4,5-tetraethylphospholyl)-2-chlorophosphinoethane

Chloromethylpolystyrene-divinylbenzene (50 g, 44.5 mmol, 2% DVB) was added to a solution of t-butylamine (69.6 g, 950 mmol) in THF (700 mL), and the reaction mixture was refluxed overnight before the resin was filtered, washed with H₂O (500 mL), THF (500 mL), hexane (500 mL), H₂O (500 mL), and Et₂O (500 mL). The resulting resin was dried *in vacuo,* and then added to THF (700 mL). The mixture was cooled to 0 °C and treated dropwise with n-butyllithium (64 mmol, 1.6 M solution in pentane) over a period of 2 h before warmed to room temperature and stirred overnight. After filtration, the resin was washed with hexane (400 mL), THF (400 mL), Et₂O (400 mL). The resin was slowly added to a solution of Cl₂PCH₂CH₂PCl₂ (37.0 g, 159.6 mmol) in THF (800 mL) at room temperature, and the resulting mixture was stirred overnight before filtration and washing with THF (2 X 400 mL), hexane (2 X 400 mL), CH₂Cl₂ (2 X 400 mL), hexane (2 X 400 mL). The resin was added to CH₂Cl₂ (500 mL), and then at room temperature treated with a mixture of CH₂Cl₂ (50 mL) and Cp₂ZrC₄Et₄ (17.2 g, 45 mmol) generated from the reaction of Cp₂ZrCl₂, *n*-butyllithium , and EtC≡CEt. After the mixture was stirred for 4 h, the solvents were filtered off and the resulting resin was washed with CH2Cl2 (3 X 500 mL), THF (3 X 500 mL), and hexane (3 X 500 mL), dried *in vacuo* to give 50 g (96% yield with respect to the starting Merrifield resin, which was determined using N, P, and Cl elemental analysis) of the title polymer-bound compound. ³¹P NMR (122 MHz, C₆D₆): d 154.2, 1.3.

Futher embodiments of the invention include :
1. A process to prepare a supported phosphine compound selected from the group consisting of Formulae 1, 2, 3, 4, 5, 6, and 7 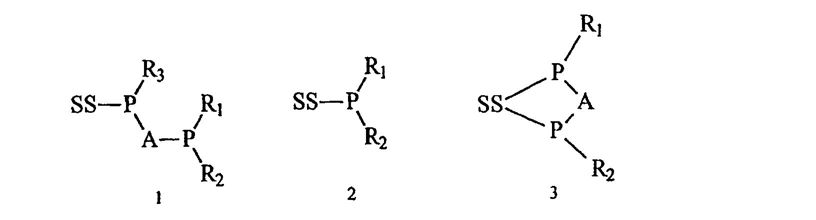 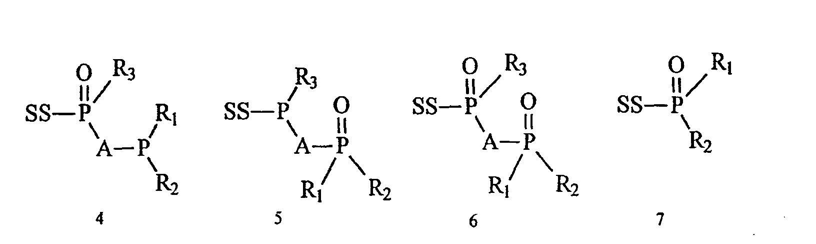 wherein:
   SS is a solid support;
   A is a divalent group of 1-12 aliphatic or aromatic carbon atoms, linear or branched, optionally containing one or more heteroatoms or 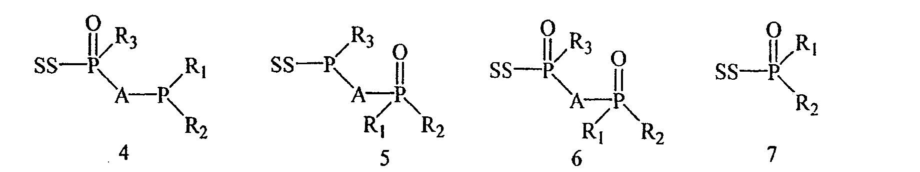 organometallic groups;
   R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
   R₂ and R₃ together, R₁ and R₃ together, or R₁ and R₂ together can optionally form a ring, the process comprising the steps of:
      a) contacting (i) a phosphine selected from the group consisting of XPR₁R₂, XR₃P-A-PR₁R₂, HP(=O)R₁R₂, HP(=O) R₃-A-PR₁R₂, and HP(=O)R₃-A-P(=O)R₁R₂ wherein X is a halogen, with (ii) the solid support, resulting in at least one P in the phosphine attached indirectly or directly to the solid support via one or more covalent bond, and
      b) optionnally replacing one or more substituent of the group R₁, with any other R₁, R₂, or R₃.
2. The process of embodiment 1 wherein SS is selected from the group consisting of polyolefins, polyacrylates, polymethacrylates, and copolymers thereof.
3. The process of embodiment 1 wherein the supported phosphine compound is selected from the group consisting of Formulae 1A, 2A, 3A, 4A, 5A, 6A, and 7A. 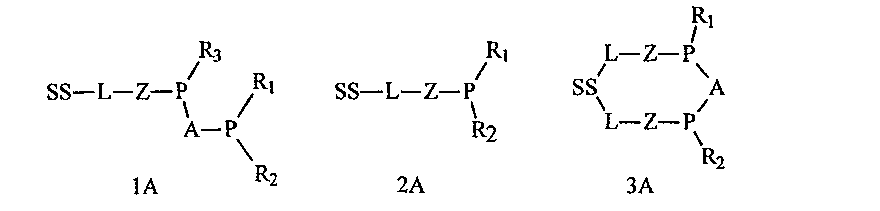 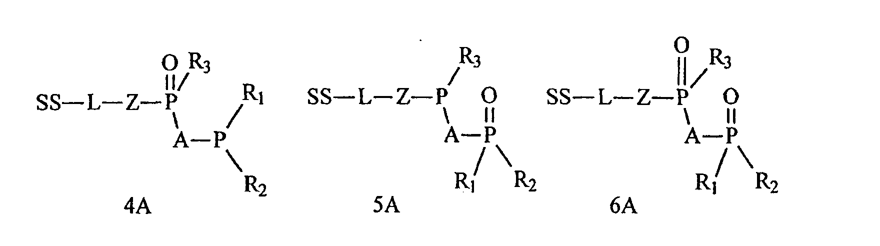 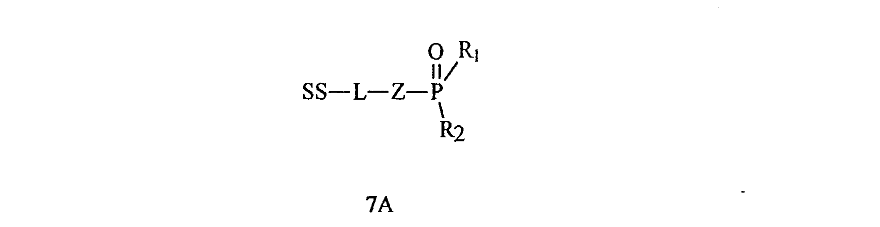 wherein:
   Z is a divalent attaching group covalently attached to at least one P in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and
   L is a divalent linking group covalently attached to Z and to SS, selected from the group consisting of optionally-substituted chains of from 1 to 12 linear, branched, and cyclic carbon atoms.
4. The process of embodiment 3 wherein the supported phosphine compound is of Formula 1A, and the process comprises the steps of:
   a) contacting (i) at least 2 molar equivalents of a phosphine of the Formula XR₃P-A-PR₁R₂ wherein X is a halogen, with (ii) no more than one molar equivalent of Z, resulting in one P in the phosphine being covalently bonded to the Z, and
   b) optionally replacing one or more substituent of the group R₁, R₂, and R₃ with any one or more of R₁, R₂, and R₃.
5. The process of embodiment 4 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl;
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
6. The process of embodiment 3 wherein the supported phosphine compound is of Formula 2A, and the process comprises the steps of:
   a) contacting (i) a phosphine of the Formula PR₁R₂X wherein X is a halogen, with (ii) the solid support, resulting in one P in the phosphine being covalently bonded to Z, and
   b) optionally replacing one or both substituent of the group R₁ and R₂ with any other R₁ or R₂.
7. The process of embodiment 6 wherein SS is polystyrene;
   L is -CH₂-;
   Z is selected from the group consisting of optionally-substituted carbon chain of 1-10 carbon atoms, -(NR₄)-, and -O-;
   R₄ is selected from the group consisting of chloro, cyclohexyl, n-propyl, i-propyl, n-butyl, phenyl, and t-butyl; and
   R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic or alkyl ring.
8. The process of embodiment 3 wherein the supported phosphine compound is of Formula 3A, and the process comprises the steps of:
   a) contacting (i) no more than one molar equivalent of a phosphine of the Formula XR₃P-A-PR₁R₂ wherein X is a halogen, with (ii) at least two molar equivalents of Z, resulting in both of the P in the phosphine being covalently bonded to the Z; and
   b) optionally replacing one or more of R₁ and R₂ with any one or more of R₁ and R₂.
9. The process of embodiment 8 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl;
   R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
10. The process of embodiment 3 wherein the supported phosphine compound is of Formula 4A, and the process comprises the steps of:
   a) contacting (i) a phosphine of the Formula HP(=O) R₃-A-PR₁R₂ with (ii) the solid support, resulting in one P in the phosphine being covalently bonded to Z; and
   b) optionally replacing one or more of R₁, R₂, and R₃ with any one or more of R₁, R₂, and R₃.
11. The process of embodiment 10 wherein SS is polystyrene;
   L is -CH₂-;
   Z is selected from the group consisting of optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl; and
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, pr alkyl ring.
12. The process of embodiment 3 wherein the supported phosphine compound is of Formula 5A, and the process comprises the steps of:
   a) contacting (i) a phosphine of the Formula HP(=O)R₁R₂ with (ii) a solid support of the formula 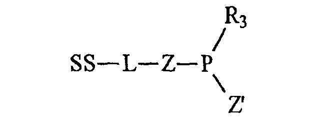 wherein the P in the solid support is covalently bonded to Z and Z' is selected from the group consisting of alkenyls, resulting in the P in the phosphine being covalently bonded to the P in the solid support via Z'; and
   b) optionally replacing one or more substituent of the group R₁, R₂, and R₃ with any one or more substituent of the group R₁, R₂, and R₃.
13. The process of embodiment 12 wherein SS is polystyrene;
   L is -CH₂-;
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₄ is selected from the group consisting of chloro, cyclohexyl, n-propyl, i-propyl, n-butyl, phenyl, and t-butyl; and
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.
14. A process to prepare a combinatorial library of supported phosphine compounds selected from the group consisting of Formulae 1, 2, 3, 4, 5, 6, and 7 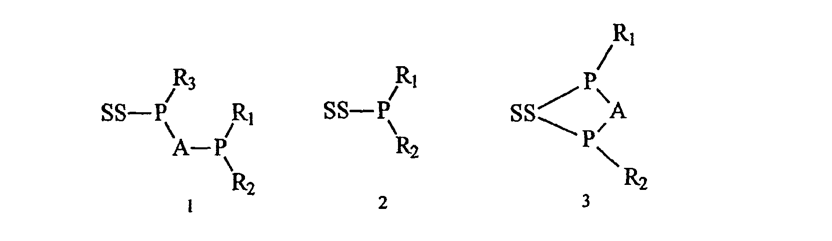 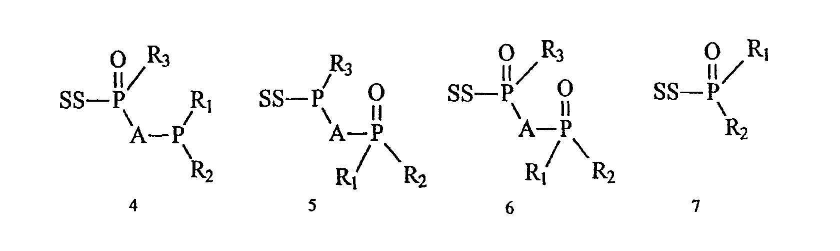 wherein:
   SS is a solid support;
   A is a divalent group of 1-12 aliphatic or aromatic carbon atoms, linear or branched, optionally containing one or more heteroatoms or organometallic groups;
   R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
   R₂ and R₃ together, R₁ and R₃ together, or R₁ and R₂ together can optionally form a ring, the process comprising the steps of:
      a) contacting (i) one or more phosphines selected from the group consisting of XPR₁R₂, XR₃P-A-PR₁R₂, HP(=O)R₁R₂, HP(=O) R₃-A-PR₁R₂, and HP(=O)R₃-A-P(=O)R₁R₂ wherein X is a halogen, with (ii) one or more solid supports, resulting in at least one P in each phosphine attached indirectly or directly to the solid support via one or more covalent bonds, and
      b) optionally replacing one or more substituent of the group R₁, R₂, or R₃ with any other substituent of the group R₁, R₂, or R₃.
15. The process of embodiment 14 wherein SS is selected from the group consisting of polyolefins, polyacrylates, polymethacrylates, and copolymers thereof.
16. The process of embodiment 14 wherein the supported phosphine compounds are selected from the group consisting of Formulae 1A, 2A, 3A, 4A, 5A, 6A, and 7A 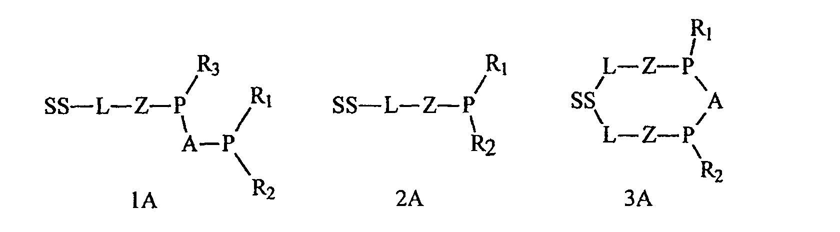 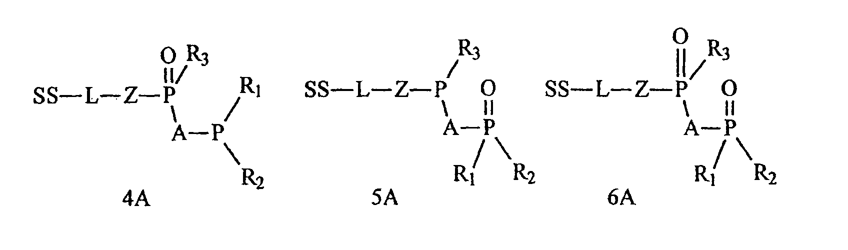 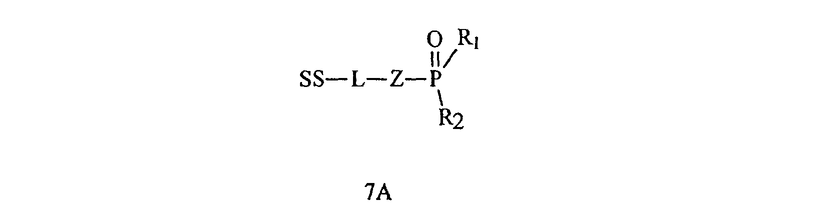 wherein:
   Z is a divalent attaching group covalently attached to at least one P in the phosphine, selected from the group consisting of hydrocarbylene, substituted hydrocarbylene, -O-, -S-, and NR₄-, where R₄ is selected from the group consisting of an optionally-substituted hydrocarbyl and halogen; and
   L is a divalent linking group covalently attached to Z and to SS, selected from the group consisting of optionally-substituted chains of from 1 to 12 linear, branched, and cyclic carbon atoms.
17. The process of embodiment 16 wherein the supported phosphine compounds are of Formula 1A, and the process comprises the steps of:
   a) contacting at least 2 molar equivalents of one or more phosphines of the Formula XR₃P-A-PR₁R₂ wherein X is a halogen, with no more than one molar equivalent of one or more of Z, resulting in one P in each phosphine being covalently bonded to the Z; and
   b) optionally replacing one or more substituent of the group R₁, R₂, and R₃ with any one or more of the substituent of the group of R₁, R₂, and R₃.
18. The process of embodiment 17 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl;
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
19. The process of embodiment 16 wherein the supported phosphine compounds are of Formula 2A, and the process comprises the steps of:
   a) contacting one or more phosphines of the Formula PR₁R₂X
      wherein X is a halogen, with one or more solid supports, resulting in one P in each phosphine being covalently bonded to Z; and
   b) optionally replacing one or both of R₁ and R₂ with any other R₁ or R₂.
20. The process of embodiment 9 wherein SS is polystyrene;
   L is -CH₂-;
   Z is selected from the group consisting of optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl; and
   R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic or alkyl ring.
21. The process of embodiment 16 wherein the supported phosphine compounds are of Formula 3A, and the process comprises the steps of:
   a) contacting no more than one molar equivalent of one or more phosphines of the Formula XR₃P-A-PR₁R₂ wherein X is a halogen, with at least two molar equivalents of one or more of Z, resulting in both of the P in each phosphine being covalently bonded to the Z; and
   b) optionally replacing one or more substituent of the group R₁ and R₂ with any one or more of the substituent of the group R₁ and R₂.
22. The process of embodiment 10 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -O-;
   R₄ is selected from the group consisting of chloro, cyclohexyl, n-propyl, i-propyl, n-butyl, phenyl, and t-butyl;
   R₁and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl or alkyl ring.
23. The process of embodiment 16 wherein the supported phosphine compounds are of Formula 4A, and the process comprises the steps of:
   a) contacting one or more phosphines of the Formula HP(=O) R₃-A-PR₁R₂ with one or more solid supports, resulting in one P in each phosphine being covalently bonded to Z; and
   b) optionally replacing one or more substituent of the group R₁, R₂, and R₃ with any one or more of the substituent f the group R₁, R₂, and R₃.
24. The process of embodiment 23 wherein SS is polystyrene;
   L is --CH₂-;
   Z is selected from the group consisting of optionally-substituted carbon chain of 1-10 carbon atoms, -(NR₄)-, and -O-;
   R₄ is selected from the group consisting of chloro, cyclohexyl, n-propyl, i-propyl, n-butyl, phenyl, and t-butyl; and
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole aryl or alkyl ring.
25. The process of embodiment 16 wherein the supported phosphine compounds are of Formula 5A, and the process comprises the steps of:
   a) contacting one or more phosphines of the Formula HP(=O)R₁R₂ with one or more solid supports of the formula 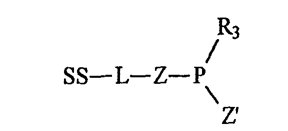 wherein the P in the solid support is covalently bonded to Z and Z' is selected from the group consisting of alkenyls, resulting in the phosphorus in each phosphine being covalently bonded to the phosphorus in the solid support via Z', and
   b) optionally replacing one or more of R₁, R₂, and R₃ with any one or more of R₁, R₂, and R₃.
26. The process of embodiment 25 wherein SS is polystyrene;
   L is -CH₂-;
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₄ is selected from the group consisting of chloro, cyclohexyl, n-propyl, i-propyl, n-butyl, phenyl, and t-butyl; and
   R₁, R₂, and R₃ are independently selected from the group consisting of hydrogen, Cl, alkyl, alkenyl, aryl, SQ₁, OQ₂, and PQ₃Q₄, where Q₁, Q₂, Q3, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.
27. A process to prepare a phosphine compound selected from the group consisting of Formulae 8, 9, 10, 11, and 12 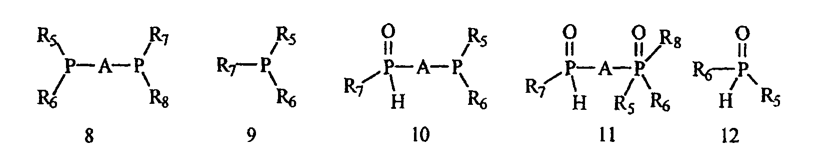 wherein:
   A is a divalent group of 1-12 aliphatic or aromatic carbon atoms, linear or branched, optionally containing one or more heteroatoms or organometallic groups;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring;
      the process comprising the steps of:
      a) contacting (i) a supported phosphine selected from the group consisting of Formulae 1, 2, 3, 4, 5, 6, and 7 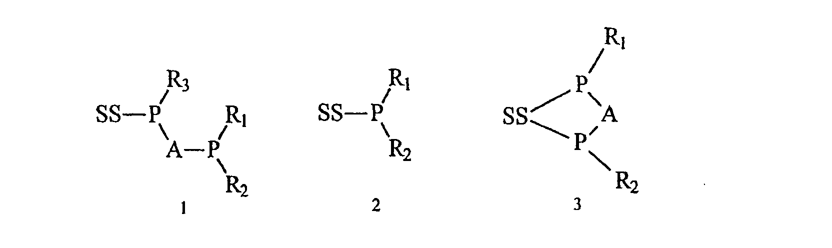 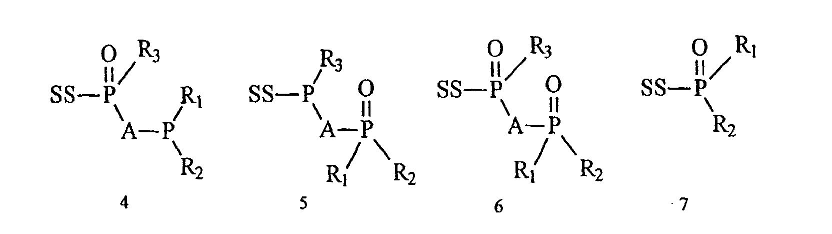 wherein:
         SS is a solid support wherein at least one P in the phosphine is attached indirectly or directly to the solid support via one or more covalent bonds;
         A is a divalent group of 1-12 aliphatic or aromatic carbon atoms, linear or branched, optionally containing one or more heteroatoms or organometal groups;
         R₁, R₂ and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
         R₂ and R₃ together, R₁ and R₃ together, or R₁ and R₂ together can optionally form a ring with
            (ii) a compound of the Formula ER₉, wherein E is an electrophilic group and R₉ is selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; thereby forming the corresponding compound of Formulae 1, 2, 3, 4, 5, 6, and 7; and
      b) optionally replacing one or more substituent of the group R₅, R₆, R₇, and R₈ with any other substituent of the group R₅, R₆, R₇, and R₈.
28. The process of embodiment 27 wherein the supported phosphine is selected from the group consisting of Formulae 1A, 2A, 3A, 4A, 5A, 6A, and 7A 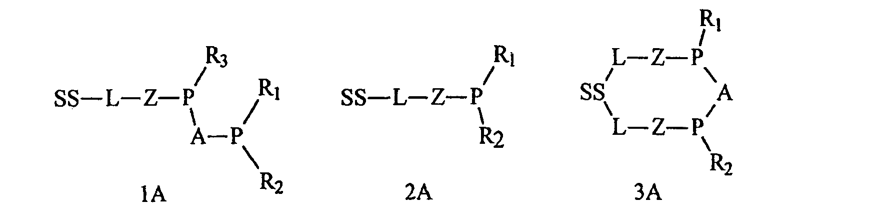 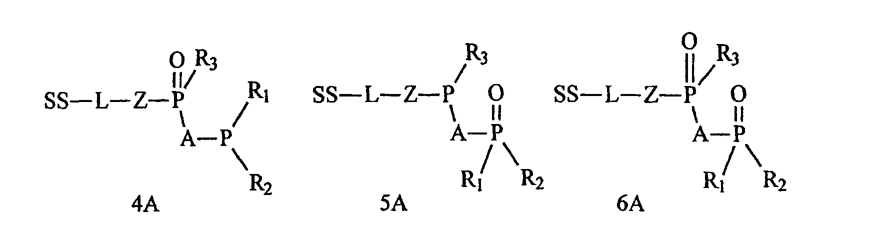 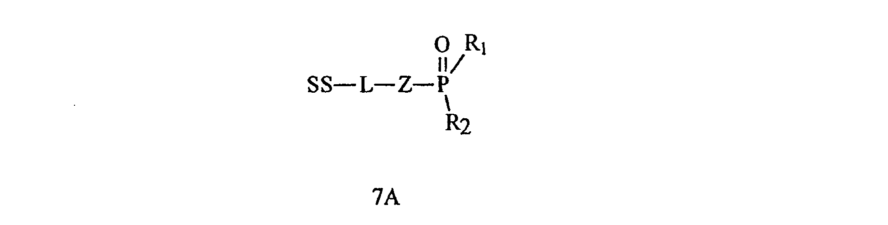 wherein:
   Z is a divalent attaching group covalently attached to at least one P in the phosphine, selected from the group consisting of hydrocarbylene, substituted hydrocarbylene, -O-, -S-, and NR₄-, where R₄ is selected from the group consisting of an optionally-substituted hydrocarbyl and halogen;
   L is a divalent linking group covalently attached to Z and to SS, selected from the group consisting of optionally-substituted chains of from 1 to 12 linear, branched, and cyclic carbon atoms;
   A is an optionally-substituted carbon chain of 1-3 carbon atoms;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring.
29. The process of embodiment 27 wherein E is selected from the group consisting of hydrogen, PCl₂, and SiMe₃, and wherein R₅ is a halogen.
30. The process of embodiment 27 wherein the supported phosphine compound is selected from the group consisting of Formulae 1 and 3, and the phosphine compound is of Formula 8.
31. The process of embodiment 30 wherein at least one substituent of the group R₅, R₆, R₇, and R₈ differs from the other substituents of the group R₅, R₆, R₇, and R₈.
32. The process of embodiment 30 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring.
33. The process of embodiment 27 wherein the supported phosphine compound is of Formula 2, and the phosphine compound is of Formula 9.
34. The process of embodiment 33 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
   any of R₅, R₆, and R₇ can optionally together with any other of R₅, R₆, and R₇ form a ring.
35. The process of embodiment 27 wherein the supported phosphine compound is of Formula 4, and the phosphine compound is of Formula 10.
36. The process of embodiment 35 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆ and R₇ form a ring.
37. The process of embodiment 27 wherein the supported phosphine compound is selected from the group consisting of Formulae 3 and 5, and the phosphine compound is of Formula 11.
38. The process of embodiment 37 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₆, R₇, and R₈ are independently selected from the group consisting of Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₆, R₇, and R₈ can optionally together with any other substituent of the group R₄, R₇, and R₈ form a ring.
39. The process of embodiment 27 wherein the supported phosphine compound is of Formula 2, and the phosphine compound is of Formula 12.
40. The process of embodiment 39 wherein:
   Z is selected from the group consisting of optionally-substituted carbon chain of 1-10 carbon atoms, -(NR₄)-, and -O-;
   A is selected from the group consisting of an optionally-substituted carbon chain of 1-3 carbon atoms and an optionally-substituted carbon ring of 6-12 carbon atoms;
   R₅ and R₆ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
   any of R₅ and R₆ can optionally together with any other of R₅ and R₆ form a ring.
41. A process to prepare a combinatorial library of phosphine compounds selected from the group consisting of Formulae 8, 9, 10, 11, and 12 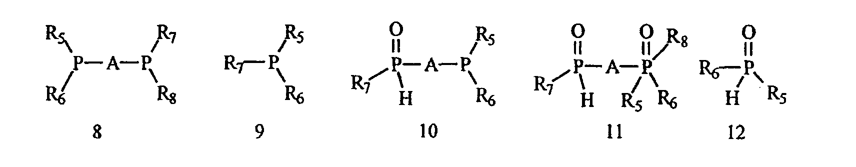 wherein:
   A is a divalent group of 1-12 aliphatic or aromatic carbon atoms, linear or branched, optionally containing one or more heteroatoms or organometallic groups;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring;
      the process comprising the steps of:
      a) contacting (i) one or more supported phosphines selected from the group consisting of Formulae 1, 2, 3, 4, 5, 6, and 7 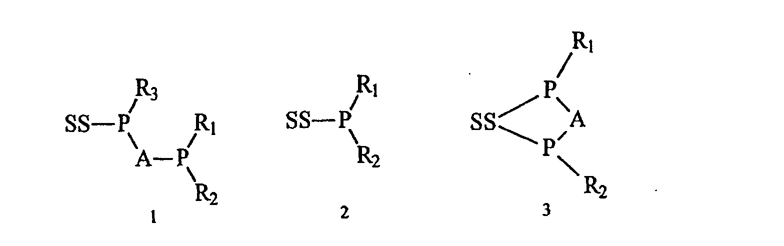 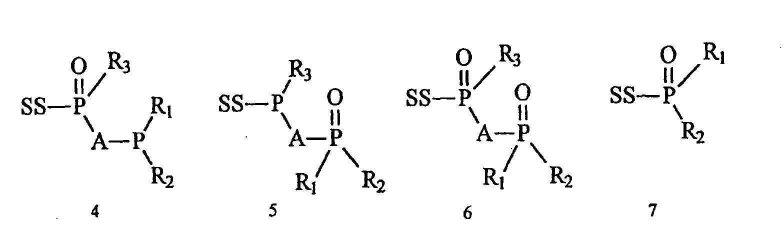 wherein:
         SS is a solid support wherein at least one P in each phosphine is attached indirectly or directly to the solid support via one or more covalent bonds;
         A is a divalent group of 1-12 aliphatic or aromatic carbon atoms, linear or branched, optionally containing one or more heteroatoms or organometallic groups;
         R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
         R₂ and R₃ together, R₁ and R₃ together, or R₁ and R₂ together can optionally form a ring with
            (ii) one or more compounds of the Formula ER₉, wherein E is an electrophilic group and R₉ is selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; thereby forming the corresponding compounds of Formulae 1, 2, 3, 4, 5, 6, and 7; and
      b) optionally replacing one or more substituent of the group R₅, R₆, R₇, and R₈ with any other substituent of the group R₅, R₆, R₇, and R₈.
42. The process of embodiment 41 wherein the supported phosphine is selected from the group consisting of Formulae 1A, 2A, 3A, 4A, 5A, 6A, and 7A 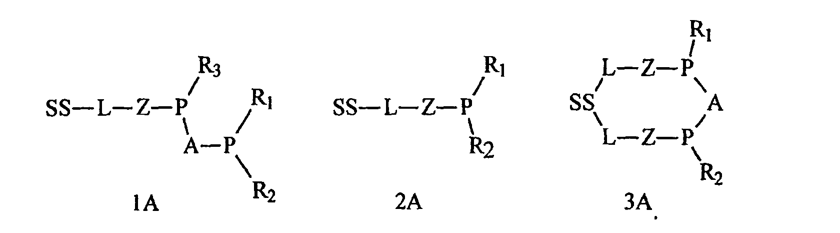 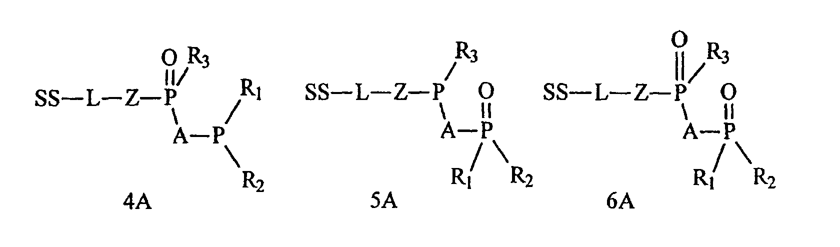 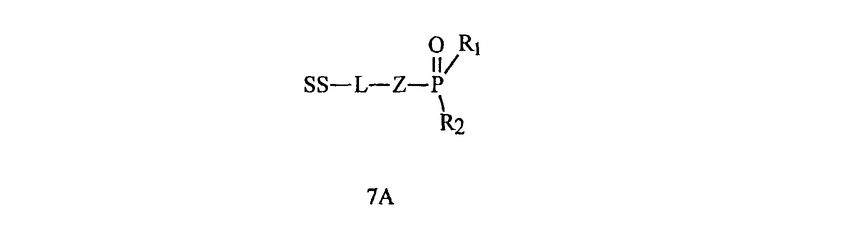 wherein:
   Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen;
   L is a divalent linking group covalently attached to Z and to SS, selected from the group consisting of optionally-substituted chains of from 1 to 12 linear, branched, and cyclic carbon atoms;
   A is an optionally-substituted carbon chain of 1-3 carbon atoms;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring.
43. The process of embodiment 41 wherein E is selected from the group consisting of hydrogen, PCl₂, and SiMe₃, and wherein R₅ is a halogen.
44. The process of embodiment 41 wherein the supported phosphine compounds are selected from the group consisting of Formulae 1 and 3, and the phosphine compound is of Formula 8.
45. The process of embodiment 44 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, R₇, and R₈ can optionally together with any other substituent of the group R₅, R₆ R₇, and R₈ form a ring.
46. The process of embodiment 41 wherein the supported phosphine compounds are of Formula 2, and the phosphine compounds are of Formula 9.
47. The process of embodiment 46 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₅, R₆, and R₇, are independently selected from the group consisting of hydrogen, Cl, alkyl, alkenyl, aryl, heterocycle, SQ₁, OQ₂, and PQ₃Q₄, where Q₁ Q₂, Q₃, and Q₄ are independently selected from the group consisting of hydrogen, hydrocarbyl, substituted hydrocarbyl, hydrocarbylamino, alkoxy, aryloxy, and heterocycle; and
   any substituent of the group R₅, R₆, and R₇ can optionally together with any other substituent of the group R₅, R₆, and R₇ form a ring.
48. The process of embodiment 41 wherein the supported phosphine compounds are of Formula 4, and the phosphine compounds are of Formula 10.
49. The process of embodiment 48 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆, and R₇ form a ring.
50. The process of embodiment 41 wherein the supported phosphine compounds are selected from the group consisting of Formulae 3 and 5, and the phosphine compounds are of Formula 11.
51. The process of embodiment 50 wherein:
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₆, R₇, and R₈ are independently selected from the group consisting of Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₆, R₇, and R₈ can optionally together with any other substituent of the group R₆, R₇, and R₈ form a ring.
52. The process of embodiment 41 wherein the supported phosphine compounds are of Formula 2, and the phosphine compounds are of Formula 12.
53. The process of embodiment 52 wherein:
   Z is selected from the group consisting of optionally-substituted carbon chain of 1-10 carbon atoms, -(NR₄)-, and-O-;
   A is selected from the group consisting of an optionally-substituted carbon chain of 1-3 carbon atoms and an optionally-substituted carbon ring of 6-12 carbon atoms;
   R₅ and R₆ are independently selected from the group consisting of hydrogen, Cl, alkyl, alkenyl, aryl, heterocycle, SQ₁, OQ₂, and PQ₃Q₄, where Q₁, Q₂, Q₃> and Q₄ are independently selected from the group consisting of hydrogen, hydrocarbyl, substituted hydrocarbyl, hydrocarbylamino, alkoxy, aryloxy, and heterocycle; and
   any substituent of the group R₅ and R₆ can optionally together with any other substituent of the group R₅ and R₆ form a ring.
54. A supported phosphine compound selected from the group consisting of Formulae 1, 2, 3, 4, 5, 6, and 7 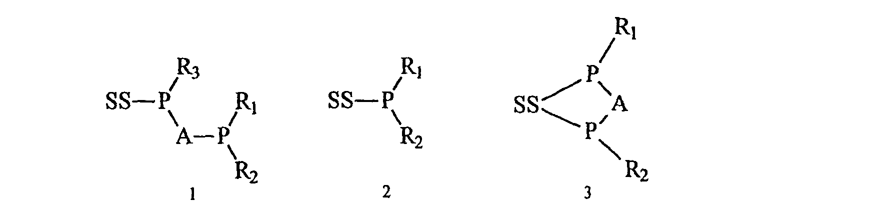 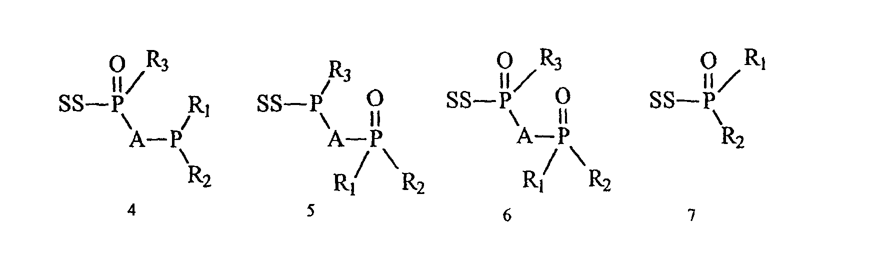 wherein:
   SS is a solid support wherein at least one P in each phosphine is attached indirectly or directly to the solid support via one or more covalent bonds;
   A is a divalent group of 1-12 aliphatic or aromatic carbon atoms, linear or branched, optionally containing one or more heteroatoms or organometallic groups;
   R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
   R₂ and R₃ together, R₁ and R₃ together, or R₁ and R₂ together can optionally form a ring.
55. The supported phosphine compound of embodiment 54 wherein SS is selected from the group consisting of polyolefins, polyacrylates, polymethacrylates, and copolymers thereof.
56. The supported phosphine compound of embodiment 54 selected from the group consisting of Formulae 1A, 2A, 3A, 4A, 5A, 6A, and 7A 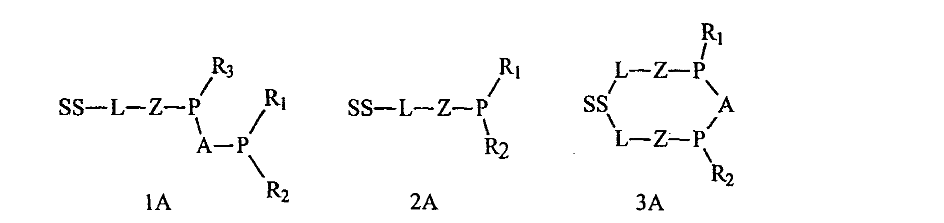 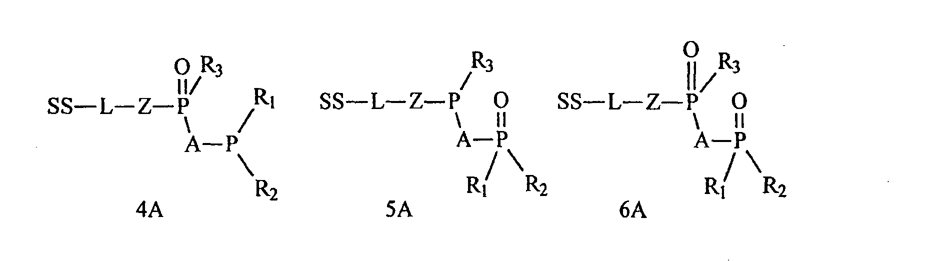 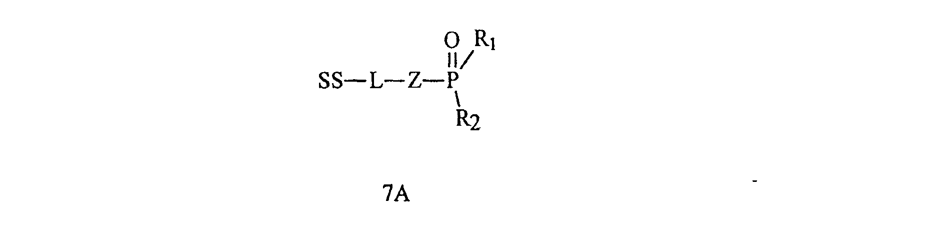 wherein:
   Z is a divalent attaching group covalently attached to at least one phosphorus in the phosphine, selected from the group consisting of hydrocarbylene, substituted hydrocarbylene, -O-, -S-, and -NR₄-, where R₄ is selected from the group consisting of an optionally-substituted hydrocarbyl and halogen; and
   L is a divalent linking group covalently attached to Z and to SS, selected from the group consisting of optionally-substituted chains of from 1 to 12 linear, branched, and cyclic carbon atoms.
57. The supported phosphine compound of embodiment 56 that is Formula 1A.
58. The supported phosphine compound of embodiment 57 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -O-;
   R₄ is selected from the group consisting of chloro, cyclohexyl, n-propyl, i-propyl, n-butyl, phenyl, and t-butyl;
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
59. The supported phosphine compound of embodiment 56 that is Formula 2A.
60. The supported phosphine compound of embodiment 59 wherein SS is polystyrene;
   L is -CH₂-;
   Z is selected from the group consisting of optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl; and
   R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic, or alkyl ring.
61. The supported phosphine compound of embodiment 56 that is Formula 3A.
62. The supported phosphine compound of embodiment 56 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl;
   R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
63. The supported phosphine compound of embodiment 56 that is Formula 4A.
64. The supported phosphine compound of embodiment 63 wherein SS is polystyrene;
   L is -CH₂-;
   Z is selected from the group consisting of optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl; and
   R₁, R₂, and R₃ are independently selected from the group consisting of hydrogen, Cl, alkyl, alkenyl, aryl, SQ₁, OQ₂, and PQ₃Q₄, where Q₁> Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
65. The supported phosphine compound of embodiment 56 that is Formula 5A.
66. The supported phosphine compound of embodiment 65 wherein SS is polystyrene;
   L is -CH₂-;
   Z is selected from the group consisting of optionally-substituted carbon chain of 1-10 carbon atoms, -(NR₄)-, and -O-;
   A is selected from the group consisting of an optionally-substituted carbon chain of 1-3 carbon atoms and an optionally-substituted carbon ring of 6-12 carbon atoms;
   R₄ is selected from the group consisting of chloro, cyclohexyl, n-propyl, i-propyl, n-butyl, phenyl, and t-butyl; and
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.
67. A combinatorial library of supported phosphine compounds selected from the group consisting of Formulae 1, 2, 3, 4, 5, 6, and 7 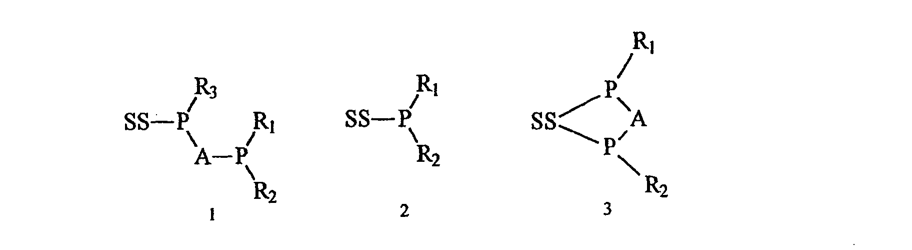 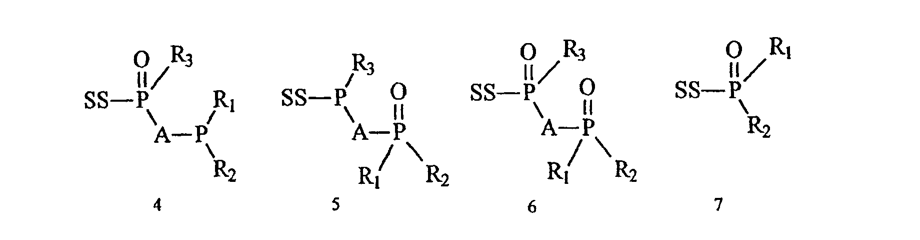 wherein:
   SS is a solid support wherein at least one P in each phosphine is attached indirectly or directly to the solid support via one or more covalent bonds;
   A is a divalent group of 1-12 aliphatic or aromatic carbon atoms, linear or branched, optionally containing one or more heteroatoms or organometallic groups;
   R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
   R₂ and R₃ together, R₁ and R₃ together, or R₁ and R₂ together can optionally form a ring.
68. The combinatorial library of embodiment 67 wherein SS is selected from the group consisting of polyolefins, polyacrylates, polymethacrylates, and copolymers thereof.
69. The combinatorial library of embodiment 67 wherein the supported phosphine compounds are selected from the group consisting of Formulae 1A, 2A, 3A, 4A, 5A, 6A, and 7A 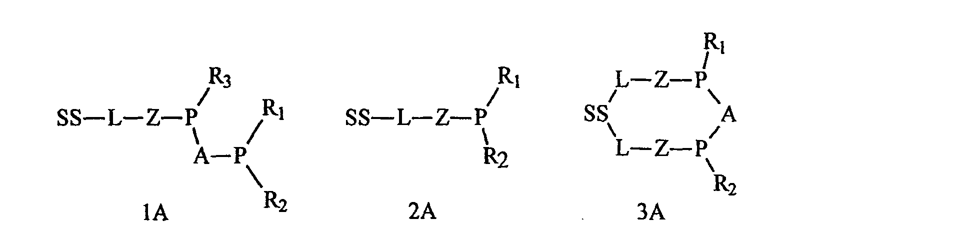 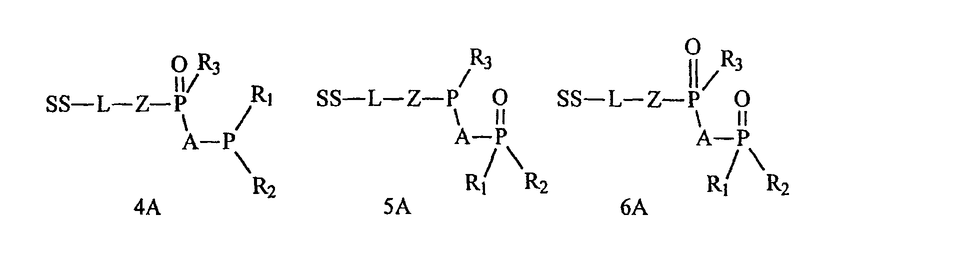 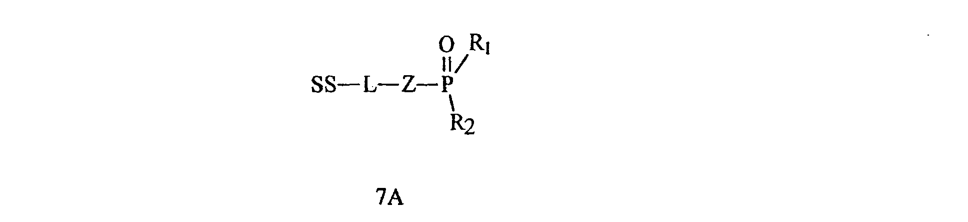 wherein:
   Z is a divalent attaching group covalently attached to at least one phosphorus in each phosphine, selected from the group consisting of hydrocarbylene, substituted hydrocarbylene, -O- -S-, and NR₄-, where R₄ is selected from the group consisting of an optionally-substituted hydrocarbyl and halogen; and
   L is a divalent linking group covalently attached to Z and to SS, selected from the group consisting of optionally-substituted chains of from 1 to 12 linear, branched, and cyclic carbon atoms.
70. The combinatorial library of embodiment 69 that is Formula 1A.
71. The combinatorial library of embodiment 70 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl;
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
72. The combinatorial library of embodiment 69 that is Formula 2A.
73. The combinatorial library of embodiment 72 wherein SS is polystyrene;
   L is -CH₂-;
   Z is selected from the group consisting of optionally-substituted carbon chain of 1-10 carbon atoms, -(NR₄)-, and -O-;
   R₄ is selected from the group consisting of chloro, cyclohexyl, n-propyl, i-propyl, n-butyl, phenyl, and t-butyl; and
   R₁ and R₂ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aromatic, or alkyl ring.
74. The combinatorial library of embodiment 69 that is Formula 3A.
75. The combinatorial library of embodiment 74 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -O-;
   R₄ is selected from the group consisting of chloro, cyclohexyl, n-propyl, i-propyl, n-butyl, phenyl, and t-butyl;
   R₁ and R₂ are independently selected from the group consisting of hydrogen, Cl, alkyl, alkenyl, aryl, SQ₁, OQ₂, and PQ₃Q₄, where Q₁, Q₂, Q₃₀, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring.
76. The combinatorial library of embodiment 69 that is Formula 4A.
77. The combinatorial library of embodiment 76 wherein SS is polystyrene;
   L is -CH₂-;
   Z is selected from the group consisting of optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl; and
   R₁ , R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring
78. The combinatorial library of embodiment 69 that is Formula 5A.
79. The combinatorial library of embodiment 78 wherein SS is polystyrene;
   L is -CH₂-;
   Z is selected from the group consisting of optionally-substituted carbon chain of 1-10 carbon atoms, -(NR₄)-, and -0-;
   A is selected from the group consisting of an optionally-substituted carbon chain of 1-3 carbon atoms and an optionally-substituted carbon ring of 6-12 carbon atoms;
   R₄ is selected from the group consisting of chloro, cyclohexyl, n-propyl, i-propyl, n-butyl, phenyl, and t-butyl; and
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle; and where R₁ and R₂ together with the P form a phosphole, aryl, or alkyl ring.
80. A combinatorial library of phosphine compounds selected from the group consisting of Formulae 8, 9, 10, 11, and 12 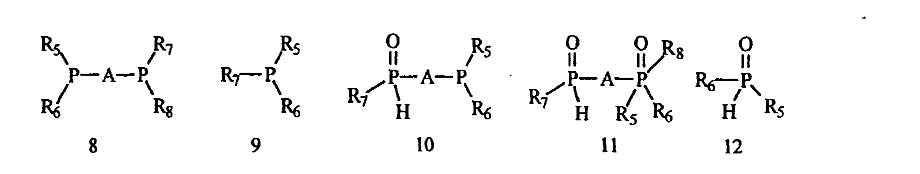 wherein:
   A is a divalent group of 1-12 aliphatic or aromatic carbon atoms, linear or branched, optionally containing one or more heteroatoms or organometallic groups;
   R₅, R₆, R₇, and R₈ are independently selected from the group hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle;
   any of R₅, R₆, R₇, and R₈ can optionally together with any other of R₅, R₆, R₇, and R₈ form a ring.
81. The combinatorial library of embodiment 80 wherein:
   A is an optionally-substituted carbon chain of 1-3 carbon atoms;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring.
82. The combinatorial library of embodiment 80 wherein the phosphine compounds are of Formula 8.
83. The combinatorial library of embodiment 82 wherein at least one substituent of the group R₅, R₆, R₇, and R₈ differs from the other substituents of the group R₅, R₆, R₇, and R₈.
84. The combinatorial library of embodiment 82 wherein:
   A is an optionally-substituted carbon chain of 1-3 carbon atoms;
   R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
   any substituent of the group R₅, R₆, R₇, and R₈ can optionally together with any other substituent of the group R₅, R₆, R₇, and R₈ form a ring.
85. The combinatorial library of embodiment 80 wherein the phosphine compounds are of Formula 9.
86. The combinatorial library of embodiment 85 wherein:
   A is an optionally-substituted carbon chain of 1-3 carbon atoms;
   R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆, and R₇ form a ring.
87. The combinatorial library of embodiment 80 wherein the phosphine compounds are of Formula 10.
88. The combinatorial library of embodiment 87 wherein:
   A is an optionally-substituted carbon chain of 1-3 carbon atoms;
   R₅, R₆, and R₇ are independently selected from the group consisting of hydrogen, Cl, alkyl, alkenyl, aryl, heterocycle, SQ₁, OQ₂, and PQ_{3Q4}, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅, R₆, and R₇ can optionally together with any other substituent of the group R₅, R₆, and R₇ form a ring.
89. The combinatorial library of embodiment 80 wherein the phosphine compounds are of Formula 11.
90. The combinatorial library of embodiment 89 wherein:
   A is an optionally-substituted carbon chain of 1-3 carbon atoms;
   R₆, R₇, and R₈ are independently selected from the group consisting of Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
   any substituent of the group R₆, R₇, and R₈ can optionally together with any other substituent of the group R₆, R₇, and R₈ form a ring.
91. The combinatorial library of embodiment 80 wherein the phosphine compounds are of Formula 12.
92. The combinatorial library of embodiment 91 wherein:
   A is an optionally-substituted carbon chain of 1-3 carbon atoms;
   R₅ and R₆ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and any substituent of the group R₅ and R₆ can optionally together with any other substituent of the group R₅ and R₆ form a ring.
93. A coordination compound comprising one or more transition metals complexed to a ligand selected from the group consisting of Formulae 1, 2, 3, 4, 5, 6, and 7 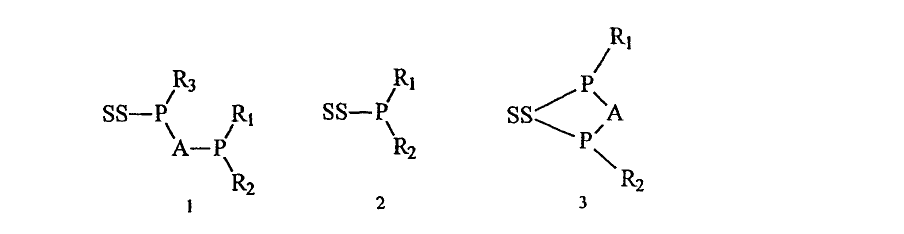 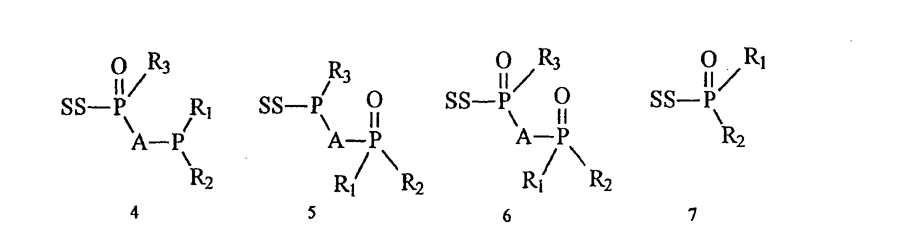 wherein:
   SS is a solid support wherein at least one P in each phosphine is attached indirectly or directly to the solid support via one or more covalent bonds;
   A is a divalent group of 1-12 aliphatic or aromatic carbon atoms, linear or branched, optionally containing one or more heteroatoms or organometal groups;
   R₁, R₂, and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
   R₂ and R₃ together, R₁ and R₃ together, or R₁ and R₂ together can optionally form a ring.
94. The coordination compound of embodiment 93 wherein SS is selected from the group consisting of polyolefins, polyacrylates, polymethacrylates, and copolymers thereof, and wherein the transition metals are selected from Periodic Group VIII.
95. The coordination compound of embodiment 93 that is selected from the group consisting of Formulae 1A, 2A, 3A, 4A, 5A, 6A, and 7A 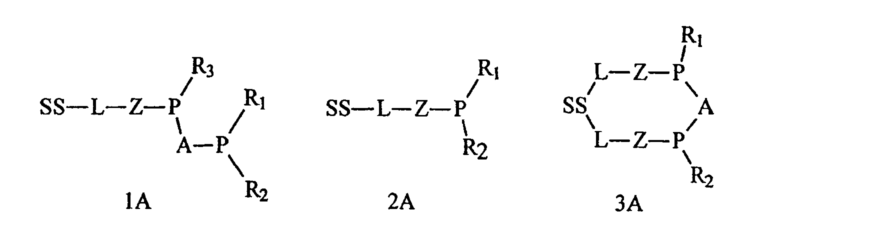 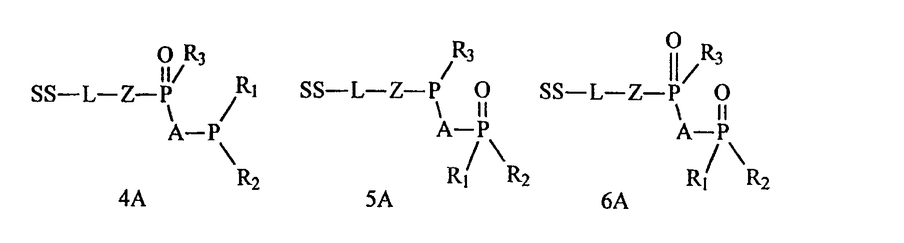 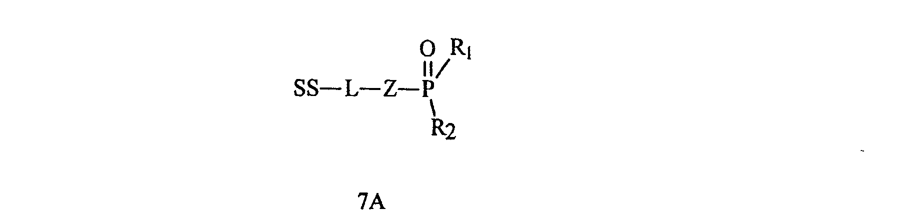 wherein:
   Z is a divalent attaching group covalently attached to at least one phosphorus in the phosphine, selected from the group consisting of hydrocarbylene, substituted hydrocarbylene, -O-, -S-, and NR₄-, where R₄ is selected from the group consisting of an optionally-substituted hydrocarbyl and halogen; and
   L is a divalent linking group covalently attached to Z and to SS, selected from the group consisting of optionally-substituted chains of from 1 to 12 linear, branched, and cyclic carbon atoms.
96. The coordination compound of embodiment 95 that is Formula 1A.
97. The coordination compound of embodiment 96 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl;
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl or alkyl ring; and
   the transition metal is Rh.
98. The coordination compound of embodiment 97 that is prepared from polymer-bound 1-(1,1-di-*n*-propylphosphino)-2-*n*-propylphosphinoethane and (1,5-cyclooctadiene)-rhodium (I) chloride dimer.
99. A combinatorial library of coordination compounds comprising one or more transition metals complexed to one or more ligands selected from the group consisting of Formulae 1, 2, 3, 4, 5, 6, and 7 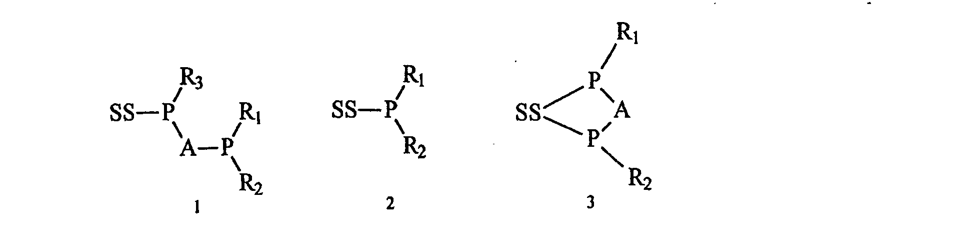 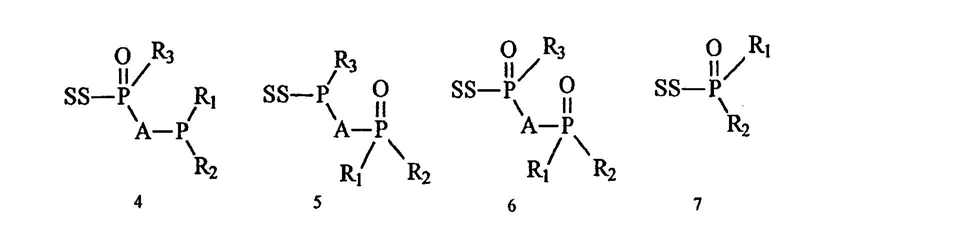 wherein:
   SS is a solid support wherein at least one P in each phosphine is attached indirectly or directly to the solid support via one or more covalent bonds;
   A is a divalent group of 1-12 aliphatic or aromatic carbon atoms, linear or branched, optionally containing one or more heteroatoms or organometallic groups;
   R₁, R₂, and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
   R₂ and R₃ together, R₁ and R₃ together, or R₁ and R₂ together can optionally form a ring.
100. The combinatorial library of embodiment 99 wherein SS is selected from the group consisting of polyolefins, polyacrylates, polymethacrylates, and copolymers thereof, and wherein the transition metals are selected from Periodic Group VIII.
101. The combinatorial library of embodiment 99 that is selected from the group consisting of Formulae 1A, 2A, 3A, 4A, 5A, 6A, and 7A 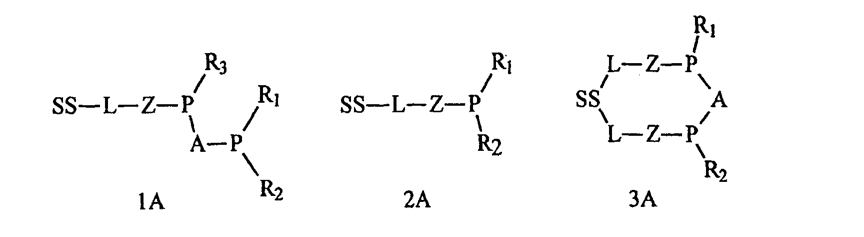 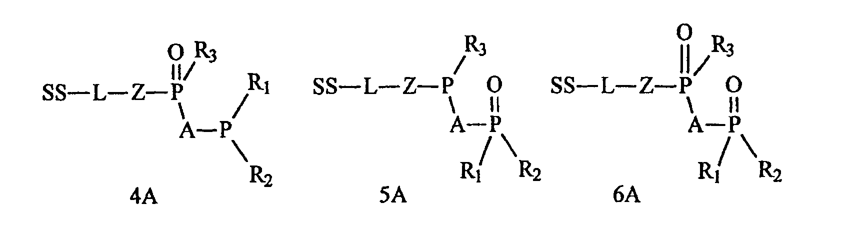 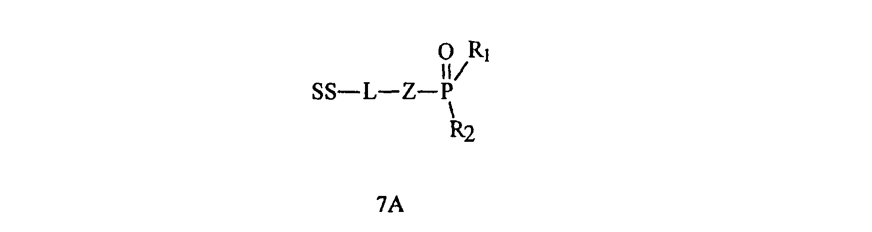 wherein:
   Z is a divalent attaching group covalently attached to at least one phosphorus in the phosphine, selected from the group consisting of hydrocarbylene, substituted hydrocarbylene, -O-, -S-, and NR₄-, where R₄ is selected from the group consisting of an optionally-substituted hydrocarbyl and halogen; and
   L is a divalent linking group covalently attached to Z and to SS, selected from the group consisting of optionally-substituted chains of from 1 to 12 linear, branched, and cyclic carbon atoms.
102. The combinatorial library of embodiment 101 that is Formula 1A.
103. The combinatorial library of embodiment 102 wherein SS is polystyrene;
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -O-;
   R₄ is selected from the group consisting of chloro, cyclohexyl, n-propyl, i-propyl, n-butyl, phenyl, and t-butyl;
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring; and
   the transition metal is Rh.
104. A combinatorial library of coordination compounds comprising one or more transition metals complexed to one or more ligands selected from the group consisting of Formulae 8, 9, 10,11, and 12 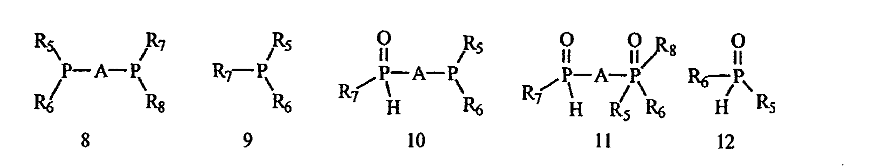 wherein:
   A is a divalent group of 1-12 aliphatic or aromatic carbon atoms, linear or branched, optionally containing one or more heteroatoms or organometallic groups;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring.
105. The combinatorial library of embodiment 104 wherein:
   A is an optionally-substituted carbon chain of 1-3 carbon atoms;
   R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
   any of R₅, R₆, R₇, and R₈ can optionally together with any other of R₅, R₆, R₇, and R₈ form a ring; and
   the transition metals are selected from Periodic Group VIII.
106. The combinatorial library of embodiment 104 wherein the ligands are of Formula 8.
107. The combinatorial library of embodiment 106 wherein at least one substituent of the group R₅, R₆, R₇, and R₈ differs from the other substituent of the group R₅, R₆, R₇, and R₈.
108. The combinatorial library of embodiment 106 wherein:
   A is an optionally-substituted carbon chain of 1-3 carbon atoms;
   R₅, R₆, R₇, and R₈ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
   any substituent of the group R₅, R₆, R₇, and R₈ can optionally together with any other substituent of the group R₅, R₆, R₇, and R₈ form a ring; and the transition metal is Pd.
109. A process to prepare coumarin comprising contacting salicylaldehyde with an acrylate of the formula 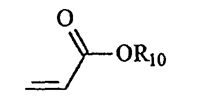 wherein R₁₀ is an alkyl group of 1-6 carbons.
110. The process of embodiment 109 wherein the process is performed in the presence of a catalytic amount of a coordination compound comprising one or more transition metals complexed to a ligand selected from the group consisting of Formulae 1, 2, 3, 4, 5, 6, and 7 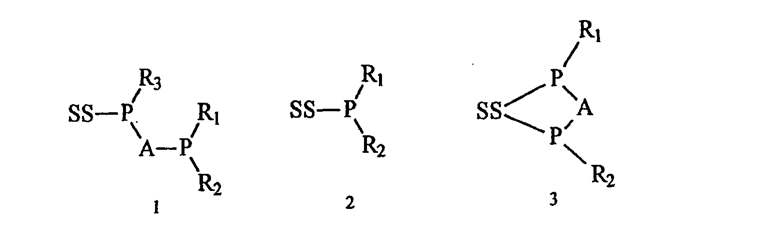 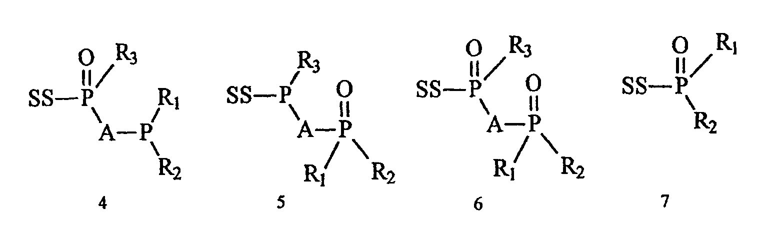 wherein:
   SS is a solid support wherein at least one P in each phosphine is attached indirectly or directly to the solid support via one or more covalent bonds;
   A is a divalent group of 1-12 aliphatic or aromatic carbon atoms, linear or branched, optionally containing one or more heteroatoms or organometallic groups;
   R₁, R₂ and R₃ are independently selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
   R₂ and R₃ together, R₁ and R₃ together, or R₁ and R₂ together can optionally form a ring.
111. The process of embodiment 110 wherein SS is selected from the group consisting of polyolefins, polyacrylates, polymethacrylates, and copolymers thereof, and wherein the transition metal is selected from Periodic Group VIII.
112. The process of embodiment 111 wherein the ligand is Formula 1A: 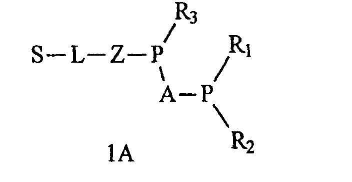 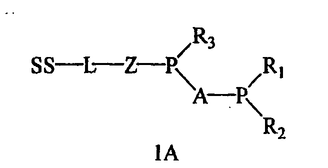 wherein:
   Z is a divalent attaching group covalently attached to at least one phosphorus in the phosphine, selected from the group consisting of hydrocarbylene, substituted hydrocarbylene, -O-, -S-, and NR₄-, where R₄ is selected from the group consisting of an optionally-substituted hydrocarbyl and halogen; and
   L is a divalent linking group covalently attached to Z and to SS, selected from the group consisting of optionally-substituted chains of from 1 to 12 linear, branched, and cyclic carbon atoms.
113. The process of embodiment 112 wherein:
   L is -CH₂-;
   A is selected from the group consisting of an optionally-substituted carbon chain of 1-3 carbon atoms and an optionally-substituted carbon ring of 6-12 carbon atoms;
   Z is selected from the group consisting of an optionally-substituted carbon chain of 1-10 carbon atoms, -(NR₄)-, and -0-;
   R₄ is selected from the group consisting of chloro, cyclohexyl, n-propyl, i-propyl, n-butyl, phenyl, and t-butyl;
   R₁, R₂, and R₃ are independently selected from the group consisting of hydrogen, Cl, alkyl, alkenyl, aryl, SQ₁, OQ₂, and PQ₃Q₄, where Q₁, Q₂, Q₃, and Q₄ are selected from the group consisting of hydrogen, hydrocarbyl, substituted hydrocarbyl, hydrocarbylamino, and heterocycle, and where R₁ and R₂ together with the P form a phosphole, aryl, or alkyl ring; and
   the transition metal is Rh.

## Claims

1. A process to prepare a phosphine compound selected from the group consisting of Formulae 8, 9, 10, 11, and 12 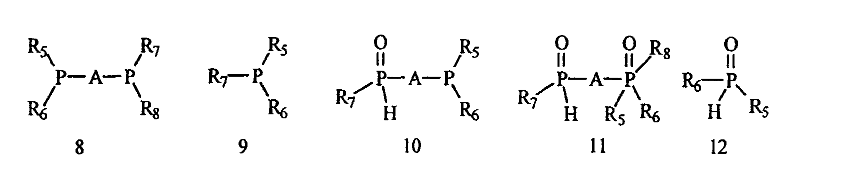 wherein:
A is a divalent group of 1-12 aliphatic or aromatic carbon atoms, linear or branched, optionally containing one or more heteroatoms or organometallic groups;
R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
any of R₅, R₆, R₇, and R₈ can optionally together with any other of R₅, R₆, R₇, and R₈ form a ring;
the process comprising the steps of:
a) contacting (i) a supported phosphine selected from the group consisting of Formulae 1,2,3,4, 5,6, and 7 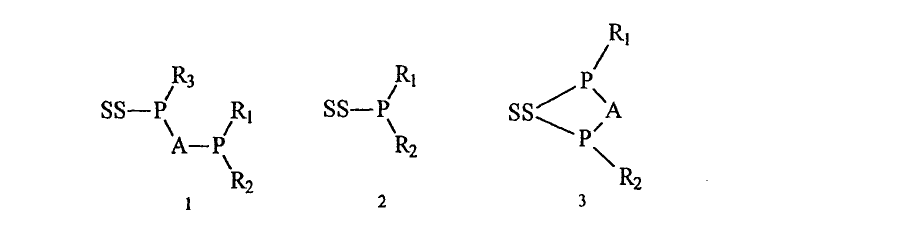 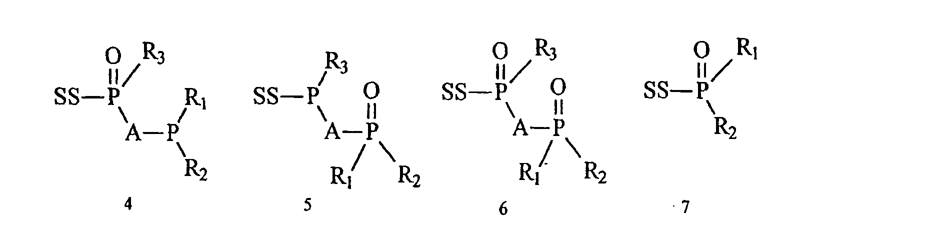 wherein:
SS is a solid support wherein at least one P in the phosphine is attached indirectly or directly to the solid support via one or more covalent bonds;
A is a divalent group of 1-12 aliphatic or aromatic carbon atoms, linear or branched, optionally containing one or more heteroatoms or organometal groups;
R₁, R₂ and R₃ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle, and
R₂ and R₃ together, R₁ and R₃ together, or R₁ and R₂ together can optionally form a ring with
(ii) a compound of the Formula ER₉, wherein E is an electrophilic group and R₉ is selected from the group consisting of hydrogen, hydrocarbyl, substituted hydrocarbyl, heterocycle, organometal, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; thereby forming the corresponding compound of Formulae 1, 2, 3, 4, 5, 6, and 7; and
b) optionally replacing one or more substituent of the group R₅, R₆, R₇, and R₈ with any other substituent of the group R₅, R₆, R₇, and R₈.

2. The process of Claim 1 wherein the supported phosphine is selected from the group consisting of Formulae 1A, 2A, 3A, 4A, 5A, 6A, and 7A 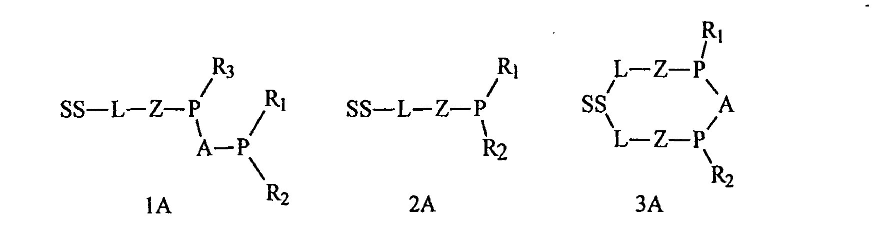 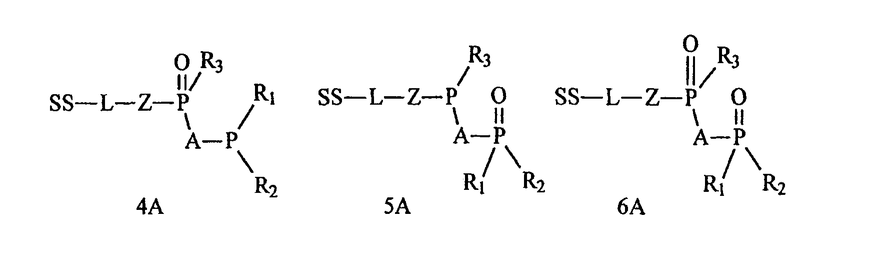 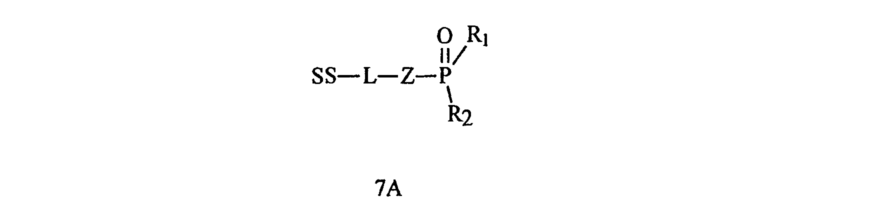 wherein:
Z is a divalent attaching group covalently attached to at least one P in the phosphine, selected from the group consisting of hydrocarbylene, substituted hydrocarbylene, -O-, -S-, and -NR₄-, where R₄ is selected from the group consisting of an optionally-substituted hydrocarbyl and halogen;
L is a divalent linking group covalently attached to Z and to SS, selected from the group consisting of optionally-substituted chains of from 1 to 12 linear, branched, and cyclic carbon atoms;
A is an optionally-substituted carbon chain of 1-3 carbon atoms;
R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
any of R₅, R₆, R₇, and R₈ can optionally together with any other of R₅, R₆, R₇, and R₈ form a ring.

3. The process of Claim 1 wherein E is selected from the group consisting of hydrogen, PCl₂ and SiMe₃, and wherein R₅ is a halogen.

4. The process of Claim 1 wherein the supported phosphine compound is selected from the group consisting of Formulae 1 and 3, and the phosphine compound is of Formula 8.

5. The process of Claim 4 wherein at least one substituent of the group R₅, R₆, R₇, and R₈ differs from the other substituents of the group R₅, R₆, R₇, and R₈.

6. The process of Claim 4 wherein:
Z is selected from the group consisting of optionally-substituted carbon chain of 1-10 carbon atoms, -(NR₄)-, and -0-;
A is selected from the group consisting of an optionally-substituted carbon chain of 1-3 carbon atoms and an optionally-substituted carbon ring of 6-12 carbon atoms;
R₅, R₆, R₇, and R₈ are independently selected from the group consisting of hydrogen, hydrocarbyl, substituted hydrocarbyl, heterocycle, organometallic, Cl, Br, I, SQ₁, OQ₂, PQ₃Q₄, and NQ₅Q₆, where Q₁, Q₂, Q₃, Q₄, Q₅, and Q₆ are independently selected from the group consisting of hydrogen, hydrocarbyl, substituted hydrocarbyl, hydrocarbylamino, alkoxy, aryloxy, and heterocycle; and
any of R₅, R₆, R₇, and R₈ can optionally together with any other of R₅, R₆, R₇, and R₈ form a ring.

7. The process of Claim 1 wherein the supported phosphine compound is of Formula 2, and the phosphine compound is of Formula 9.

8. The process of Claim 7 wherein:
Z is selected from the group consisting of optionally-substituted carbon chain of 1-10 carbon atoms, -(NR₄)-, and -0-;
A is selected from the group consisting of an optionally-substituted carbon chain of 1-3 carbon atoms and an optionally-substituted carbon ring of 6-12 carbon atoms;
R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
any of R₅, R₆, and R₇ can optionally together with any other of R₅, R₆, and R₇ form a ring.

9. The process of Claim 1 wherein the supported phosphine compound is of Formula 4, and the phosphine compound is of Formula 10.

10. The process of Claim 9 wherein:
Z is selected from the group consisting of optionally-substituted carbon chain of 1-10 carbon atoms, -(NR₄)-, and -0-;
A is selected from the group consisting of an optionally-substituted carbon chain of 1-3 carbon atoms and an optionally-substituted carbon ring of 6-12 carbon atoms;
R₅, R₆, and R₇ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
any substituent of the group R₅, R₆, and R₇ can optionally together with any other substituent of the group R₅, R₆, and R₇ form a ring.

11. The process of Claim 1 wherein the supported phosphine compound is selected from the group consisting of Formulae 3 and 5, and the phosphine compound is of Formula 11.

12. The process of Claim 11 wherein:
Z is selected from the group consisting of optionally-substituted carbon chain of 1-10 carbon atoms, -(NR₄)-, and -0-;
A is selected from the group consisting of an optionally-substituted carbon chain of 1-3 carbon atoms and an optionally-substituted carbon ring of 6-12 carbon atoms;
R₆, R₇, and R₈ are independently selected from the group consisting of Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
any substituent of the group R₆, R₇, and R₈ can optionally together with any other substituent of the group R₆, R₇, and R₈ form a ring.

13. The process of Claim 1 wherein the supported phosphine compound is of Formula 2, and the phosphine compound is of Formula 12.

14. The process of Claim 13 wherein:
Z is selected from the group consisting of optionally-substituted carbon chain of 1-10 carbon atoms, -(NR₄)-, and -O-;
A is selected from the group consisting of an optionally-substituted carbon chain of 1-3 carbon atoms and an optionally-substituted carbon ring of 6-12 carbon atoms;
R₅ and R₆ are independently selected from the group consisting of hydrogen, Cl, alkyl, alkenyl, aryl, heterocycle, SQ₁, OQ₂, and PQ₃Q₄, where Q₁, Q₂, Q₃, and Q₄ are independently selected from the group consisting of hydrogen, hydrocarbyl, substituted hydrocarbyl, hydrocarbylamino, alkoxy, aryloxy, and heterocycle; and
any of R₅ and R₆ can optionally together with any other of R₅ and R₆ form a ring.
